# EUROPEAN PATENT APPLICATION

(11) **EP 4 207 852 A1**
(43) Date of publication of application: **05.07.2023**
(21) Application number: 21868480.1
(22) Date of filing: 06.09.2021
(51) Int. Cl.: H04W 16/14, H04W 28/16, H04W 84/12

(54) **COOPERATIVE TRANSMISSION METHOD AND APPARATUS FOR WIRELESS LOCAL AREA NETWORK**

(30) Priority: 18.09.2020 CN 202010986741
(71) Applicant: Huawei Technologies Co., Ltd., Shenzhen, Guangdong 518129 (CN)
(72) Inventor: SHEN, Xiaoman, Shenzhen, Guangdong 518129 (CN); WANG, Yungui, Shenzhen, Guangdong 518129 (CN); DING, Baokun, Shenzhen, Guangdong 518129 (CN); GAN, Ming, Shenzhen, Guangdong 518129 (CN); LI, Yunbo, Shenzhen, Guangdong 518129 (CN)
(74) Representative: Pfenning, Meinig & Partner mbB
(86) International application number: PCT/CN2021/116682
(87) International publication number: WO 2022/057655

(57) **Abstract**

A coordinated transmission method for a wireless local area network and an apparatus are disclosed. The method includes: A sharing access point (AP) sends a first frame to a first station (STA) on a channel when a condition is met, to detect an interference resource unit, where the condition includes that the sharing AP is to perform downlink transmission on the channel, the channel is a channel on which the sharing AP and a first shared AP perform coordinated transmission, and the condition may further include that the shared AP is to perform uplink transmission on the channel. The sharing AP is a serving AP of a first STA. The first frame indicates the first STA to use a first resource unit when replying to the first frame. The interference resource unit is the first resource unit on which the reply from the first STA is not received. The sharing AP does not perform downlink transmission on a sub-channel on which the interference resource unit is located, or the sharing AP indicates the shared AP not to trigger uplink transmission on the sub-channel on which the interference resource unit is located.

## Description

### CROSS-REFERENCE TO RELATED APPLICATIONS

This application claims priority to Chinese Patent Application No. 202010986741.7, filed with the China National Intellectual Property Administration on September 18, 2020 and entitled "COORDINATED TRANSMISSION METHOD FOR WIRELESS LOCAL AREA NETWORK AND APPARATUS", which is incorporated herein by reference in its entirety.

### TECHNICAL FIELD

This application relates to the field of communication technologies, and in particular, to a coordinated transmission method for a wireless local area network and an apparatus.

### BACKGROUND

Data traffic rapidly grows with development of the mobile Internet and popularization of smart terminals. A wireless local area network (wireless local area network, WLAN) with advantages of a high rate and low costs has become one of mainstream mobile broadband access technologies. With continuous increase of user equipment and continuous development of requirements for Internet of Things (Internet of things, IoT), a high-dense deployment scenario (high-dense deployment scenario) becomes one of core scenarios of a wireless network. High-dense deployment refers to the deployment of a large quantity of wireless access points (access points, APs) and a large quantity of active stations (stations, STAs) in a limited geographical coverage area. High-dense deployment sharply increases requirements for transmission resources.

Currently, a WLAN standard that is being standardized is revised: The IEEE 802.11be draft proposes a solution of multi-AP coordinated transmission, which allows a plurality of APs to share transmission resources, to improve utilization of the transmission resources and improve a system throughput. In a process of multi-AP coordinated transmission, there are a plurality of concurrent transmission links, and interference exists between the concurrent transmission links. If the interference is uncontrollable, multi-AP coordinated transmission cannot be implemented, and the system throughput is suppressed. However, during hybrid uplink-downlink transmission, because interference between STAs is undetectable, the interference may be uncontrollable. As a result, concurrent transmission cannot be implemented.

Therefore, the scheduling solution of multi-AP coordinated transmission needs to be further improved.

### SUMMARY

According to a first aspect, a coordinated transmission method for a wireless local area network is provided. The method includes the following steps. A sharing access point AP sends a first frame to a first station STA on a channel when a condition is met, to detect an interference resource unit RU, where the sharing AP is a serving AP of the first STA, the first STA is a STA to which the sharing AP is to send downlink data, a STA served by the sharing AP is referred to as a sharing STA, the first frame includes an indication of using a first RU when the first STA replies to the first frame, the interference RU is the first RU on which the reply from the first STA is not received, the condition includes that the sharing AP is to perform downlink transmission on the channel, and the channel is a channel on which the sharing AP and a first shared AP perform coordinated transmission. According to the method, the sharing AP may obtain a detection result of the interference RU, that is, the sharing AP may learn whether the first RU is an interference RU. The detection result of the interference RU may be used for interference control, so that interference in multi-AP coordinated transmission can be effectively controlled.

In a possible design, the condition further includes that the first shared AP is to perform uplink transmission on the channel.

The sharing AP may further negotiate a coordinated transmission direction with the shared AP. Optionally, the negotiation may be performed in the following two manners.

Fixed mode: The sharing AP specifies a transmission direction of the shared AP during coordinated transmission. The sharing AP sends a coordinated transmission announcement C-SR-A frame to the first shared AP, where the C-SR-A frame is used to indicate that a transmission direction of the first shared AP during the coordinated transmission is uplink.

Flexible mode: The shared AP determines a transmission direction during the coordinated transmission. The sharing AP sends a coordinated transmission announcement C-SR-A frame to the first shared AP, where the C-SR-A frame is used to indicate a transmission direction selected by the first shared AP during the coordinated transmission; and the sharing AP receives a first response frame from the first shared AP, where the first response frame is used to indicate that the transmission direction selected by the first shared AP during the coordinated transmission is uplink.

In a possible design, the sharing AP sends an indication frame to the first shared AP in response to detecting the interference RU, where the indication frame is used to indicate that the first shared AP is not allowed to perform uplink transmission on a sub-channel on which the interference RU is located; and the sharing AP performs downlink transmission on the channel. The sharing AP sends the indication frame to the shared AP, to indicate that the shared AP is not allowed to perform uplink transmission on the sub-channel on which the interference RU is located, so that interference that may be caused when the sharing STA receives a downlink data frame on the sub-channel on which the interference RU is located can be avoided, and interference is controllable. After indicating the shared AP to prohibit performing uplink transmission on the sub-channel on which the interference RU is located, the sharing AP may perform downlink transmission on the entire channel without being interfered with uplink transmission performed by a shared STA. A STA served by the shared AP is referred to as a shared STA.

In a possible design, the sharing AP indicates the first shared AP to send a second frame to the second STA, where the second frame is used to indicate the second STA to return a second acknowledgment frame to the first shared AP after receiving the second frame, and the second STA is a STA to which the first shared AP is to perform uplink transmission on the first RU. A sending moment of the first frame is the same as a sending moment of the second frame, and a length of the first frame is greater than a sum of a length of the second frame and a length of a short interframe space SIFS. In this way, when the first frame and the second frame are simultaneously sent, and the second STA starts to reply to the second acknowledgment frame, the first frame is not completely sent. In this case, a second acknowledgment frame that is transmitted in an uplink direction and that is returned by the second STA to the shared AP may exist on the first RU. On the first RU, there is an intersection in time domain and frequency domain between the second acknowledgment frame in the uplink direction and the first frame in a downlink direction. In this case, the sharing AP may determine, based on whether a reply from the first STA to the first frame is received, whether the first RU is an interference RU.

In a possible design, the sharing AP further performs coordinated transmission on the transmission resource with a second shared AP. When the transmission direction of the first shared AP during the coordinated transmission is uplink, and a transmission direction of the second shared AP during the coordinated transmission is downlink, the sharing AP indicates the second shared AP to send a third frame to the third STA, where the second shared AP is a serving AP of the third STA, the third STA is a STA to which the second shared AP is to send downlink data on a second RU, and the third frame is used to indicate the third STA to return a third acknowledgment frame to the second shared AP on the second RU after receiving the third frame. The sending moment of the second frame is the same as a sending moment of the third frame, and a length of the third frame is greater than the sum of the length of the second frame and the length of the short interframe space SIFS. In this way, when the second frame and the third frame are simultaneously sent, and the second STA starts to reply to the second acknowledgment frame, the third frame is not completely sent. In this case, a second acknowledgment frame that is transmitted in an uplink direction and that is returned by the second STA to the shared AP may exist on the second RU. On the second RU, there is an intersection in time domain and frequency domain between the second acknowledgment frame in the uplink direction and the third frame in a downlink direction. In this case, the second shared AP may determine, based on whether a reply from the third STA to the third frame is received, whether the second RU is an interference RU. In this way, interference from downlink transmission performed by the first shared AP to uplink transmission performed by the second shared AP can be further avoided, thereby implementing multi-AP coordinated transmission.

In a possible design, the sharing AP prohibits downlink transmission on a sub-channel on which the interference RU is located. After the sharing AP prohibits downlink transmission on the sub-channel on which the interference RU is located, the first shared AP may perform uplink transmission on the entire channel without being interfered with downlink transmission performed by the sharing AP.

In a possible design, the sharing AP receives an uplink trigger frame from the first shared AP, where the uplink trigger frame is used to trigger a second STA served by the shared AP to perform uplink transmission; and the sending a first frame to a first STA includes: sending the first frame to the first STA in response to the uplink trigger frame. The sharing AP sends the first frame to the first STA after receiving the uplink trigger frame from the shared AP, so that it can be ensured that there is an intersection in time domain and frequency domain when the first STA receives the first frame in the downlink direction on the first RU, and the second STA sends an uplink data frame to the shared AP on the first RU. In this way, the uplink data frame sent by the second STA may cause interference to the first frame, and the sharing AP may determine, based on whether a reply from the first STA to the first frame is received, whether the first RU is an interference RU.

In a possible design, a sending moment of the first frame is the same as a sending moment of an uplink trigger frame sent by the first shared AP, a length of the first frame is greater than a sum of a length of the uplink trigger frame and a length of an SIFS, and the uplink trigger frame is used to trigger a second STA served by the first shared AP to perform uplink transmission. In this way, when the first frame and the uplink trigger frame are simultaneously sent, and the second STA receives the uplink trigger frame, the first frame is not completely sent. In this case, there is a frame transmitted in an uplink direction on the first RU. On the first RU, there is an intersection in time domain and frequency domain between an uplink frame sent by the second STA and a first frame in a downlink direction of the sharing AP, and the uplink frame sent by the second STA may cause interference to the first frame in the downlink direction. In this case, the sharing AP may determine whether the first RU is an interference RU based on whether a reply from the first STA to the first frame is received.

In a possible design, the first frame is a short data frame.

In a possible design, the first frame is a control frame, and a modulation and coding scheme MCS order and a quantity of streams of the first frame are the same as an MCS order and a quantity of streams of the data frame. In other words, the modulation and coding scheme MCS order of the first frame is the same as the MCS order of the data frame, and the quantity of streams of the first frame is the same as the quantity of streams of the data frame. In this way, a result of interference detection performed according to the interference detection frame can better reflect a result of interference to the data frame.

In a possible design, a manner of the coordinated transmission is coordinated spatial reuse CSR.

In a possible design, the channel includes one or more sub-channels.

According to a second aspect, a coordinated transmission method for a wireless local area network is provided. The method includes the following steps. A shared access point AP sends a first frame to a second STA on a channel when a condition is met, to detect an interference resource unit RU, where the shared AP is a serving AP of the second STA, the first frame includes an indication of using a first RU when the second STA replies to the first frame, the interference RU is the first RU on which a reply from the second STA is not received, the condition includes that the shared AP is to perform downlink transmission on the channel, and the channel is a channel on which the shared AP and a sharing AP perform coordinated transmission. The shared AP prohibits downlink transmission on a sub-channel on which the interference RU is located. According to the method, the shared AP may obtain a detection result of the interference RU, that is, the shared AP may learn whether the first RU is an interference RU. The detection result of the interference RU may be used for interference control, so that interference in multi-AP coordinated transmission can be effectively controlled. The shared AP prohibits downlink transmission on the sub-channel on which the interference RU is located, so that interference that may be caused when a first STA sends an uplink data frame on the sub-channel on which the interference RU is located can be avoided, and interference is controllable. The sharing AP is a serving AP of the first STA.

In a possible design, the condition further includes that the sharing AP is to perform uplink transmission on the channel.

In a possible design, the shared AP receives an uplink trigger frame from the sharing AP, where the uplink trigger frame is used to trigger the first STA to perform uplink transmission; and the sending a first frame to a second STA includes: sending a first trigger frame to the second STA in response to the uplink trigger frame. The shared AP sends the first frame to the second STA after receiving the uplink trigger frame from the sharing AP, so that it can be ensured that there is an intersection in time domain and frequency domain when the second STA receives the first frame in the downlink direction on the first RU, and the first STA sends an uplink data frame to the sharing AP on the first RU. In this way, the uplink data frame sent by the first STA may cause interference to the first frame, and the shared AP may determine, based on whether a reply from the second STA to the first frame is received, whether the first RU is an interference RU.

In a possible design, a sending moment of the first frame is the same as a sending moment of an uplink trigger frame sent by the sharing AP, a length of the first frame is greater than a sum of a length of the uplink trigger frame and a length of a short interframe space SIFS, and the uplink trigger frame is used to trigger a STA served by the sharing AP to perform uplink transmission. In this way, when the first frame and the uplink trigger frame are simultaneously sent, and the first STA receives the uplink trigger frame, the first frame is not completely sent. In this case, there is a frame transmitted in an uplink direction on the first RU. On the first RU, there is an intersection in time domain and frequency domain between an uplink frame sent by the first STA and a first frame in a downlink direction of the shared AP, and the uplink frame sent by the first STA may cause interference to the first frame in the downlink direction. In this case, the shared AP may determine whether the first RU is an interference RU based on whether a reply from the second STA to the first frame is received.

The sharing AP may further negotiate a coordinated transmission direction with the shared AP. Optionally, the negotiation may be performed in the following two manners.

Fixed mode: The shared AP receives a coordinated transmission announcement C-SR-A frame from the sharing AP, where the C-SR-A frame is used to indicate that a transmission direction of the shared AP during the coordinated transmission is downlink.

Flexible mode: The shared AP receives a coordinated transmission announcement C-SR-A frame from the sharing AP, where the C-SR-A frame is used to indicate a transmission direction selected by the shared AP during the coordinated transmission; and the shared AP sends a response frame to the sharing AP, where the response frame is used to indicate that the transmission direction selected by the shared AP during the coordinated transmission is downlink.

In a possible design, the first frame is a short data frame.

In a possible design, the first frame is a control frame, and a modulation and coding scheme MCS order and a quantity of streams of the first frame are the same as an MCS order and a quantity of streams of the data frame. In this way, a result of interference detection performed according to the interference detection frame can better reflect a result of interference to the data frame.

In a possible design, a manner of the coordinated transmission is coordinated spatial reuse CSR.

In a possible design, the channel includes one or more sub-channels.

According to a third aspect, a coordinated transmission method for a wireless local area network is provided. The method includes the following steps. A shared access point AP sends a first frame to a first station STA on a channel when a condition is met, to detect an interference resource unit RU, where the shared AP is a serving AP of the first STA, the first frame includes an indication of using a first RU when the first STA replies to the first frame, the interference RU is the first RU on which the reply from the first STA is not received, the condition includes that the shared AP is to perform uplink transmission on the channel, and the channel is a channel on which the shared AP and a sharing AP perform coordinated transmission. According to the method, the shared AP may obtain a detection result of the interference RU, that is, the shared AP may learn whether the first RU is an interference RU. The detection result of the interference RU may be used for interference control, so that interference in multi-AP coordinated transmission can be effectively controlled.

In a possible design, the condition further includes that the sharing AP is to perform downlink transmission on the channel.

The sharing AP may further negotiate a coordinated transmission direction with the shared AP. Optionally, the negotiation may be performed in the following two manners.

Fixed mode: The shared AP receives a coordinated transmission announcement C-SR-A frame from the sharing AP, where the C-SR-A frame is used to indicate that a transmission direction of the shared AP during the coordinated transmission is downlink.

Flexible mode: The shared AP receives a coordinated transmission announcement C-SR-A frame from the sharing AP, where the C-SR-A frame is used to indicate a transmission direction selected by the shared AP during the coordinated transmission; and the shared AP sends a first response frame to the sharing AP, where the first response frame is used to indicate that the transmission direction selected by the shared AP during the coordinated transmission is uplink.

In a possible design, the shared AP skips performing uplink transmission on the sub-channel on which the interference RU is located. The shared AP prohibits downlink transmission on the sub-channel on which the interference resource unit is located, so that interference that may be caused when a sharing STA sends an uplink data frame on the sub-channel on which the interference RU is located can be avoided, and interference is controllable.

In a possible design, a sending moment of the first frame is the same as a sending moment of a second frame sent by the sharing AP to the second STA, and a length of the second frame is greater than a sum of a length of the first frame and a length of a short interframe space SIFS.

In a possible design, the first frame is a short data frame.

In a possible design, the first frame is a control frame, and a modulation and coding scheme MCS order and a quantity of streams of the first frame are the same as an MCS order and a quantity of streams of the data frame. In this way, a result of interference detection performed according to the interference detection frame can better reflect a result of interference to the data frame.

In a possible design, a manner of the coordinated transmission is coordinated spatial reuse CSR.

In a possible design, the channel includes one or more sub-channels.

According to a fourth aspect, a coordinated transmission method for a wireless local area network is provided. The method includes the following steps. A shared AP sends a first frame to a shared STA on a channel when a condition is met, where the channel is a channel on which a sharing AP and the shared AP perform coordinated transmission, the condition includes that a transmission direction of the sharing AP during the coordinated transmission is downlink, the first frame is used to indicate the shared STA to listen to a first resource unit RU, the shared AP is a serving AP of the shared STA, a sending moment of the first frame is the same as a sending moment of a second frame sent by the sharing AP to a sharing STA, a length of the second frame is greater than a sum of a length of the first frame and a length of an SIFS, and the second frame includes an indication of using the first RU when the sharing STA replies to the second frame; and the shared AP prohibits triggering uplink transmission on a sub-channel on which the first RU is located when not receiving a response frame returned by the shared STA, where the response frame is used to indicate that the first RU is not occupied. According to the method, the shared AP may obtain a detection result of the interference RU, that is, the shared AP may learn whether the first RU is an interference RU. The detection result of the interference RU may be used for interference control, so that interference in multi-AP coordinated transmission can be effectively controlled.

In a possible design, the first frame is further used to indicate a duration for which the shared STA listens to the first RU, and indicates the shared STA to return the response frame within the duration if the first RU is not occupied.

In a possible design, the condition further includes that the transmission direction of the sharing AP during the coordinated transmission is downlink.

The sharing AP may further negotiate a coordinated transmission direction with the shared AP. Optionally, the negotiation may be performed in the following two manners.

Fixed mode: The shared AP receives a coordinated transmission announcement C-SR-A frame from the sharing AP, where the C-SR-A frame is used to indicate that a transmission direction of the shared AP during the coordinated transmission is uplink.

Flexible mode: The shared AP receives a coordinated transmission announcement C-SR-A frame from the sharing AP, where the C-SR-A frame is used to indicate a transmission direction selected by the shared AP during the coordinated transmission; and the shared AP sends a first response frame to the sharing AP, where the first response frame is used to indicate that the transmission direction selected by the shared AP during the coordinated transmission is uplink.

In a possible design, a sending moment of the first frame is the same as a sending moment of a second frame sent by the sharing AP to the second STA, and a length of the second frame is greater than a sum of a length of the first frame and a length of a short interframe space SIFS. Because a sending moment of the first frame is the same as a sending moment of the second frame, and a length of the first frame is greater than a sum of a length of the second frame and a length of the SIFS, the second STA listens to the first RU after receiving the second frame and after an STS. When the second STA listens to the first RU, the first frame is not completely sent. In this case, if the second STA detects that the first RU is occupied, it indicates that sending an uplink frame on the first RU by the second STA can cause interference to receiving a downlink frame of the sharing AP by the first STA. When the second STA detects that the first RU is not occupied or the first RU is idle, the second STA returns a response frame to the shared AP.

In a possible design, the first frame is a short data frame.

In a possible design, the first frame is a control frame, and a modulation and coding scheme MCS order and a quantity of streams of the first frame are the same as an MCS order and a quantity of streams of the data frame. In this way, a result of interference detection performed according to the interference detection frame can better reflect a result of interference to the data frame.

In a possible design, a manner of the coordinated transmission is coordinated spatial reuse CSR.

In a possible design, the channel includes one or more sub-channels.

According to a fifth aspect, a communication apparatus is provided. The communication apparatus may be a sharing access point AP, or may be an apparatus (for example, a chip, a chip system, or a circuit) in the sharing AP, or an apparatus that can be used together with the sharing AP. In a design, the communication apparatus may include modules for performing the method/operations/steps/actions described in the first aspect. The modules may be hardware circuits, may be software, or may be implemented by using a combination of a hardware circuit and software. In a design, the communication apparatus may include a processing module and a communication module. The processing module is configured to invoke the communication module to perform a receiving and/or sending function. For example:
the processing module is configured to: send, through the communication module, a first frame to a first station STA on a channel when determining that a condition is met, to detect an interference resource unit RU, where the sharing AP is a serving AP of the first STA, the first frame includes an indication of using a first RU when the first STA replies to the first frame, the interference resource unit is the first RU on which the reply from the first STA is not received, the condition includes that the sharing AP is to perform downlink transmission on the channel, and the channel is a channel on which the sharing AP and a first shared AP perform coordinated transmission.

In a possible design, the condition further includes that the first shared AP is to perform uplink transmission on the channel.

In a possible design, the processing module is further configured to: send, through the communication module, a coordinated transmission announcement C-SR-A frame to the first shared AP, where the C-SR-A frame is used to indicate that a transmission direction of the first shared AP during the coordinated transmission is uplink.

In a possible design, the processing module is further configured to: send, through the communication module, a coordinated transmission announcement C-SR-A frame to the first shared AP, where the C-SR-A frame is used to indicate a transmission direction selected by the first shared AP during the coordinated transmission; and receive a first response frame from the first shared AP, where the first response frame is used to indicate that the transmission direction selected by the first shared AP during the coordinated transmission is uplink.

In a possible design, the processing module is further configured to: send, through the communication module, an indication frame to the first shared AP in response to detecting the interference RU, where the indication frame is used to indicate that the first shared AP is not allowed to perform uplink transmission on a sub-channel on which the interference RU is located; and perform downlink transmission on the channel.

In a possible design, the processing module is further configured to: indicate the first shared AP to send a second frame to the second STA, where the second frame is used to indicate the second STA to return a second acknowledgment frame to the first shared AP after receiving the second frame, and the second STA is a STA to which the first shared AP is to perform uplink transmission on the first RU. A sending moment of the first frame is the same as a sending moment of the second frame, and a length of the first frame is greater than a sum of a length of the second frame and a length of a short interframe space SIFS.

In a possible design, the sharing AP and a second shared AP further perform coordinated transmission on the transmission resource, the second shared AP is a serving AP of a third STA, and the processing module is further configured to: when the transmission direction of the first shared AP during the coordinated transmission is uplink, and a transmission direction of the second shared AP during the coordinated transmission is downlink, indicate the second shared AP to send a third frame to the third STA, where the third frame is used to indicate the third STA to return a third acknowledgment frame to the second shared AP after receiving the third frame; and receive, through the communication module, a second response frame from the second shared AP, where the second response frame is used to indicate that the second RU is an interference unit.

In a possible design, the processing module is further configured to prohibit downlink transmission on a sub-channel on which the interference RU is located.

In a possible design, the processing module is further configured to: receive, through the communication module, an uplink trigger frame from the first shared AP, where the uplink trigger frame is used to trigger a STA served by the shared AP to perform uplink transmission; and send the first frame to the first STA in response to the uplink trigger frame.

In a possible design, a sending moment of the first frame is the same as a sending moment of an uplink trigger frame sent by the first shared AP, a length of the first frame is greater than a sum of a length of the uplink trigger frame and a length of an SIFS, and the uplink trigger frame is used to trigger a STA served by the first shared AP to perform uplink transmission.

For beneficial effects of the fifth aspect, refer to corresponding effects of the first aspect. Details are not described herein again.

According to a sixth aspect, a communication apparatus is provided. The communication apparatus may be a shared access point AP, or may be an apparatus (for example, a chip, a chip system, or a circuit) in the shared AP, or an apparatus that can be used together with the shared AP. In a design, the communication apparatus may include modules for performing the method/operations/steps/actions described in the second aspect. The modules may be hardware circuits, may be software, or may be implemented by using a combination of a hardware circuit and software. In a design, the communication apparatus may include a processing module and a communication module. The processing module is configured to invoke the communication module to perform a receiving and/or sending function. For example, the processing module is configured to: send, through the communication module, a first frame to a shared STA on a channel when a condition is met, to detect an interference resource unit RU, where the shared AP is a serving AP of the shared STA, the first frame includes an indication of using a first RU when the shared STA replies to the first frame, the interference RU is the first RU on which a reply from the shared STA is not received, the condition includes that the shared AP is to perform downlink transmission on the channel, and the channel is a channel on which the shared AP and a sharing AP perform coordinated transmission; and the processing module is further configured to prohibit downlink transmission on a sub-channel on which the interference RU is located.

In a possible design, the condition further includes that the sharing AP is to perform uplink transmission on the channel.

In a possible design, the processing module is further configured to: receive, through the communication module, an uplink trigger frame from the sharing AP, where the uplink trigger frame is used to trigger a STA served by the sharing AP to perform uplink transmission; and when a first trigger frame is sent to a second STA, the processing module is configured to send, through the communication module, the first trigger frame to the shared STA in response to the uplink trigger frame.

In a possible design, a sending moment of the first frame is the same as a sending moment of an uplink trigger frame sent by the sharing AP, a length of the first frame is greater than a sum of a length of the uplink trigger frame and a length of a short interframe space SIFS, and the uplink trigger frame is used to trigger a STA served by the sharing AP to perform uplink transmission.

In a possible design, the processing module is further configured to: receive, through the communication module, a coordinated transmission announcement C-SR-A frame from the sharing AP, where the C-SR-A frame is used to indicate that a transmission direction of the shared AP during the coordinated transmission is downlink.

In a possible design, the processing module is further configured to: receive, through the communication module, a coordinated transmission announcement C-SR-A frame from the sharing AP, where the C-SR-A frame is used to indicate a transmission direction selected by the shared AP during the coordinated transmission; and send a response frame to the sharing AP, where the response frame is used to indicate that the transmission direction selected by the shared AP during the coordinated transmission is downlink.

In a possible design, the first frame is a short data frame.

In a possible design, the first frame is a control frame, and a modulation and coding scheme MCS order and a quantity of streams of the first frame are the same as an MCS order and a quantity of streams of the data frame.

In a possible design, a manner of the coordinated transmission is coordinated spatial reuse CSR.

In a possible design, the channel includes one or more sub-channels.

For beneficial effects of the sixth aspect, refer to corresponding effects of the second aspect. Details are not described herein again.

According to a seventh aspect, a communication apparatus is provided. The communication apparatus may be a shared access point AP, or may be an apparatus (for example, a chip, a chip system, or a circuit) in the shared AP, or an apparatus that can be used together with the shared AP. In a design, the communication apparatus may include modules for performing the method/operations/steps/actions described in the third aspect. The modules may be hardware circuits, may be software, or may be implemented by using a combination of a hardware circuit and software. In a design, the communication apparatus may include a processing module and a communication module. The processing module is configured to invoke the communication module to perform a receiving and/or sending function. For example, the processing module is configured to: send, through the communication module, a first frame to a first station STA on a channel when a condition is met, to detect an interference resource unit RU, where the shared AP is a serving AP of the first STA, the first frame includes an indication of using a first RU when the first STA replies to the first frame, the interference RU is the first RU on which the reply from the first STA is not received, the condition includes that the shared AP is to perform uplink transmission on the channel, and the channel is a channel on which the shared AP and a sharing AP perform coordinated transmission.

In a possible design, the condition further includes that the sharing AP is to perform downlink transmission on the channel.

In a possible design, the processing module is further configured to: receive, through the communication module, a coordinated transmission announcement C-SR-A frame from the sharing AP, where the C-SR-A frame is used to indicate that a transmission direction of the shared AP during the coordinated transmission is downlink.

In a possible design, the processing module is further configured to: receive, through the communication module, a coordinated transmission announcement C-SR-A frame from the sharing AP, where the C-SR-A frame is used to indicate a transmission direction selected by the shared AP during the coordinated transmission; and send a first response frame to the sharing AP, where the first response frame is used to indicate that the transmission direction selected by the shared AP during the coordinated transmission is uplink.

In a possible design, the processing module is further configured to skip performing uplink transmission on a sub-channel on which the interference RU is located.

In a possible design, a sending moment of the first frame is the same as a sending moment of a second frame sent by the sharing AP to the second STA, and a length of the second frame is greater than a sum of a length of the first frame and a length of a short interframe space SIFS.

In a possible design, the first frame is a short data frame.

In a possible design, the first frame is a control frame, and a modulation and coding scheme MCS order and a quantity of streams of the first frame are the same as an MCS order and a quantity of streams of the data frame.

In a possible design, a manner of the coordinated transmission is coordinated spatial reuse CSR.

In a possible design, the channel includes one or more sub-channels.

For beneficial effects of the seventh aspect, refer to corresponding effects of the third aspect. Details are not described herein again.

According to an eighth aspect, a communication apparatus is provided. The communication apparatus may be a shared access point AP, or may be an apparatus (for example, a chip, a chip system, or a circuit) in the shared AP, or an apparatus that can be used together with the shared AP. In a design, the communication apparatus may include modules for performing the method/operations/steps/actions described in the fourth aspect. The modules may be hardware circuits, may be software, or may be implemented by using a combination of a hardware circuit and software. In a design, the communication apparatus may include a processing module and a communication module. The processing module is configured to invoke the communication module to perform a receiving and/or sending function. For example, the processing module is configured to send, through the communication module, a first frame to a shared STA on a channel when a condition is met, where the channel is a channel on which a sharing AP and the shared AP perform coordinated transmission, the condition includes that a transmission direction of the sharing AP during the coordinated transmission is downlink, the first frame is used to indicate the shared STA to listen to a first resource unit RU, the shared AP is a serving AP of the shared STA, a sending moment of the first frame is the same as a sending moment of a second frame sent by the sharing AP to a sharing STA, a length of the second frame is greater than a sum of a length of the first frame and a length of an SIFS, and the second frame includes an indication of using the first RU when the sharing STA replies to the second frame; and the processing module is further configured to: prohibit triggering uplink transmission on a sub-channel on which the first resource unit is located when not receiving a response frame returned by the shared STA, where the response frame is used to indicate that the first RU is not occupied.

In a possible design, the first frame is further used to indicate a duration for which the shared STA listens to the first RU, and indicates the shared STA to return the response frame within the duration if the first resource unit is not occupied.

In a possible design, the condition further includes that the transmission direction of the sharing AP during the coordinated transmission is downlink.

In a possible design, the processing module is further configured to: receive, through the communication module, a coordinated transmission announcement C-SR-A frame from the sharing AP, where the C-SR-A frame is used to indicate that a transmission direction of the shared AP during the coordinated transmission is uplink.

In a possible design, the processing module is further configured to: receive, through the communication module, a coordinated transmission announcement C-SR-A frame from the sharing AP, where the C-SR-A frame is used to indicate a transmission direction selected by the shared AP during the coordinated transmission; and send a first response frame to the sharing AP, where the first response frame is used to indicate that the transmission direction selected by the shared AP during the coordinated transmission is uplink.

In a possible design, a sending moment of the first frame is the same as a sending moment of a second frame sent by the sharing AP to the second STA, and a length of the second frame is greater than a sum of a length of the first frame and a length of a short interframe space SIFS.

In a possible design, the first frame is a short data frame.

In a possible design, the first frame is a control frame, and a modulation and coding scheme MCS order and a quantity of streams of the first frame are the same as an MCS order and a quantity of streams of the data frame.

In a possible design, a manner of the coordinated transmission is coordinated spatial reuse CSR.

In a possible design, the channel includes one or more sub-channels.

For beneficial effects of the eighth aspect, refer to corresponding effects of the fourth aspect. Details are not described herein again.

According to a ninth aspect, embodiments of this application provide a communication apparatus. The communication apparatus includes a communication interface and a processor. The communication interface is used by the apparatus to communicate with another device, for example, to send and receive data or signals. For example, the communication interface may be a transceiver, a circuit, a bus, a module, or a communication interface of another type. The processor is configured to invoke a group of programs, instructions, or data to perform the method described in the first aspect. The apparatus may further include a memory, configured to store the programs, the instructions, or the data invoked by the processor. The memory is coupled to the processor. When executing the instructions or the data stored in the memory, the processor can implement the method described in the first aspect.

According to a tenth aspect, embodiments of this application provide a communication apparatus. The communication apparatus includes a communication interface and a processor. The communication interface is used by the apparatus to communicate with another device, for example, to send and receive data or signals. For example, the communication interface may be a transceiver, a circuit, a bus, a module, or a communication interface of another type. The processor is configured to invoke a group of programs, instructions, or data to perform the method described in the first aspect. The apparatus may further include a memory, configured to store the programs, the instructions, or the data invoked by the processor. The memory is coupled to the processor. When executing the instructions or the data stored in the memory, the processor can implement the method described in the second aspect.

According to an eleventh aspect, embodiments of this application provide a communication apparatus. The communication apparatus includes a communication interface and a processor. The communication interface is used by the apparatus to communicate with another device, for example, to send and receive data or signals. For example, the communication interface may be a transceiver, a circuit, a bus, a module, or a communication interface of another type. The processor is configured to invoke a group of programs, instructions, or data to perform the method described in the first aspect. The apparatus may further include a memory, configured to store the programs, the instructions, or the data invoked by the processor. The memory is coupled to the processor. When executing the instructions or the data stored in the memory, the processor can implement the method described in the third aspect.

According to a twelfth aspect, embodiments of this application provide a communication apparatus. The communication apparatus includes a communication interface and a processor. The communication interface is used by the apparatus to communicate with another device, for example, to send and receive data or signals. For example, the communication interface may be a transceiver, a circuit, a bus, a module, or a communication interface of another type. The processor is configured to invoke a group of programs, instructions, or data to perform the method described in the first aspect. The apparatus may further include a memory, configured to store the programs, the instructions, or the data invoked by the processor. The memory is coupled to the processor. When executing the instructions or the data stored in the memory, the processor can implement the method described in the fourth aspect.

According to a thirteenth aspect, embodiments of this application further provide a computer-readable storage medium. The computer-readable storage medium stores computer-readable instructions. When the computer-readable instructions run on a computer, the computer is enabled to perform the method according to the first aspect or the possible designs of the first aspect.

According to a tenth aspect, embodiments of this application further provide a computer-readable storage medium including instructions. When the instructions run on a computer, the computer is enabled to perform the method according to any one of the second aspect or the possible designs of the second aspect.

According to a fifteenth aspect, embodiments of this application further provide a computer-readable storage medium including instructions. When the instructions run on a computer, the computer is enabled to perform the method according to any one of the third aspect or the possible designs of the third aspect.

According to a sixteenth aspect, embodiments of this application further provide a computer-readable storage medium including instructions. When the instructions run on a computer, the computer is enabled to perform the method according to any one of the fourth aspect or the possible designs of the fourth aspect.

According to a seventeenth aspect, embodiments of this application provide a chip system. The chip system includes a processor and may further include a memory, and is configured to implement the method according to any one of the first aspect or the possible designs of the first aspect. The chip system may include a chip, or may include a chip and another discrete component.

According to an eighteenth aspect, embodiments of this application provide a chip system. The chip system includes a processor and may further include a memory, and is configured to implement the method according to any one of the second aspect or the possible designs of the second aspect. The chip system may include a chip, or may include a chip and another discrete component.

According to a nineteenth aspect, embodiments of this application provide a chip system. The chip system includes a processor and may further include a memory, and is configured to implement the method according to any one of the third aspect or the possible designs of the third aspect. The chip system may include a chip, or may include a chip and another discrete component.

According to a twentieth aspect, embodiments of this application provide a chip system. The chip system includes a processor and may further include a memory, and is configured to implement the method according to any one of the fourth aspect or the possible designs of the fourth aspect. The chip system may include a chip, or may include a chip and another discrete component.

According to a twenty-first aspect, a computer program product including instructions is provided. When the computer program product runs on a computer, the method according to any one of the foregoing aspects and the possible designs of the foregoing aspects is performed.

### BRIEF DESCRIPTION OF DRAWINGS

FIG. 1 is a schematic diagram 1 of an architecture of a WLAN system according to an embodiment of this application;
FIG. 2 is a schematic diagram 2 of an architecture of a WLAN system according to an embodiment of this application;
FIG. 3 is a schematic diagram of a scenario of a transmission direction of coordinated transmission between two APs according to an embodiment of this application;
FIG. 4 is a schematic diagram of division of a channel for multi-AP coordinated transmission according to an embodiment of this application;
FIG. 5 is a schematic flowchart 1 of a coordinated transmission method for a wireless local area network according to an embodiment of this application;
FIG. 6a is a schematic diagram 1 of frame interaction during coordinated transmission in a fixed mode in a scenario according to an embodiment of this application;
FIG. 6b is a schematic diagram 1 of frame interaction during coordinated transmission in a flexible mode in a scenario according to an embodiment of this application;
FIG. 7a is a schematic diagram 2 of frame interaction during coordinated transmission in a fixed mode in a scenario according to an embodiment of this application;
FIG. 7b is a schematic diagram 2 of frame interaction during coordinated transmission in a flexible mode in a scenario according to an embodiment of this application;
FIG. 8a is a schematic diagram 2 of frame interaction during coordinated transmission in a fixed mode in a scenario according to an embodiment of this application;
FIG. 8b is a schematic diagram 2 of frame interaction during coordinated transmission in a flexible mode in a scenario according to an embodiment of this application;
FIG. 9 is a schematic flowchart 2 of a coordinated transmission method for a wireless local area network according to an embodiment of this application;
FIG. 10a is a schematic diagram of frame interaction during coordinated transmission in a fixed mode in another scenario according to an embodiment of this application;
FIG. 10b is a schematic diagram of frame interaction during coordinated transmission in a flexible mode in another scenario according to an embodiment of this application;
FIG. 11 is a schematic flowchart 3 of a coordinated transmission method for a wireless local area network according to an embodiment of this application;
FIG. 12a is a schematic diagram of frame interaction during coordinated transmission in a fixed mode in still another scenario according to an embodiment of this application;
FIG. 12b is a schematic diagram of frame interaction during coordinated transmission in a flexible mode in still another scenario according to an embodiment of this application;
FIG. 13 is a schematic flowchart 4 of a coordinated transmission method for a wireless local area network according to an embodiment of this application;
FIG. 14a is a schematic diagram of frame interaction during coordinated transmission in a fixed mode in yet another scenario according to an embodiment of this application;
FIG. 14b is a schematic diagram of frame interaction during coordinated transmission in a flexible mode in yet another scenario according to an embodiment of this application;
FIG. 15 is a schematic flowchart 5 of a coordinated transmission method for a wireless local area network according to an embodiment of this application;
FIG. 16a is a schematic diagram of frame interaction during coordinated transmission in a fixed mode in still yet another scenario according to an embodiment of this application;
FIG. 16b is a schematic diagram of frame interaction during coordinated transmission in a flexible mode in still yet another scenario according to an embodiment of this application;
FIG. 17 is a schematic diagram 1 of a structure of a communication apparatus according to an embodiment of this application; and
FIG. 18 is a schematic diagram 2 of a structure of a communication apparatus according to an embodiment of this application.

### DESCRIPTION OF EMBODIMENTS

Embodiments of this application provide a coordinated transmission method for a wireless local area network and an apparatus, to improve performance and quality of coordinated transmission in the wireless local area network. The method and the apparatus are based on a same or similar technical concept. The method and the apparatus have similar principles for resolving the problems. Therefore, for implementation of the apparatus and the method, reference may be made to each other. Repeated content is not described herein again. In descriptions of embodiments of this application, the term "and/or" describes an association relationship between associated objects and represents that three relationships may exist. For example, A and/or B may represent the following three cases: Only A exists, both A and B exist, and only B exists. The term "a plurality of" involved in this application means two or more.

In addition, it should be understood that, in the description of this application, terms such as "first", "second", and "third" are merely used for distinguishing and description, but cannot be understood as an indication or implication of relative importance, or cannot be understood as an indication or implication of a sequence. Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" in different parts of this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The wireless local area network communication method provided in embodiments of this application may be applied to a 4^{th} generation (4^{th} generation, 4G) communication system, for example, long term evolution (long term evolution, LTE), or may be applied to a 5th generation (5th generation, 5G) communication system, for example, 5G new radio (new radio, NR), or may be applied to various future communication systems.

The coordinated transmission method for a wireless local area network provided in embodiments of this application may be applied to a WLAN system, and is applicable to an IEEE 802.11 system standard, for example, an IEEE 802.11 ax standard, an IEEE 802.11be standard draft, or a next-generation or a next-next-generation standard thereof.

Embodiments of this application are described in detail below with reference to the accompanying drawings.

A WLAN system 100 to which embodiments of this application are applicable may include a plurality of stations (stations, STAs). The plurality of STAs include APs, and further include non-AP STAs. In other words, the WLAN system 100 may include one or more APs and one or more non-AP STAs. In embodiments of this application, the non-AP STA may be briefly referred to as a STA. An AP may be associated with one or more STAs. The AP may schedule a transmission resource for the STA associated with the AP, and communicate with the scheduled STA on the scheduled transmission resource. The AP may be connected to a distributed system (distributed system, DS).

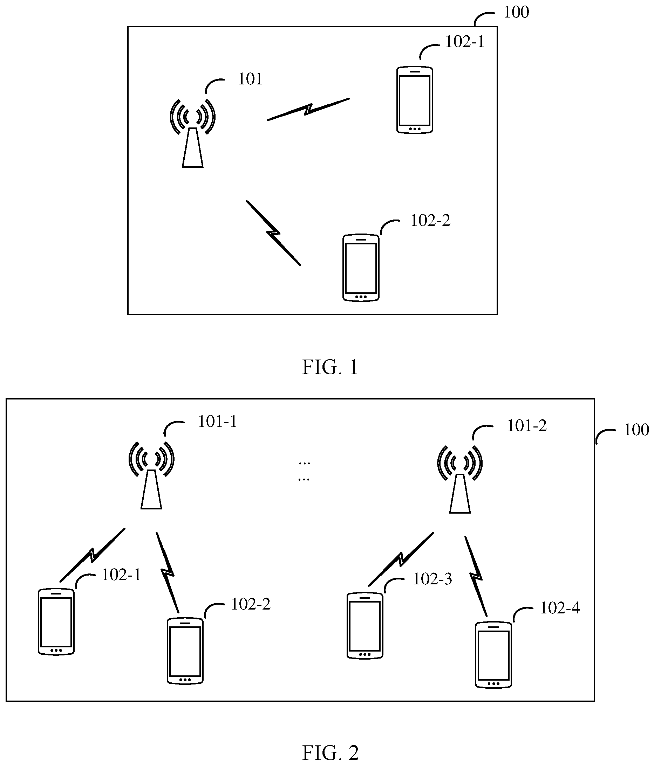

In FIG. 1, for example, the WLAN system 100 includes one AP101 and two STAs, where the two STAs are represented by STA102-1 and STA102-2. AP 101 is associated with STA102-1 and STA102-2. It may be understood that AP101 may schedule more or fewer STAs.

As shown in FIG. 2, the WLAN system 100 may include a plurality of APs. In FIG. 2, for example, there are two APs, and each AP is connected to two STAs. It may be understood that the WLAN system may further include more APs and more STAs.

In FIG. 2, the two APs are respectively represented by AP101-1 and AP101-2. AP101-1 is connected to two STAs, where the two STAs are represented by STA102-1 and STA102-2. AP101-2 is connected to two STAs, where the two STAs are represented by STA102-3 and STA102-4. AP101-1 may be associated with STA102-1 and STA102-2, and may provide a service for STA102-1 and STA102-2. AP101-1 is a serving AP of STA102-1 and STA102-2. AP101-2 is associated with STA102-3 and STA102-4, and may provide a service for STA102-3 and STA102-4. AP101-2 is a serving AP of STA102-3 and STA102-4.

The following describes concepts of an AP and a STA in the WLAN system in embodiments of this application.

The AP is an entity having a STA function, and may provide access to a distribution service for an associated STA through a wireless medium (wireless medium, WM). The AP may include a STA and a distribution system access function (distribution system access function, DSAF). The AP may also be referred to as a wireless access point, a bridge, or a hotspot. The AP may access a server or a communication network. The AP may be used as a center of the WLAN system. The AP may be a base station, a router, a gateway, a repeater, a communication server, a switch, a bridge, or the like. For ease of description herein, the devices mentioned above are collectively referred to as APs in embodiments of this application.

The STA herein is a non-AP station. It is a logical entity, and is a single addressable instance of a media access control (medium access control, MAC) layer and a physical layer (physical layer, PHY) interface that access the wireless medium. The STA may be various user terminals, user apparatuses, access apparatuses, subscriber stations, subscriber units, mobile stations, user agents, user equipments, or other devices that have a wireless communication function. The user terminals may include various handheld devices, vehicle-mounted devices, wearable devices, and computing devices that have a wireless communication function, or another processing device connected to a wireless modem, and include various forms of user equipments (user equipments, UEs), mobile stations (mobile stations, MSs), and terminals (terminals), terminal equipments (terminal equipments), portable communication devices, handheld devices, portable computing devices, entertainment devices, game devices or systems, global positioning system devices, or any other suitable device configured to perform network communication via the wireless medium, or the like. For ease of description herein, the devices mentioned above are collectively referred to as STAs in embodiments of this application.

In the WLAN system, each AP and STAs associated with the AP may form a basic service set (basic service set, BSS). A plurality of BSSs may use a same transmission resource, so that utilization of transmission resources of the wireless local area network can be improved. APs in different BSSs may implement coordinated transmission by using a same transmission resource in a coordinated manner.

To better understand the solutions provided in embodiments of this application, a concept and a manner of "coordinated transmission" are first described.

Coordinated transmission means that, in the WLAN system, two or more APs provide services, including uplink (uplink, UL) transmission and/or downlink (downlink, DL) transmission, for different STAs on a same transmission resource. A manner of multi-AP coordinated transmission is coordinated spatial reuse (coordinated spatial reuse, CSR). To be specific, the APs negotiate a transmit power based on interference measurement information, to enable multi-link concurrent transmission. Embodiments of this application are applicable to a coordinated transmission manner of CSR.

That two APs performs coordinated transmission is used as an example. For example, in the WLAN system shown in FIG. 2, AP101-1 and AP101-2 may perform coordinated transmission on a same transmission resource. The transmission resource may use a channel as a granularity or use a resource unit (resource unit, RU) as a granularity. For example, by using a channel as a granularity, AP101-1 and AP101-2 perform coordinated transmission on a same channel. A bandwidth of the channel for coordinated transmission may be, for example, 20 MHz, 40 MHz, or 80 MHz. Assuming that the bandwidth of the channel for coordinated transmission is 80 MHz, both AP101-1 and AP 101-2 may use the channel with the bandwidth of 80 MHz. AP 101-1 may allocate a part or all of the channel with the bandwidth of 80 MHz to STA102-1 and STA102-2. AP101-2 may also allocate a part or all of the channel with the bandwidth of 80 MHz to STA102-3 and STA102-4.

On the channel for coordinated transmission, AP101-1 may communicate with STA102-1/STA102-2, and AP101-2 may communicate with STA102-3/STA102-4.

When a plurality of APs perform coordinated transmission, an AP that preempts a transmission opportunity (transmission opportunity, TXOP) is generally referred to as a sharing AP (sharing AP). An AP that performs coordinated transmission with the sharing AP is referred to as a shared AP (shared AP). Certainly, the sharing AP may also be referred to as a master AP or another name, and the shared AP may also be referred to as a slave AP or another name. In a next TXOP, the sharing AP may remain the same, or may change. A STA associated with the sharing AP may be referred to as a sharing STA, and a STA associated with the shared AP may be referred to as a shared STA.

When a plurality of APs perform coordinated transmission, there are a plurality of concurrent transmission links. A transmission link in which the sharing AP participates may be referred to as a first link, and a transmission link in which the shared AP participates may be referred to as a second link. Transmission directions of the first link and the second link may be the same, and both may be downlink or uplink. The transmission directions of the first link and the second link may be different. For example, the transmission direction of the first link is uplink, and the transmission direction of the second link is downlink. In another example, the transmission direction of the first link is downlink, and the transmission direction of the second link is uplink. That the transmission direction of the first link is uplink means that the sharing STA sends an uplink frame to the sharing AP through the first link. That the transmission direction of the first link is downlink means that the sharing AP sends a downlink frame to the sharing STA through the first link. That the transmission direction of the second link is uplink means that the shared STA sends an uplink frame to the shared AP through the second link. That the transmission direction of the second link is downlink means that the shared AP sends a downlink frame to the shared STA through the second link. When the transmission directions of the first link and the second link are different, multi-AP coordinated transmission may also be referred to as hybrid uplink-downlink transmission.

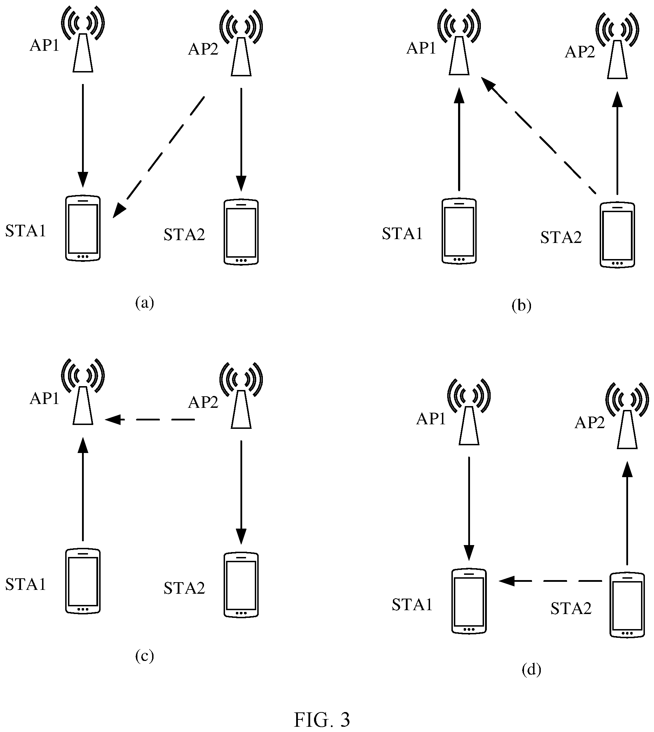

That two APs perform coordinated transmission is used as an example. FIG. 3 shows several scenarios in which transmission directions of a first link and a second link are different. The two APs that perform coordinated transmission are identified by AP1 and AP2. AP1 is associated with STA1, and AP2 is associated with STA2. A link between AP1 and STA1 is denoted as the first link, and a link between AP2 and STA2 is denoted as the second link. A solid arrow indicates a link direction. A dotted arrow indicates an interference source. In (a) in FIG. 3, the transmission direction of the first link is downlink, and the transmission direction of the second link is downlink. When STA1 receives downlink data sent by AP1, AP2 sends downlink data to STA2, and STA1 may be interfered by AP2. In (b) in FIG. 3, the transmission direction of the first link is uplink, and the transmission direction of the second link is uplink. When AP1 receives uplink data sent by STA1, STA2 sends uplink data to AP2, and AP1 may be interfered by STA2. In (c) in FIG. 3, the transmission direction of the first link is uplink, and the transmission direction of the second link is downlink. When AP1 receives uplink data sent by STA1, AP2 sends downlink data to STA2, and AP1 may be interfered by AP2. In (d) in FIG. 3, the transmission direction of the first link is downlink, and the transmission direction of the second link is uplink. When AP1 sends downlink data to STA1, STA2 sends uplink data to AP2, and STA1 may be interfered by STA2.

In an embodiment, during coordinated transmission, AP1 and AP2 may obtain a channel loss by measuring a channel, and negotiate transmit powers of the first link and the second link based on the channel loss, so that coordinated transmission is performed between two links and interference is controllable. Generally, a transmit power of the sharing AP remains unchanged, and a maximum transmit power of the shared AP is limited by the sharing AP. For example, in (a) in FIG. 3, STA1 may measure a channel loss of AP2 in a sensing manner. STA1 may sense a beacon frame of AP2, where the beacon frame carries an original power. STA1 may obtain the channel loss by calculating a difference between the original power and an RSSI of the beacon frame. STA1 may report the channel loss of AP2->STA1 to AP1. AP 1 determines a maximum downlink transmit power of AP2 based on the channel loss, an average transmit power of AP2, and a maximum acceptable interference level (a signal-to-noise ratio at a 10%-bit error rate) of AP1->STA1, and indicates the transmit power to AP2. In this way, AP2 reschedules, based on the transmit power indicated by AP1, STA that meets a condition to perform downlink concurrent transmission, so that interference to downlink transmission of AP1 can be avoided. The condition is that the maximum acceptable interference level (the signal-to-noise ratio at the 10% bit error rate) of AP1 ->STA2 is greater than an RSSI of AP1->STA2. In another example, in (b) in FIG. 3, AP1 may measure a channel loss of STA2->AP1 by receiving a signal from STA2, to calculate and indicate, to AP2 by using a similar method, a transmit power for scheduling uplink transmission to STA2, to implement interference control. In another example, in (c) in FIG. 3, AP1 and AP2 periodically exchange beacon management frames. AP1 measures a channel loss of AP2->AP1 by receiving a beacon management frame of AP2, and calculates and indicates a transmit power to AP2 by using a similar method based on the channel loss, to implement interference control.

For a scenario (d) in FIG. 3, interference when STA1 receives downlink data is from STA2. However, because there is an excessively large quantity of terminals, STA1 cannot measure a channel loss from STA2, that is, interference between STAs is undetectable. Therefore, interference control cannot be performed by negotiating a transmit power, and concurrent transmission cannot be enabled. In brief, during hybrid uplink-downlink transmission, because interference between STAs is undetectable, the interference may be uncontrollable. As a result, multi-AP coordinated transmission cannot be implemented. Therefore, the solution of multi-AP coordinated transmission needs to be further improved.

Based on this, embodiments of this application provide a coordinated transmission method for a wireless local area network, to reduce interference in a coordinated transmission process and improve coordinated transmission quality in the wireless local area network.

In an embodiment of this application, a sharing AP and one or more shared APs perform coordinated transmission on a channel. For example, a bandwidth of the channel for coordinated transmission may be 20 MHz, 40 MHz, 80 MHz, 160 MHz, 240 MHz, 320 MHz, or another bandwidth supported by the WLAN. Assuming that the bandwidth of the channel for coordinated transmission is 80 MHz, the sharing AP and the one or more shared APs perform coordinated transmission on the channel with the bandwidth of 80 MHz, and both the sharing AP and the shared AP can use the channel with the bandwidth of 80 MHz.

The AP may allocate resources to associated STAs by using an orthogonal frequency division multiple access (orthogonal frequency division multiple access, OFDMA) technology. By using the OFDMA technology, a time-frequency resource of an air interface radio channel is further divided into a plurality of orthogonal resources, where a unit of orthogonal resources is referred to as an RU. The AP may allocate resources to the STA based on the orthogonal resources. For example, the AP may allocate resources based on an RU, or may allocate resources based on an RU group. The AP allocates different orthogonal resources to different STAs at a same moment, so that a plurality of STAs efficiently access a channel.

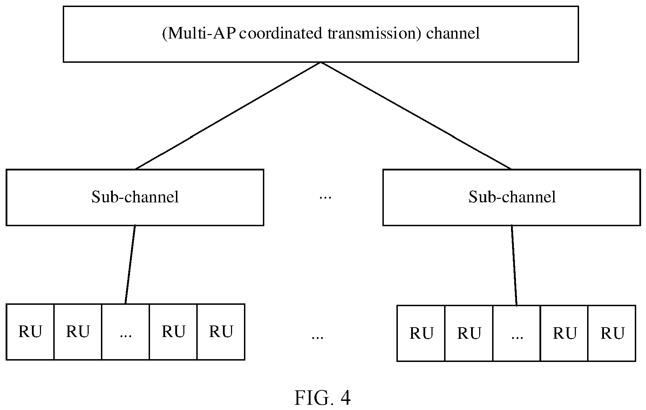

During multi-AP coordinated transmission, the sharing AP may allocate the channel to one STA associated with the sharing AP or may allocate, based on the OFDMA technology, the channel to a plurality of STAs associated with the sharing AP; and the shared AP may also allocate the channel to one STA associated with the shared AP, or may allocate, based on the OFDMA technology, the channel to a plurality of STAs associated with the shared AP. In a possible embodiment, as shown in FIG. 4, a channel includes one or more sub-channels, and one sub-channel includes one or more RUs. During downlink transmission, the sharing AP sends, on a channel or different RUs, downlink data to one or more sharing STAs associated with the sharing AP. During uplink transmission, the sharing AP allocates the channel or RUs to the one or more STAs associated with the sharing AP to send uplink data. Similarly, during downlink transmission, the shared AP sends, on a channel or different RUs, downlink data to one or more shared STAs associated with the shared AP; and during uplink transmission, the shared AP allocates the channel or RUs to the one or more shared STAs associated with the shared AP to send uplink data. During multi-AP coordinated transmission, communication between the sharing AP and the sharing STA and communication between the shared AP and the shared STA may coexist on a same RU. For example, on an RU, the sharing AP sends downlink data to the sharing STA, and on the RU, the shared STA sends uplink data to the shared AP. In this case, the sharing STA may be interfered by the shared STA on the RU. According to the method provided in embodiments of this application, interference on a same channel, a same sub-channel, or a same RU is to be controlled. It may be understood that channel division shown in FIG. 4 is merely an example. When the channel includes one sub-channel, a bandwidth of the channel is the same as a bandwidth of the sub-channel, or the sub-channel is considered as the channel.

Generally, in a WLAN system, the sub-channel is at a granularity of 20 MHz, and a bandwidth of the sub-channel may be set to 20 MHz. When the channel is of 40 MHz, 2 sub-channels may be included. When the channel is of 80 MHz, 4 sub-channels may be included.

That the sharing AP and the shared AP perform coordinated transmission on a channel means that both the sharing AP and the shared AP can use the entire channel. How the sharing AP and the shared AP specifically allocate RUs of the channel to a STA is not limited in this embodiment of this application. The sharing AP and the shared AP may allocate some or all resources of the channel to the sharing STA and the shared STA that are being scheduled.

In embodiments of this application, an interference detection frame is designed to detect an interference RU. The following describes a structure or a function of the interference detection frame. In descriptions of subsequent embodiments, for a distinguishing purpose, a first frame, a second frame, a third frame, and the like are used to represent interference detection frames in different embodiments.

The interference detection frame may be a short data frame or a control frame. For example, when the interference detection frame is a control frame, the interference detection frame may be a trigger frame (trigger frame, TF), or may be a multi-user request to send (multi-user request to send, MU-RTS) frame. In this embodiment of this application, the interference detection frame is denoted as TF -N. A modulation and coding scheme (modulation and coding scheme, MCS) order of the interference detection frame may be adjusted to an MCS order of a data frame. In this way, a result of interference detection performed according to the interference detection frame can better reflect a result of interference to the data frame.

The AP sends an interference detection frame to the STA, and the STA replies with a response to the AP after receiving the interference detection frame. A type of a frame returned by the STA to the AP corresponds to the type of the interference detection frame. For example, if the interference detection frame is an MU-RTS frame, correspondingly, the STA replies with a clear to send (clear to send, CTS) frame. In another example, if the interference detection frame is a trigger frame, correspondingly, the STA replies with a block ACK (block ACK, BA). In another example, the interference detection frame is a short data frame, and the STA replies with BA to the sharing AP. In this embodiment of this application, a response frame of the interference detection frame is denoted as BA-D.

The interference detection frame may further indicate an RU used by the STA to reply to a response. The STA replies with a response to the AP on a specified RU.

The interference detection frame may further indicate the STA to report, through the response frame BAD, some channel-related information, for example, a received signal strength indication (received signal strength indication, RSSI) and channel state information (channel state information, CSI). The response frame replied by the STA to the AP based on the interference detection frame carries the channel-related information. The AP may determine an interference level based on the channel-related information reported by the STA, and selects an appropriate MCS to send data or select an appropriate MCS to trigger uplink transmission.

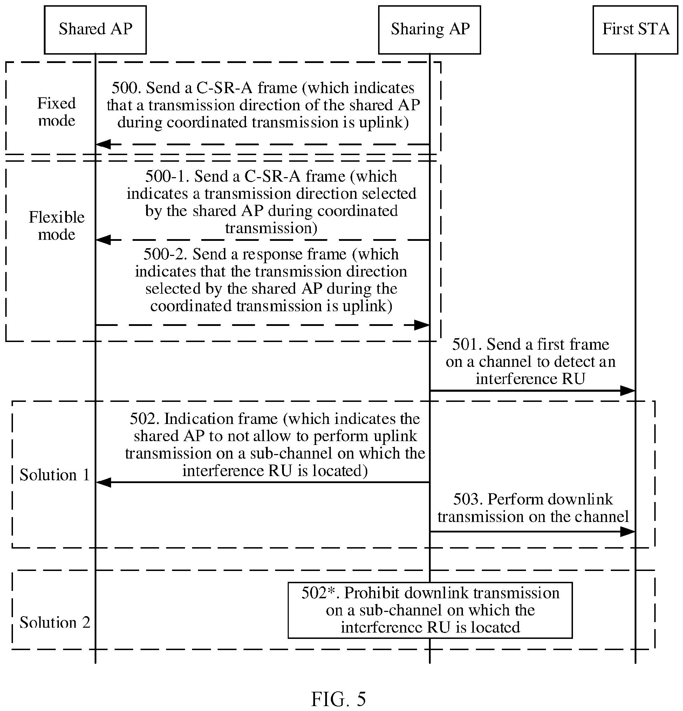

As shown in FIG. 5, a specific procedure of a coordinated transmission method for a wireless local area network provided in an embodiment of this application is described as follows:
S501: A sharing AP sends a first frame to a first STA on a channel when a condition is met, to detect an interference RU.

The sharing AP is associated with the first STA, and the sharing AP is a serving AP of the first STA. The sharing AP may schedule the first STA on the channel, and the sharing AP may allocate one or more RUs on the channel to the first STA. For example, the sharing AP allocates a first RU on the channel to the first STA. The first STA is a STA to which the sharing AP is to send downlink data.

The channel is a channel on which the sharing AP and a shared AP perform coordinated transmission. The interference RU means that the sharing AP may be interfered when sending a downlink data frame to the first STA on the RU.

The condition may be that the sharing AP is to perform downlink transmission on the channel. To be specific, when the sharing AP is to perform downlink transmission on the channel, the sharing AP sends the first frame to the first STA on the channel to detect the interference RU.

The first frame includes an indication of using the first RU when the first STA replies to the first frame. For example, the first frame includes a first field, where the first field indicates the first STA to use the first RU when replying to the first frame. If the first STA receives the first frame, the first STA replies to the sharing AP on the first RU. If the first STA does not receive the first frame, the sharing AP cannot receive a reply from the first STA to the first frame. The interference RU is a first RU on which the reply from the first STA is not received. That is, if the first STA does not receive the first frame, the first STA does not reply to the sharing AP on the first RU, and the sharing AP may determine that the first RU on which the reply from the first STA is not received is an interference RU. The first STA and an RU used by the first STA that are indicated in the first frame are a target STA and a to-be-used RU in a subsequent process of downlink data transmission.

Based on S501, the sharing AP may obtain a detection result of the interference RU, that is, the sharing AP may learn whether the first RU is an interference RU. Certainly, the solution described in S501 is specific to the first STA. It may be understood that, the first STA is any STA currently scheduled by the sharing AP, and the RU used by the sharing AP to require the first STA to reply to the first frame is an RU used to currently schedule the first STA. The sharing AP may send the first frame to each currently scheduled STA to detect whether the used RU is an interference RU. The sharing AP may learn which RUs on the channel are interference RUs, and the interference RUs are interfered in the subsequent process of downlink transmission. The detection result of the interference RU may be used for interference control, so that interference in multi-AP coordinated transmission can be effectively controlled.

Some optional implementations of the embodiment in FIG. 5 are described in detail below.

The condition in S501 may alternatively be that: the sharing AP is to perform downlink transmission on the channel, and the shared AP is to perform uplink transmission on the channel. To be specific, when the sharing AP is to perform downlink transmission on the channel and learns that the shared AP is to perform uplink transmission on the channel, the sharing AP sends the first frame to the first STA on the channel to detect the interference RU.

Based on this, before S501, the sharing AP may further negotiate a coordinated transmission direction with the shared AP. Optionally, in embodiments of this application, a fixed mode and a flexible mode may be provided to negotiate a coordinated transmission direction.

Fixed mode: The sharing AP specifies a transmission direction of the shared AP during coordinated transmission.

In the fixed mode, before S501, the method further includes S500.

S500: The sharing AP sends a coordinated transmission announcement (coordinated spatial reuse announcement, C-SR-A) frame to the shared AP, and correspondingly, the shared AP receives the C-SR-A frame from the sharing AP.

The C-SR-A frame is used to indicate that a transmission direction of the shared AP during the coordinated transmission is uplink. Optionally, the C-SR-A frame is further used to indicate that a transmission direction of the sharing AP during the coordinated transmission is downlink. The shared AP may determine, based on the C-SR-A frame, respective transmission directions of the sharing AP and the shared AP during the coordinated transmission.

Flexible mode: The shared AP determines a transmission direction during the coordinated transmission.

In the flexible mode, before S501, the method further includes S500-1 and S500-2.

S500-1: The sharing AP sends a C-SR-A frame to the shared AP, and correspondingly, the shared AP receives the C-SR-A frame from the sharing AP. The C-SR-A frame is used to indicate a transmission direction selected by the shared AP during the coordinated transmission. Optionally, the C-SR-A frame may further be used to indicate that a transmission direction of the sharing AP during the coordinated transmission is downlink. The shared AP may determine, based on the C-SR-A frame, that the transmission direction of the sharing AP during the coordinated transmission is downlink, and select a transmission direction of the shared AP during the coordinated transmission based on an indication of the C-SR-A frame.

S500-2: The shared AP sends a response frame to the sharing AP, where the response frame is denoted as a first response frame, and correspondingly, the sharing AP receives the first response frame from the shared AP.

The first response frame is used to indicate that the transmission direction selected by the shared AP during the coordinated transmission is uplink.

In this embodiment of this application, a specified or negotiated transmission direction during the coordinated transmission may be a transmission direction in one or more TXOPs, and is generally a transmission direction in one TXOP.

The following describes optional implementations of detecting the interference RU in S501.

In optional manner 1, before S501, the sharing AP may further indicates the shared AP to send a second frame to a second STA. The second STA is a STA associated with or currently scheduled by the shared AP. The second STA is a STA to which the shared AP is to perform uplink transmission on the first RU. To be specific, the shared AP is to schedule the second STA on the first RU. After the scheduling, the second STA may send an uplink data frame to the shared AP on the first RU. In this way, it may be seen that the first RU is an RU multiplexed by the first STA and the second STA.

A format and a function of the second frame are similar to those of the first frame. The second frame is used to indicate the second STA to return a second acknowledgment frame to the shared AP after receiving the second frame. The second acknowledgment frame indicates that the second frame has been received. A sending moment of the first frame is the same as a sending moment of the second frame, and a length of the first frame is greater than a length of the second frame. Generally, the length of the first frame is greater than a sum of the length of the second frame and a length of a short interframe space (short interframe space, SIFS). After receiving the second frame and after an SIFS, the second STA returns the second acknowledgment frame to the shared AP according to the second frame. In this way, after the first frame and the second frame are simultaneously sent, and the second STA starts to reply to the second acknowledgment frame, the first frame is not completely sent. In this case, a second acknowledgment frame that is transmitted in an uplink direction and that is returned by the second STA to the shared AP may exist on the first RU. On the first RU, there is an intersection in frequency domain between the second acknowledgment frame in the uplink direction and the first frame in a downlink direction. In this case, the second acknowledgment frame in the uplink direction may cause interference to the first frame in the downlink direction. For example, if an RSSI of receiving the second acknowledgment frame by the first STA is greater than a maximum acceptable interference level of receiving the first frame by the first STA, the second acknowledgment frame may cause interference to receiving of the first frame by the first STA. When interference is caused, the first STA cannot receive the first frame, and the first STA does not return a first acknowledgment frame to the sharing AP on the first RU. In this case, the sharing AP cannot receive the first acknowledgment frame returned by the first STA, and the sharing AP may determine that a first RU on which the first acknowledgment frame returned by the first STA is not received is an interference RU. On the contrary, if the second acknowledgment frame in the uplink direction does not cause interference to the first frame, the first STA can receive the first frame. In this case, the first STA returns the first acknowledgment frame to the sharing AP, and the sharing AP determines that the first RU is not an interference RU.

In optional manner 1, the sharing AP indicates, through the C-SR-A frame sent by the sharing AP to the shared AP in S500, the shared AP to send the second frame to the second STA. Alternatively, the sharing AP indicates, through the C-SR-A frame sent by the sharing AP to the shared AP in S500-1, the shared AP to send the second frame to the second STA when a condition is met, where the condition is that the C-SR-A frame indicates that the transmission direction of the sharing AP is downlink, and the transmission direction selected by the shared AP is uplink. If the C-SR-A frame sent by the sharing AP to the shared AP in S500 is used to indicate the shared AP to send the second frame to the second STA, the sharing AP may send the first frame after an SIFS after the C-SR-A frame is sent, and the shared AP sends the second frame after the SIFS after the C-SR-A frame is received, so that the sending moment of the first frame is the same as the sending moment of the second frame. If the C-SR-A frame sent by the sharing AP to the shared AP in S500-1 is used to indicate the shared AP to send the second frame to the second STA when the condition is met, the sharing AP sends the first frame after the SIFS after receiving the first response frame returned by the shared AP in S500-2, and the shared AP sends the second frame after an SIFS after sending the first response frame, so that the sending moment of the first frame is the same as the sending moment of the second frame.

In this embodiment of this application, "after an SIFS" may be an example that a period of time has passed, and may be specifically replaced with "after another specified time". This description is applicable to related descriptions in this specification.

In optional manner 2, the shared AP sends an uplink trigger frame, and schedules a STA (for example, the second STA) served by the shared AP to perform uplink transmission. The shared STA receiving the uplink trigger frame sends an uplink data frame to the shared AP after an SIFS. In this case, the uplink trigger frame sent by the shared AP may also be sensed by the sharing AP, and the sharing AP may send the first frame to the first STA in response to the uplink trigger frame. In other words, the sharing AP may send the first frame to the first STA in response to receiving the uplink trigger frame sent by the shared AP. This is because, after the shared AP sends the uplink trigger frame, the STA receiving the uplink trigger frame sends the uplink data frame to the shared AP, the second STA may send the uplink data frame to the shared AP on the first RU. The sharing AP sends the first frame to the first STA after receiving the uplink trigger frame from the shared AP, so that it can be ensured that there is an intersection when the first STA receives the first frame in the downlink direction on the first RU and the second STA sends an uplink data frame to the shared AP on the first RU. In this case, the uplink data frame sent by the second STA may cause interference to the first frame. For example, if an RSSI of receiving the uplink data frame from the second STA by the first STA is greater than a maximum acceptable interference level of receiving the first frame from the sharing AP by the first STA, receiving of the first frame by the first STA may be interfered by sending of the uplink data frame by the second STA. When interference is caused, the first STA cannot receive the first frame, and the first STA does not return a first acknowledgment frame to the sharing AP on the first RU. In this case, the sharing AP cannot receive the first acknowledgment frame returned by the first STA, and the sharing AP may determine that a first RU on which the first acknowledgment frame returned by the first STA is not received is an interference RU. On the contrary, if the uplink data frame sent by the second STA does not cause interference to the first frame, the first STA can receive the first frame. In this case, the first STA returns the first acknowledgment frame to the sharing AP, and the sharing AP determines that the first RU is not an interference RU.

In optional manner 2, after receiving the C-SR-A frame from the sharing AP in S500, the shared AP sends the uplink trigger frame after an SIFS. After the sharing AP sends the C-SR-A frame to the shared AP in S500, the sharing AP waits to receive (or detect) the uplink trigger frame sent by the shared AP, and sends the first frame in response to the uplink trigger frame.

After the shared AP receives the C-SR-A frame from the sharing AP by performing S500-1, and in S500-2, the shared AP returns a first response frame to the sharing AP, and the shared AP sends the uplink trigger frame after an SIFS after sending the first response frame. After the sharing AP receives the first response frame from the shared AP in S500-2, the sharing AP waits to receive (or detect) the uplink trigger frame sent by the shared AP, and sends the first frame in response to the uplink trigger frame.

In optional manner 3, the sending moment of the first frame is the same as a sending moment of the uplink trigger frame sent by the shared AP. The length of the first frame is greater than a length of the uplink trigger frame. Generally, the length of the first frame is greater than a sum of the length of the uplink trigger frame and the length of the SIFS. The uplink trigger frame is used to trigger the STA served by the shared AP to perform uplink transmission. Specifically, when scheduling the STA (for example, the second STA) served by the shared AP to perform uplink transmission, the shared AP sends an uplink trigger frame, and the STA receiving the uplink trigger frame sends an uplink data frame to the shared AP after an SIFS.

In this way, when the first frame and the uplink trigger frame are simultaneously sent, and the second STA receives the uplink trigger frame, the first frame is not completely sent. After an SIFS after receiving the uplink trigger frame, the second STA sends the uplink data frame to the shared AP based on the uplink trigger frame. In this case, there is a frame transmitted in an uplink direction on the first RU. On the first RU, there is an intersection in frequency domain between an uplink frame sent by the second STA and a first frame in a downlink direction of the sharing AP, and the uplink frame sent by the second STA may cause interference to the first frame in the downlink direction. For example, if an RSSI of receiving the uplink data frame from the second STA by the first STA is greater than a maximum acceptable interference level of receiving the first frame from the sharing AP, sending of the uplink frame by the second STA may cause interference to receiving of the first frame by the first STA. When interference is caused, the first STA cannot receive the first frame, and the first STA does not return a first acknowledgment frame to the sharing AP on the first RU. In this case, the sharing AP cannot receive the first acknowledgment frame returned by the first STA, and the sharing AP may determine that a first RU on which the first acknowledgment frame returned by the first STA is not received is an interference RU. On the contrary, if the uplink data frame sent by the second STA does not cause interference to the first frame, the first STA can receive the first frame. In this case, the first STA returns the first acknowledgment frame to the sharing AP, and the sharing AP determines that the first RU is not an interference RU.

In optional manner 3, after receiving the C-SR-A frame from the sharing AP in S500, the shared AP sends the uplink trigger frame after an SIFS. After the sharing AP sends the C-SR-A frame to the shared AP in S500, the sharing AP sends the first frame after an SIFS, so that the sending moment of the first frame is the same as the sending moment of the uplink trigger frame sent by the shared AP.

After the shared AP receives the C-SR-A frame from the sharing AP in S500-1, and in S500-2, the shared AP returns a first response frame to the sharing AP, and the shared AP sends the uplink trigger frame after an SIFS after sending the first response frame. After the sharing AP receives the first response frame from the shared AP in S500-2, if the transmission direction of the sharing AP is downlink, and the transmission direction of the shared AP is uplink, the sharing AP sends the first frame after an SIFS, so that the sending moment of the first frame is the same as the sending moment of the uplink trigger frame sent by the shared AP.

In this embodiment of this application, the sharing AP sends the first frame before performing downlink transmission to perform interference detection, to detect whether downlink transmission performed by the sharing AP on an RU is interfered with uplink transmission performed by the shared STA on the RU.

After S501, two solutions, namely, Solution 1 and Solution 2, may be further performed. Solution 1 is implemented through steps S502 and S503. Solution 2 is implemented through step S502*.

### Solution 1

S502: The sharing AP sends an indication frame to the shared AP in response to a detected interference RU. Correspondingly, the shared AP receives the indication frame from the sharing AP. The indication frame is used to indicate that the shared AP is not allowed to perform uplink transmission on a sub-channel on which the interference RU is located.

Assuming that a channel bandwidth for coordinated transmission is 80 MHz, and there are four sub-channels, which are denoted as a sub-channel 1, a sub-channel 2, a sub-channel 3, and a sub-channel 4. A bandwidth of a sub-channel is 20 MHz. The sharing AP allocates a first RU on a sub-channel 1 to the first STA. The sharing AP learns, by detecting the interference RU, that the first RU is an interference RU. The sharing AP sends the indication frame to the shared AP, to indicate that the shared AP is not allowed to perform uplink transmission on the sub-channel on which the interference RU is located, so that interference that may be caused when the sharing STA receives a downlink data frame on the sub-channel on which the interference RU is located can be avoided, and interference is controllable.

It may be understood that, the channel bandwidth for coordinated transmission may be greater than or equal to a bandwidth of a prohibited sub-channel. For example, the channel bandwidth for coordinated transmission is 20 MHz, which is equal to a bandwidth of the sub-channel. The sharing AP may indicate that the shared AP is not allowed to perform uplink transmission on the channel with the bandwidth of 20 MHz. In other words, the shared AP cannot perform coordinated transmission with the sharing AP within a TXOP.

S503: The sharing AP performs downlink transmission on a channel.

After indicating the shared AP to prohibit performing uplink transmission on the sub-channel on which the interference RU is located, the sharing AP may perform downlink transmission on the entire channel without being interfered with uplink transmission performed by a shared STA.

### Solution 2

S502*: The sharing AP does not perform downlink transmission on a sub-channel on which the interference RU is located. That is, the sharing AP prohibits using of the interference RU.

Correspondingly, the sharing AP performs downlink transmission on a sub-channel on the channel other than the sub-channel on which the interference RU is located. The shared AP may trigger the shared STA to perform uplink transmission on the channel.

The example described in S502 is still used as an example, assuming that a channel bandwidth for coordinated transmission is 80 MHz, and there are four sub-channels, which are denoted as a sub-channel 1, a sub-channel 2, a sub-channel 3, and a sub-channel 4. A bandwidth of a sub-channel is 20 MHz. The sharing AP allocates a first RU on a sub-channel 1 to the first STA. The sharing AP learns, by detecting the interference RU, that the first RU is an interference RU. If the sharing AP performs downlink transmission on the sub-channel 1 on which the interference RU is located, the shared STA also sends an uplink data frame to the shared STA on the sub-channel 1, and therefore receiving of a downlink data frame on the sub-channel 1 by the sharing STA may be interfered with sending of the uplink data frame by the shared AP. Based on this, when learning that the first RU is an interference RU, the sharing AP prohibits downlink transmission on the sub-channel 1 on which the interference RU is located. In this way, the shared STA also sends the uplink data frame to the shared AP on the sub-channel 1 without being interfered by the sharing AP. After the sharing AP prohibits downlink transmission on the sub-channel on which the interference RU is located, the shared STA and the shared AP may perform uplink transmission on the entire channel without being interfered with downlink transmission performed by the sharing AP.

Based on the description of the embodiment in FIG. 5, the embodiment in FIG. 5 is further described in detail below with reference to a specific application scenario.

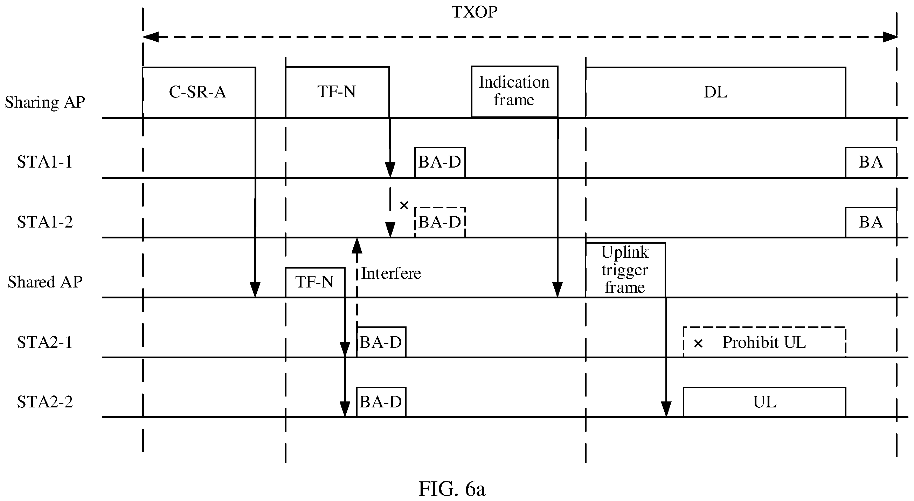

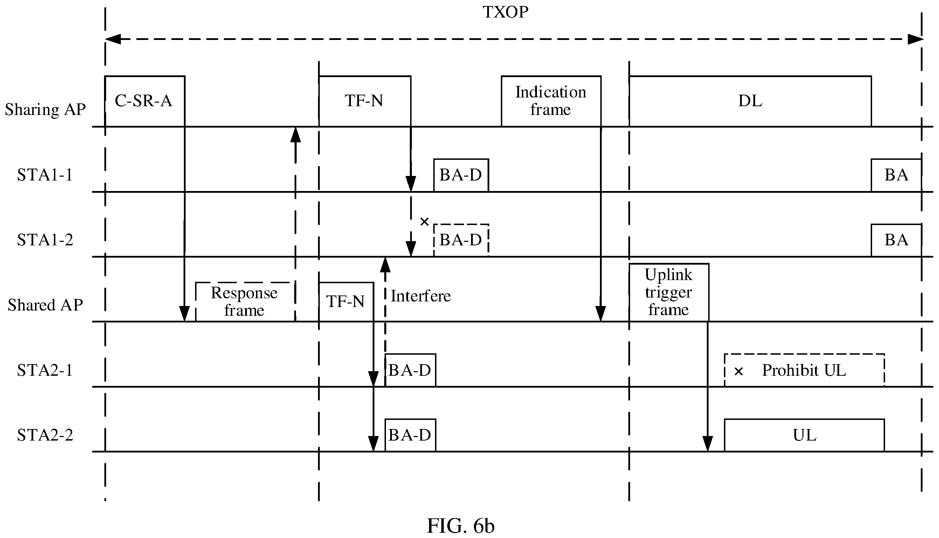

When Solution 1 is combined with optional manner 1, schematic diagrams of frame interaction between APs and STAs are shown in FIG. 6a and FIG. 6b. FIG. 6a and FIG. 6b show examples of frame interaction within a TXOP. FIG. 6a shows coordinated transmission in a fixed mode, and FIG. 6b shows coordinated transmission in a flexible mode. The following describes frame interaction in FIG. 6a and FIG. 6b. Unless otherwise specified, the described frame interaction is applicable to both FIG. 6a and FIG. 6b. When there is a difference between frame interactions, whether it is a step in FIG. 6a or a step in FIG. 6b may be specified.

Assuming that STAs currently scheduled by the sharing AP are represented by STA1-1 and STA1-2, STAs currently scheduled by the shared AP are represented by STA2-1 and STA2-2. For operations performed by STA1-1 and STA1-2, refer to the operations performed by the first STA. For operations performed by STA2-1 and STA2-2, refer to the operations performed by the second STA.
(1) The sharing AP sends a C-SR-A frame to the shared AP, and correspondingly, the shared AP receives the C-SR-A frame from the sharing AP.

In the fixed mode, as shown in FIG. 6a, for this step, refer to S500. The C-SR-A frame indicates that a transmission direction of the shared AP during the coordinated transmission is uplink. Optionally, the C-SR-A frame further indicates that a transmission direction of the sharing AP during the coordinated transmission is downlink. The C-SR-A frame further indicates the shared AP to send a second frame.

In the flexible mode, as shown in FIG. 6b, for this step, refer to S500-1. The C-SR-A frame indicates a transmission direction selected by the shared AP during the coordinated transmission. Optionally, the C-SR-A frame may further indicate that a transmission direction of the sharing AP during the coordinated transmission is downlink. In this case, the shared AP returns a response frame to the sharing AP, and correspondingly, the sharing AP receives the response frame from the shared AP. The response frame indicates that the transmission direction selected by the shared AP during the coordinated transmission is uplink. It may be figured out, if the response frame indicates that the transmission direction selected by the shared AP during the coordinated transmission is downlink, the sharing AP does not perform interference detection. To be specific, only when the response frame indicates that the transmission direction selected by the shared AP during the coordinated transmission is uplink, the sharing AP performs interference detection, that is, performs step (2) below.

(2) The sharing AP sends a first frame to STA1-1 and STA1-2, where the first frame is represented by TF-N. In addition, the shared AP sends a second frame to STA2-1 and STA2-2, where the second frame is also represented by TF-N. When step (2) is performed in the fixed mode, the transmission direction of the sharing AP is downlink, and the C-SR-A frame indicates that the transmission direction of the shared AP is uplink; and in the flexible mode, the transmission direction of the sharing AP is downlink, and the transmission direction selected by the shared AP in response to the C-SR-A frame is uplink.

The first frame sent by the sharing AP to STA1-2 indicates STA1-2 to use the first RU when replying to the first frame. Similarly, the first frame sent by the sharing AP to STA1-1 indicates STA1-1 to use another RU different from the first RU when replying to the first frame. If receiving the first frame, STA1 -1 and STA1-2 separately return a first acknowledgment frame to the sharing AP on a specified RU, where the first acknowledgment frame is represented by BA-D.

The second frame sent by the shared AP to STA2-1 indicates STA2-1 to use the first RU when replying to the second frame. The second frame sent by the shared AP to STA2-2 indicates STA2-2 to use another RU different from the first RU when replying to the second frame.

To be specific, both STA1-2 and STA2-1 use the first RU, and STA1-2 and STA2-1 reuse the first RU.

As shown in FIG. 6a, the sharing AP may send the first frame after an SIFS after sending the C-SR-A frame, and the shared AP may send the second frame after an SIFS after receiving the C-SR-A frame.

As shown in FIG. 6b, the sharing AP may send the first frame after an SIFS after receiving the response frame from the shared AP, and the shared AP may send the second frame after an SIFS after sending the response frame.

The length of the first frame is greater than a sum of the length of the second frame and the length of the SIFS.

(3) After receiving the second frame, STA2-1 and STA2-2 return a second acknowledgment frame to the shared AP after an SIFS, where the second acknowledgment frame is represented by BA-D. When STA2-1 and STA2-2 return BA-D, there is an intersection with sending of the first frame. On a same RU, the BA frame may cause interference to the first frame. For example, STA1-2 cannot successfully receive the first frame due to interference from the BA-D frame returned by STA2-1. Because STA1-2 does not receive the first frame, STA1-2 cannot return the first acknowledgment frame (BA-D frame) to the sharing AP.

(4) STA1-1 returns the first acknowledgment frame (BA-D frame) to the sharing AP, and the sharing AP receives the first acknowledgment frame (BA-D frame) returned by STA1-1, and determines that an RU corresponding to STA1-1 is not interfered. If the sharing AP does not receive the BA-D frame returned by STA1-2, the shared AP determines that the first RU is an interference RU.

(5) The sharing AP sends an indication frame to the shared AP. Correspondingly, the shared AP receives the indication frame from the sharing AP. The indication frame is used to indicate that the shared AP is not allowed to perform uplink transmission on a sub-channel on which the interference RU is located.

For this step, refer to S502.

(6) The sharing AP performs downlink transmission (DL data frame). The shared AP sends an uplink trigger frame. The uplink trigger frame is used to schedule uplink transmission.

The sharing AP may perform downlink transmission on STA1-1 and STA1-2. Because the sharing AP indicates the shared AP to prohibit performing uplink transmission on a sub-channel on which the first RU is located, STA2-1 may not perform uplink transmission on the first RU. Sending of the DL data frame to STA1 -2 by the sharing AP may not be interfered with uplink transmission performed by STA2-1 on the first RU.

Because the shared AP receives the indication frame, and uplink transmission is prohibited, according to the indication frame, from being performed on the sub-channel on which the first RU is located. Therefore, the uplink trigger frame is sent only to STA2-2. After receiving the uplink trigger frame, STA2-2 sends an uplink data frame to the shared AP on a corresponding RU.

The sharing AP may send the DL data frame after an SIFS after sending the indication frame, and the shared AP may send the uplink trigger frame after an SIFS after receiving the indication frame.

(7) After receiving the DL data frame, STA1-1 and STA1 -2 may further return an acknowledgment (BA) frame to the sharing AP. After receiving the UL data frame sent by STA2-2, the shared AP returns acknowledgment (BA) frame to STA2-2 after an SIFS.

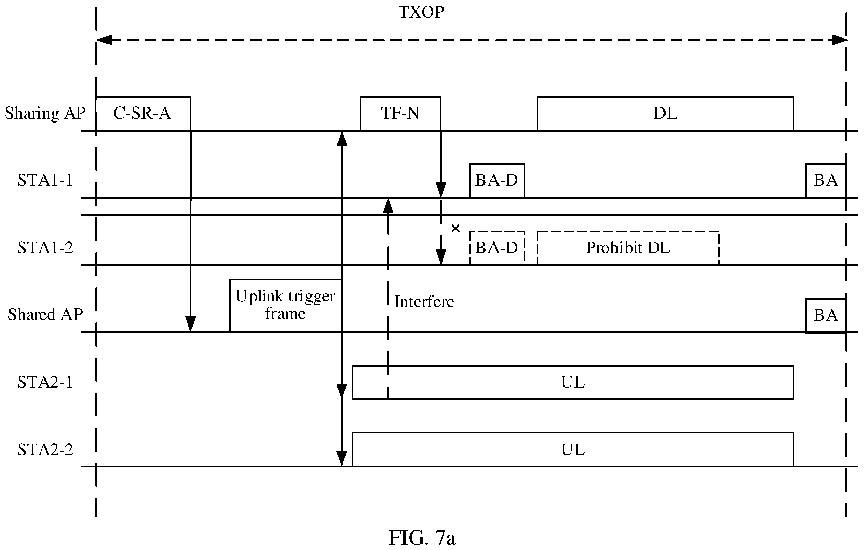

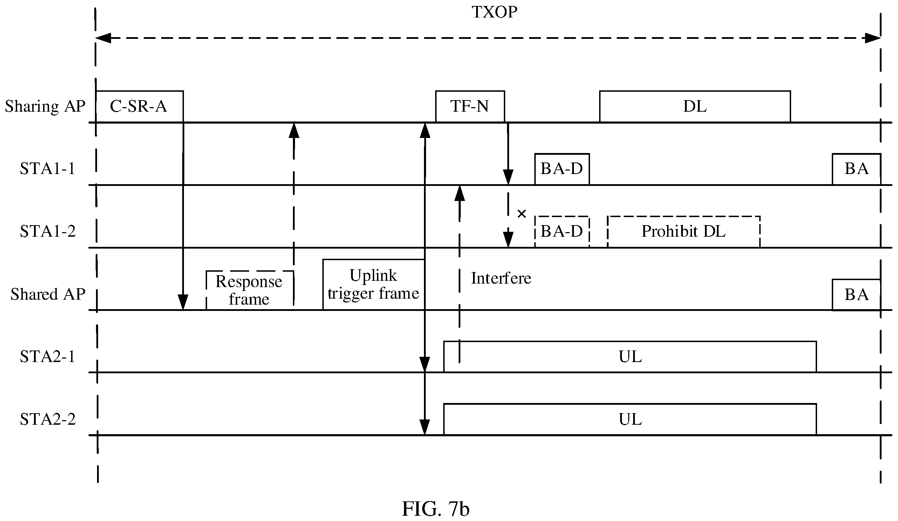

When Solution 2 is combined with optional manner 2, schematic diagrams of frame interaction between APs and STAs are shown in FIG. 7a and FIG. 7b. FIG. 7a and FIG. 7b show examples of frame interaction within a TXOP. FIG. 7a shows coordinated transmission in a fixed mode, and FIG. 7b shows coordinated transmission in a flexible mode. The following describes frame interaction in FIG. 7a and FIG. 7b. Unless otherwise specified, the described frame interaction is applicable to both FIG. 7a and FIG. 7b. When there is a difference between frame interactions, whether it is a step in FIG. 7a or a step in FIG. 7b may be specified.

Assuming that STAs currently scheduled by the sharing AP are represented by STA1-1 and STA1-2, STAs currently scheduled by the shared AP are represented by STA2-1 and STA2-2. For operations performed by STA1-1 and STA1-2, refer to the operations performed by the first STA. For operations performed by STA2-1 and STA2-2, refer to the operations performed by the second STA.
1. The sharing AP sends a C-SR-A frame to the shared AP, and correspondingly, the shared AP receives the C-SR-A frame from the sharing AP.

In the fixed mode, as shown in FIG. 7a, for this step, refer to S500. The C-SR-A frame is used to indicate that a transmission direction of the shared AP during the coordinated transmission is uplink. Optionally, the C-SR-A frame is further used to indicate that a transmission direction of the sharing AP during the coordinated transmission is downlink.

In the flexible mode, as shown in FIG. 7b, for this step, refer to S500-1. The C-SR-A frame is used to indicate a transmission direction selected by the shared AP during the coordinated transmission. Optionally, the C-SR-A frame may further be used to indicate that a transmission direction of the sharing AP during the coordinated transmission is downlink. In this case, the shared AP may further return a response frame to the sharing AP, and correspondingly, the sharing AP receives the response frame from the shared AP. The response frame is used to indicate that the transmission direction selected by the shared AP during the coordinated transmission is uplink. It may be figured out, if the response frame indicates that the transmission direction selected by the shared AP during the coordinated transmission is downlink, the sharing AP does not perform interference detection. To be specific, only when the response frame indicates that the transmission direction selected by the shared AP during the coordinated transmission is uplink, the sharing AP performs interference detection, that is, performs step 2 below.

2. The shared AP sends an uplink trigger frame to STA2-1, STA2-2, and the sharing AP. The uplink trigger frame is used to schedule uplink transmission. STA2-1 and STA2-2 receive the uplink trigger frame from the shared AP. The sharing AP may also receive the uplink trigger frame from the shared AP.

As shown in FIG. 7a, in the fixed mode, the shared AP may send the uplink trigger frame after an SIFS after receiving the C-SR-A frame.

As shown in FIG. 7b, in the flexible mode, the shared AP may send the uplink trigger frame after an SIFS after sending the response frame.

3. The sharing AP sends a first frame to STA1-1 and STA1-2, where the first frame is represented by TF-N. In addition, after receiving the uplink trigger frame, STA2-1 and STA2-2 send an uplink (UL) data frame to the shared AP on a scheduled RU.

The first frame sent by the sharing AP to STA1-2 indicates STA1-2 to use the first RU when replying to the first frame. Similarly, the first frame sent by the sharing AP to STA1-2 indicates STA1-1 to use another RU different from the first RU when replying to the first frame. If receiving the first frame, STA1 -1 and STA1-2 separately return a first acknowledgment frame to the sharing AP on a specified RU, where the first acknowledgment frame is represented by BA-D.

The uplink trigger frame sent by the shared AP to STA2-1 indicates the first RU used for uplink transmission. The uplink trigger frame sent by the shared AP to STA2-2 indicates another RU that is different from the first RU and is used for uplink transmission.

It can be seen that, both STA1-2 and STA2-1 use the first RU, and STA1-2 and STA2-1 reuse the first RU.

The sharing AP may send the first frame to STA1 -1 and STA1-2 after an SIFS after receiving the uplink trigger frame from the shared AP. STA2-1 and STA2-2 may send the uplink data frame to the shared AP after an SIFS after receiving the uplink trigger frame.

Because the sharing AP sends the first frame only after receiving the uplink trigger frame from the shared AP, there is an intersection between STA2-1 and STA2-2 and the first frame during the uplink transmission. On a same RU, the UL data frame may cause interference to the first frame. For example, STA1 -2 receives the first frame from the sharing AP on the first RU, and STA2-1 sends the UL data frame to the shared AP on the first RU. STA1-2 may be interfered with the UL data frame sent by STA2-1, and consequently cannot successfully receive the first frame and does not return the first acknowledgment frame (BA-D) to the sharing AP.

4. STA1-1 returns the first acknowledgment frame (BA-D frame) to the sharing AP, and the sharing AP receives the first acknowledgment frame (BA-D frame) returned by STA1-1, and determines that an RU corresponding to STA1-1 is not interfered. If the sharing AP does not receive the BA-D frame returned by STA1-2, the shared AP determines that the first RU is an interference RU.

5. The sharing AP prohibits from using a sub-channel on which the interference RU is located to perform downlink transmission, and the sharing AP performs downlink transmission on a sub-channel on which a non-interfered RU is located.

For this step, refer to S502* in Solution 2.

For example, the sharing AP determines that the first RU is an interference RU, and prohibits downlink transmission performed on the sub-channel on which the first RU is located, that is, the sharing AP may not send a downlink data frame to STA1-2 on the first RU. The sharing AP sends the downlink data frame to STA1-1 on a sub-channel on which an RU corresponding to STA1-1 is located.

In this way, when STA2-1 sends the uplink data frame to the shared AP, because downlink transmission by the sharing AP is not performed on the sub-channel on which the first RU is located, sending of the uplink data frame by STA2-1 may not be interfered.

After receiving the DL data frame, STA1-1 may further return an acknowledgment (BA) frame to the sharing AP.

After receiving the UL data frame, the shared AP further returns an acknowledgment (BA) frame to STA2-1 and STA2-2.

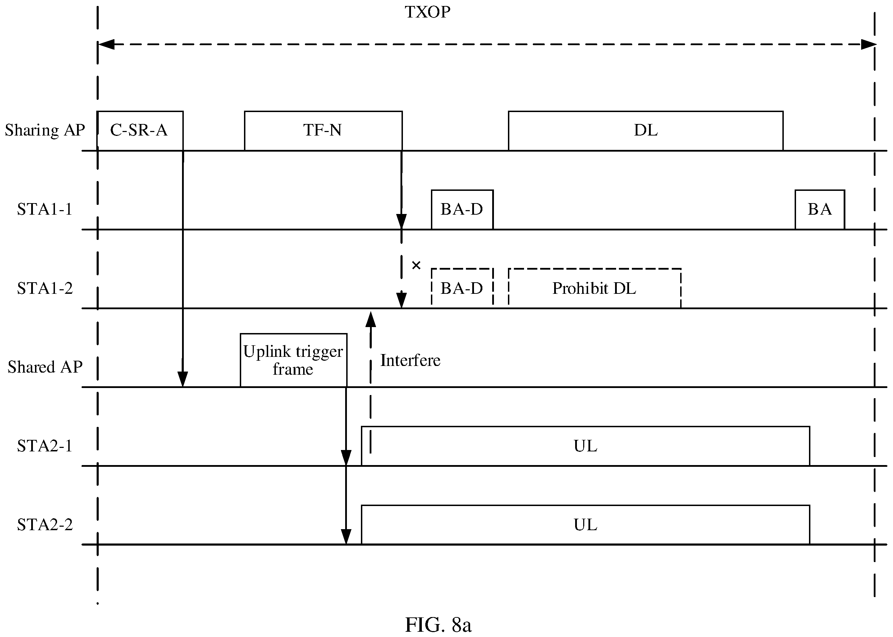

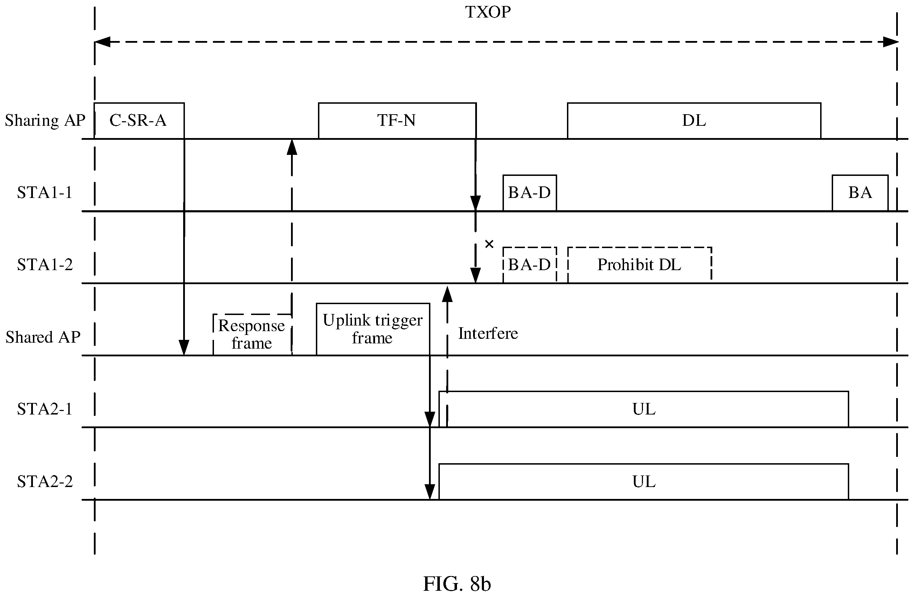

When Solution 2 is combined with optional manner 3, schematic diagrams of frame interaction between APs and STAs are shown in FIG. 8a and FIG. 8b. FIG. 8a and FIG. 8b show examples of frame interaction within a TXOP. FIG. 8a shows a fixed mode for coordinated transmission, and FIG. 8b shows a flexible mode for coordinated transmission. The following describes frame interaction in FIG. 8a and FIG. 8b. Unless otherwise specified, the described frame interaction is applicable to both FIG. 8a and FIG. 8b. When there is a difference between frame interactions, whether it is a step in FIG. 8a or a step in FIG. 8b may be specified.

Assuming that STAs currently scheduled by the sharing AP are represented by STA1-1 and STA1-2, STAs currently scheduled by the shared AP are represented by STA2-1 and STA2-2. For operations performed by STA1-1 and STA1-2, refer to the operations performed by the first STA. For operations performed by STA2-1 and STA2-2, refer to the operations performed by the second STA.
(1) The sharing AP sends a C-SR-Aframe to the shared AP, and correspondingly, the shared AP receives the C-SR-A frame from the sharing AP.

In the fixed mode, as shown in FIG. 8a, for this step, refer to S500. The C-SR-Aframe is used to indicate that a transmission direction of the shared AP during the coordinated transmission is uplink. Optionally, the C-SR-A frame is further used to indicate that a transmission direction of the sharing AP during the coordinated transmission is downlink.

In the flexible mode, as shown in FIG. 8a, for this step, refer to S500-1. The C-SR-A frame is used to indicate a transmission direction selected by the shared AP during the coordinated transmission. Optionally, the C-SR-A frame may further be used to indicate that a transmission direction of the sharing AP during the coordinated transmission is downlink. In this case, the shared AP may further return a response frame to the sharing AP, and correspondingly, the sharing AP receives the response frame from the shared AP. The response frame is used to indicate that the transmission direction selected by the shared AP during the coordinated transmission is uplink. It may be figured out, if the response frame indicates that the transmission direction selected by the shared AP during the coordinated transmission is downlink, the sharing AP does not perform interference detection. To be specific, only when the response frame indicates that the transmission direction selected by the shared AP during the coordinated transmission is uplink, the sharing AP performs interference detection, that is, performs step (2) below.

(2) The shared AP sends an uplink trigger frame to STA2-1 and STA2-2. The uplink trigger frame is used to schedule uplink transmission. Correspondingly, STA2-1 and STA2-2 receive the uplink trigger frame from the shared AP.

In addition, the sharing AP sends a first frame to STA1-1 and STA1-2, where the first frame is represented by TF-N.

In addition, after receiving the uplink trigger frame, STA2-1 and STA2-2 send an uplink (UL) data frame to the shared AP on a corresponding RU.

The first frame sent by the sharing AP to STA1-2 indicates STA1-2 to use the first RU when replying to the first frame. Similarly, the first frame sent by the sharing AP to STA1-1 indicates STA1-1 to use another RU different from the first RU when replying to the first frame. If receiving the first frame, STA1-1 and STA1-2 separately return a first acknowledgment frame to the sharing AP, where the first acknowledgment frame is represented by BA-D.

The uplink trigger frame sent by the shared AP to STA2-1 indicates the first RU used for uplink transmission. The uplink trigger frame sent by the shared AP to STA2-2 indicates another RU that is different from the first RU and is used for uplink transmission.

It can be seen that, both STA1-2 and STA2-1 use the first RU, and STA1-2 and STA2-1 reuse the first RU.

As shown in FIG. 8a, in the fixed mode, the sharing AP sends the first frame after an SIFS after sending the C-SR-A frame. The shared AP may send the uplink trigger frame after an SIFS after receiving the C-SR-A frame.

As shown in FIG. 8b, in the flexible mode, the shared AP sends the uplink trigger frame after an SIFS after sending the response frame, and the sharing AP sends the first frame after an SIFS after receiving the response frame.

STA2-1 and STA2-2 may send the uplink data frame to the shared AP after an SIFS after receiving the uplink trigger frame. The length of the first frame is greater than a sum of the length of the uplink trigger frame and the length of the SIFS. When STA2-1 and STA2-2 perform uplink transmission, there is an intersection with sending of the first frame. On a same RU, the UL data frame may cause interference to the first frame. For example, STA1 -2 receives the first frame from the sharing AP on the first RU, and STA2-1 sends the UL data frame to the shared AP on the first RU. STA1-2 is interfered with the UL data frame sent by STA2-1, and consequently cannot successfully receive the first frame and does not return the first acknowledgment frame (BA-D) to the sharing AP.

(3) STA1-1 returns the first acknowledgment frame (BA-D frame) to the sharing AP, and the sharing AP receives the first acknowledgment frame (BA-D frame) returned by STA1-1, and determines that an RU corresponding to STA1-1 is not interfered. If the sharing AP does not receive the BA-D frame returned by STA1-2, the shared AP determines that the first RU is an interference RU.

(4) The sharing AP prohibits from using a sub-channel on which the interference RU is located to perform downlink transmission, and the sharing AP performs downlink transmission on a sub-channel on which a non-interfered RU is located.

For this step, refer to S502* in Solution 2.

For example, the sharing AP determines that the first RU is an interference RU, and prohibits downlink transmission performed on the sub-channel on which the first RU is located, that is, the sharing AP may not send a downlink data frame to STA1-2 on the first RU. The sharing AP sends the downlink data frame to STA1-1 on a sub-channel on which an RU corresponding to STA1-1 is located.

In this way, when STA2-1 sends the uplink data frame to the shared AP, because downlink transmission by the sharing AP is not performed on the sub-channel on which the first RU is located, sending of the uplink data frame by STA2-1 may not be interfered.

After receiving the DL data frame, STA1-1 may further return an acknowledgment (BA) frame to the sharing AP.

After receiving the UL data frame, the shared AP further returns an acknowledgment (BA) frame to STA2-1 and STA2-2.

It may be understood that, in FIG. 6a, FIG. 6b, FIG. 7a, FIG. 7b, FIG. 8a, and FIG. 8b, frame interaction is illustrated by using an example in which the sharing AP and the shared AP schedule two STAs. In actual application, more STAs may be scheduled, and the method is similar.

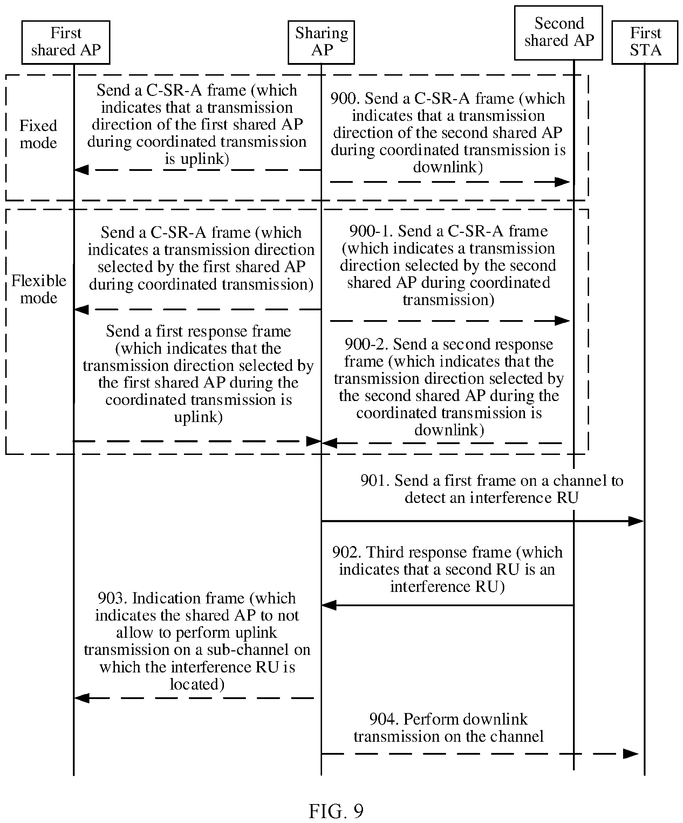

In the embodiment of FIG. 5, the coordinated transmission method for a wireless local area network provided in embodiments of this application is described in a background of performing coordinated transmission by the sharing AP and one shared AP on the channel. It may be understood that, when the sharing AP and the plurality of shared APs perform coordinated transmission on the channel, if the transmission direction of the plurality of shared APs during the coordinated transmission is uplink, an operation performed by each shared AP may be described as an operation performed by the shared AP in the embodiment in FIG. 5. However, if in the plurality of shared APs, the transmission direction of some shared APs during the coordinated transmission is uplink, and the transmission direction of some shared APs during the coordinated transmission is downlink, a downlink shared AP may also be interfered by an uplink shared AP. Based on this, embodiments of this application provide a coordinated transmission method for a wireless local area network. A specific procedure is shown in FIG. 9.

S901: A sharing AP sends a first frame to a first STA on a channel when a condition is met, to detect an interference RU.

The sharing AP is associated with the first STA, and the sharing AP is a serving AP of the first STA. The sharing AP may schedule the first STA on the channel, and the sharing AP may allocate one or more RUs on the channel to the first STA. For example, the sharing AP allocates a first RU on the channel to the first STA.

The channel is a channel on which the sharing AP and the plurality of shared APs perform coordinated transmission. Using two shared APs as an example, it is assumed that the sharing AP and a first shared AP and a second shared AP perform coordinated transmission on the channel.

The interference RU means that the sharing AP may be interfered when sending a downlink data frame to the first STA on the RU.

The condition may be that the sharing AP is to perform downlink transmission on the channel. To be specific, when the sharing AP is to perform downlink transmission on the channel, the sharing AP sends the first frame to the first STA on the channel to detect the interference RU.

The first frame includes an indication of using the first RU when the first STA replies to the first frame.

For details that are not described in this step and beneficial effects that can be implemented, refer to the description of S501. Details are not described herein again.

Based on S901, embodiments of this application provide some optional implementations.

The condition in S901 may alternatively be that: the sharing AP is to perform downlink transmission on the channel, and the first shared AP is to perform uplink transmission on the channel and the second shared AP is to perform downlink transmission on the channel. That is, the shared AP has both uplink and downlink transmission directions.

For a method in which the sharing AP negotiates a coordinated transmission direction with the first shared AP, refer to the method in which sharing AP negotiates a coordinated transmission direction with the shared AP in the embodiment in FIG. 5. The first shared AP herein is the shared AP in the embodiment in FIG. 5.

A method in which the sharing AP negotiates a coordinated transmission direction with the first shared AP is similar to the method in which sharing AP negotiates a coordinated transmission direction with the shared AP in the embodiment in FIG. 5, and may also include two modes, namely, a fixed mode and a flexible mode. Details are described below.

Fixed mode: The sharing AP specifies a transmission direction of the second shared AP during coordinated transmission.

In the fixed mode, before S901, the method further includes S900.

S900: The sharing AP sends a C-SR-A frame to the second shared AP, and correspondingly, the second shared AP receives the C-SR-A frame from the sharing AP.

The C-SR-A frame indicates that a transmission direction of the second shared AP during the coordinated transmission is downlink. Optionally, the C-SR-A frame is further used to indicate that a transmission direction of the sharing AP during the coordinated transmission is downlink. The second shared AP may determine, based on the C-SR-A frame, respective transmission directions of the sharing AP and the second shared AP during the coordinated transmission. However, it is to be noted that, both the transmission direction of the second shared AP and the transmission direction of the sharing AP are downlink, and the second shared AP needs to learn that the transmission direction of the first shared AP is uplink, to determine to perform interference detection. The sharing AP may indicate, through the C-SR-A frame, both the transmission direction of the first shared AP and the transmission direction of the second shared AP, or may indicate, through one field of the C-SR-A frame, that the second shared AP needs to perform interference detection.

Flexible mode: The second shared AP determines a transmission direction during the coordinated transmission.

In the flexible mode, before S901, the method further includes S900-1 and 5900-2.

S900-1: The sharing AP sends a C-SR-A frame to the second shared AP, and correspondingly, the second shared AP receives the C-SR-A frame from the sharing AP.

The C-SR-A frame indicates a transmission direction selected by the second shared AP during the coordinated transmission. Optionally, the C-SR-A frame may further be used to indicate that a transmission direction of the sharing AP during the coordinated transmission is downlink. The second shared AP may determine, based on the C-SR-A frame, that the transmission direction of the sharing AP during the coordinated transmission is downlink.

S900-2: The second shared AP sends a response frame to the sharing AP, where the response frame is denoted as a second response frame, and correspondingly, the sharing AP receives the second response frame from the second shared AP.

The second response frame is used to indicate that the transmission direction selected by the second shared AP during the coordinated transmission is downlink.

In the flexible mode, transmission directions selected by the first shared AP and the second shared AP during the coordinated transmission are not sensed by each other, but are sensed by the sharing AP. Therefore, the sharing AP may further send an indication frame to the second shared AP, where the indication frame is denoted as indic frame, and the indication frame is used to indicate whether the shared AP needs to perform interference detection. Because the second shared AP cannot acquire a transmission direction of another shared AP that performs coordinated transmission, the second shared AP cannot determine whether interference detection needs to be performed. Optionally, the sharing AP may also indicate the first shared AP whether interference detection needs to be performed.

In this embodiment of this application, a specified or negotiated transmission direction during the coordinated transmission may be a transmission direction in one or more TXOPs, and is generally a transmission direction in one TXOP.

The following describes an optional implementation of detecting the interference RU in S901. For differentiation, the optional implementation of detecting the interference RU in S901 is denoted as optional implementation 4 herein.

In optional manner 4, before S901, the sharing AP may further indicate the first shared AP to send a second frame to a second STA, and the sharing AP may further indicate the second shared AP to send a third frame to a third STA.

The second STA is a STA associated with or currently scheduled by the first shared AP. The second STA is a STA to which the first shared AP is to trigger uplink transmission on the first RU. That is, the first shared AP is to schedule the second STA on the first RU. The first STA and the second STA reuse the first RU.

The third STA is a STA associated with or currently scheduled by the second shared AP. The third STA is a STA to which the second shared AP is to trigger uplink transmission on a second RU. That is, the second shared AP is to schedule the third STA on the second RU. Assuming that the first shared AP is further associated with a fourth STA, before S901, the sharing AP may further indicate the first shared AP to send the second frame to the fourth STA. The first shared AP is to schedule the fourth STA on the second RU. The third STA and the fourth STA reuse the second RU.

A format and a function of the second frame are similar to those of the first frame. The second frame is used to indicate the second STA to return a second acknowledgment frame to the first shared AP after receiving the second frame. For a manner of determining, by the sharing AP, whether the first RU is an interference RU and other details that are not described, refer to the description in optional manner 1. Details are not described herein again.

A format and a function of the third frame are similar to those of the first frame. The third frame is used to indicate the third STA to return a third acknowledgment frame to the second shared AP after receiving the third frame. That the second shared AP receives the third acknowledgment frame indicates that the third STA has received the third frame. Sending moment of the second frame, the third frame, and the first frame are the same, and a length of the third frame is the same as the length of the first frame and is greater than the length of the second frame. Generally, the length of the third frame and the length of the first frame are greater than a sum of the length of the second frame and the length of the SIFS. In this way, when the third frame and the second frame are simultaneously sent, and the fourth STA receives the second frame, the third frame is not completely sent. After receiving the second frame, the fourth STA returns a second acknowledgment frame (BA-D) to the first shared AP according to the second frame. A transmission direction of the second acknowledgment frame is uplink. In this case, a second acknowledgment frame that is transmitted in an uplink direction and that is returned by the fourth STA to the first shared AP may exist on the second RU. On the second RU, there is an intersection in time domain and frequency domain between the second acknowledgment frame in the uplink direction and the third frame in a downlink direction. In this case, the second acknowledgment frame in the uplink direction may cause interference to the third frame in the downlink direction. For example, if an RSSI of receiving the second acknowledgment frame by the third STA is greater than a maximum acceptable interference level of receiving the third frame by the third STA, the second acknowledgment frame may cause interference to receiving of the third frame by the third STA. When interference is caused, the third STA cannot receive the third frame, and the third STA does not return a third acknowledgment frame to the second shared AP on the second RU. In this case, the second shared AP cannot receive the third acknowledgment frame returned by the third STA, and the second shared AP may determine that a second RU on which the third acknowledgment frame returned by the third STA is not received is an interference RU. On the contrary, if the second acknowledgment frame in the uplink direction does not cause interference to the third frame, the third STA can receive the third frame. In this case, the third STA returns the third acknowledgment frame to the second shared AP, and the second shared AP determines that the second RU is not an interference RU.

In optional manner 4, the sharing AP indicates, through the C-SR-A frame sent by the sharing AP to the first shared AP, the first shared AP to send the second frame to the second STA. For detailed descriptions herein, refer to corresponding descriptions in optional manner 1, where the first shared AP may be the shared AP in optional manner 1. Details are not described herein again.

In optional manner 4, the sharing AP indicates, through the C-SR-A frame sent by the sharing AP to the second shared AP in S900 or S900-1, the second shared AP to send the third frame to the third STA. If the C-SR-A frame sent by the sharing AP to the second shared AP in S900 is used to indicate the second shared AP to send the third frame to the third STA, the sharing AP may send the first frame after an SIFS after the C-SR-A frame is sent, and the second shared AP sends the third frame after the SIFS after the C-SR-A frame is received, so that the sending moment of the first frame is the same as the sending moment of the third frame. If in S900-1, the C-SR-Aframe sent by the sharing AP to the second shared AP is used to indicate the second shared AP to send the third frame to the third STA, in S900-2, the sharing AP sends the third frame after the SIFS after receiving the second response frame returned by the second shared AP, and the second shared AP sends the third frame after an SIFS after sending the second response frame, so that the sending moment of the first frame is the same as the sending moment of the third frame.

After S901, the method further includes S902.

S902: The second shared AP sends a response frame to the sharing AP, where the response frame is denoted as a third response frame, and correspondingly, the sharing AP receives the third response frame from the second shared AP.

The third response frame is used to indicate that the second RU is an interference RU. The shared AP determines the second RU as an interference RU based on the third response frame. Finally, the first RU and the second RU are determined as interference RUs with reference to detection performed by the sharing AP.

Certainly, the second RU may not be an interference RU, and the sharing AP finally determines that the first RU is an interference RU.

It may be understood that, all the sharing AP, the first shared AP, and the second shared AP may be associated with more STAs. When the transmission direction of the sharing AP is downlink, the sharing AP and the second shared AP whose transmission direction is downlink detect interference from the first shared AP whose transmission direction is uplink. The second shared AP sends an interference detection result to the sharing AP, and the sharing AP obtains a final interference RU with reference to the interference detection result detected by the sharing AP.

After the sharing AP obtains a final interference detection result, the method further includes S903 and S904.

S903: The sharing AP sends an indication frame to the first shared AP in response to receiving the third response frame. Correspondingly, the first shared AP receives the indication frame from the sharing AP. The indication frame is used to indicate that the first shared AP is not allowed to perform uplink transmission on a sub-channel on which the interference RU is located.

For details of this step, refer to S502.

S904: The sharing AP performs downlink transmission on a channel.

After indicating the first shared AP to prohibit performing uplink transmission on the sub-channel on which the interference RU is located, the sharing AP may perform downlink transmission on the entire channel without being interfered with uplink transmission performed by a first shared STA, and the second shared AP performs downlink transmission on the entire channel without being interfered with uplink transmission performed by the first shared STA.

Based on the description of the embodiment in FIG. 9, the embodiment in FIG. 9 is further described in detail below with reference to a specific application scenario.

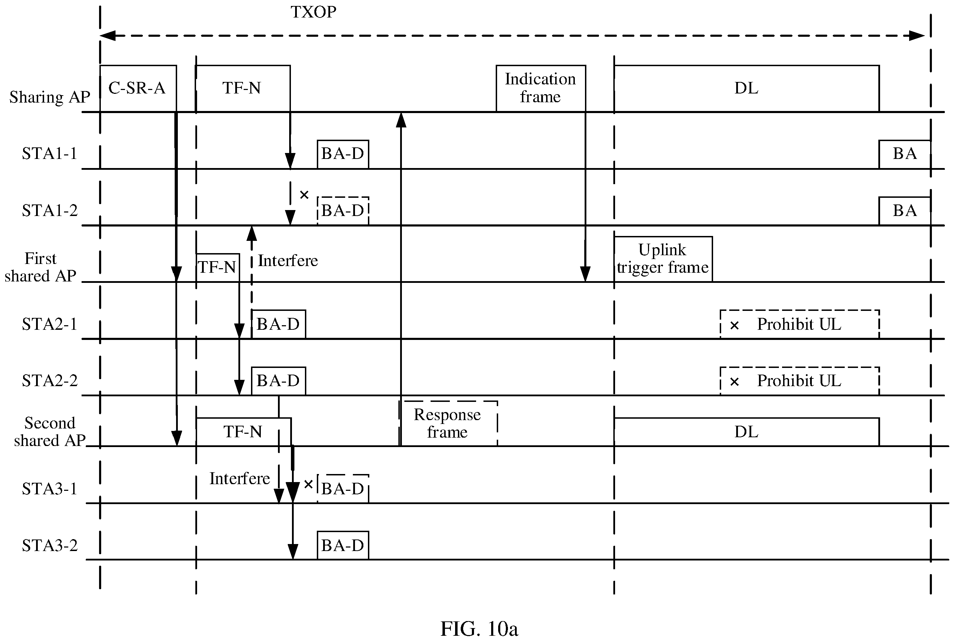

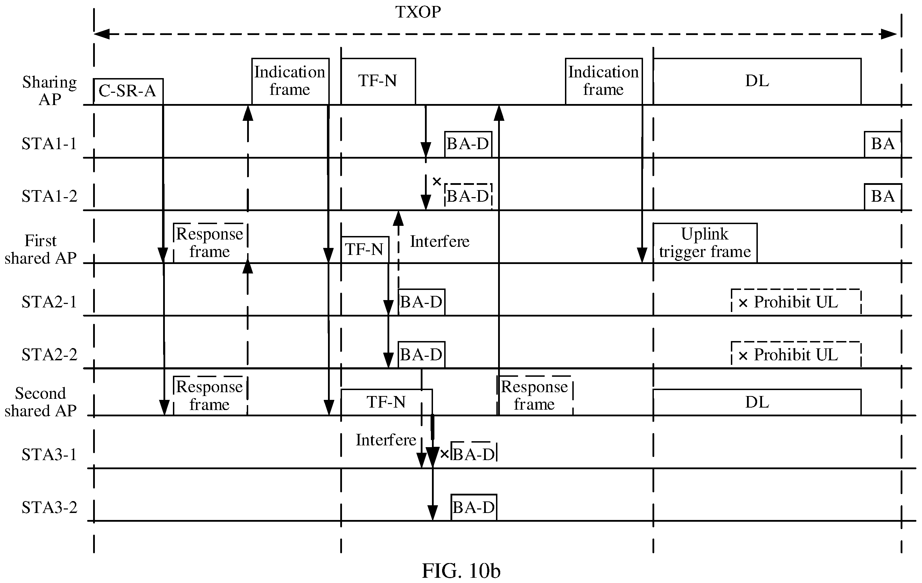

FIG. 10a and FIG. 10b are schematic diagrams of frame interaction between each AP and each STA. FIG. 10a and FIG. 10b show examples of frame interaction within a TXOP. FIG. 10a shows coordinated transmission in a fixed mode, and FIG. 10b shows coordinated transmission in a flexible mode. The following describes frame interaction in FIG. 10a and FIG. 10b. Unless otherwise specified, the described frame interaction is applicable to both FIG. 10a and FIG. 10b. When there is a difference between frame interactions, whether it is a step in FIG. 10a or a step in FIG. 10b may be specified. Both the first shared AP and the second shared AP shown in FIG. 10a perform coordinated transmission in the fixed mode, and both the first shared AP and the second shared AP shown in FIG. 10b perform coordinated transmission in the flexible mode. Certainly, FIG. 10a and FIG. 10b are merely examples. Coordinated transmission modes of the first shared AP and the second shared AP may be different as long as the transmission direction of the shared AP includes uplink and downlink. For coordinated transmission in a fixed mode, refer to the description in FIG. 10a. For coordinated transmission in a flexible mode, refer to the description in FIG. 10b.

Assuming that STAs currently scheduled by the sharing AP are represented by STA1-1 and STA1-2, STAs currently scheduled by the first shared AP are represented by STA2-1 and STA2-2, and STAs currently scheduled by the second shared AP are represented by STA3-1 and STA3-2.

For operations performed by STA1-1 and STA1-2, refer to the operations performed by the first STA in the embodiment of FIG. 9. For operations performed by STA2-1 and STA2-2, refer to the operations performed by the second STAin the embodiment of FIG. 9. For operations performed by STA3-1 and STA3-2, refer to the operations performed by the third STAin the embodiment of FIG. 9.
(1) The sharing AP respectively sends a C-SR-A frame to the first shared AP and the second shared AP, and correspondingly, the first shared AP and the second shared AP respectively receive the C-SR-A frame from the sharing AP.

In the fixed mode, as shown in FIG. 10a, a C-SR-A frame sent by the sharing AP to the first shared AP is used to indicate that a transmission direction of the first shared AP during the coordinated transmission is uplink, and a C-SR-A frame sent to the second shared AP is used to indicate that a transmission direction of the second shared AP during the coordinated transmission is downlink.

To be specific, the sharing AP indicates, to the first shared AP and the second shared AP through the C-SR-A frame, that a transmission direction of the sharing AP during the coordinated transmission is downlink. In this case, if the sharing AP indicates that the transmission direction of the shared AP during the coordinated transmission is uplink, both the sharing AP and the shared AP know that interference detection needs to be performed. If the sharing AP indicates that the transmission directions of the first shared AP and the second shared AP during the coordinated transmission are downlink, the sharing AP knows that there is no need to perform coordinated transmission, and the sharing AP needs to indicate, through the C-SR-A frame, that the shared AP does not need to perform interference detection. If the sharing AP indicates that the transmission direction of the first shared AP during the coordinated transmission is uplink, and the transmission direction of the second shared AP during the coordinated transmission is uplink, the sharing AP knows that interference detection needs to be performed, and the first shared AP and the second shared AP need to be notified, by using the C-SR-A frame, that interference detection needs to be performed, that is, the C-SR-A frame is used to indicate whether the first shared AP needs to send the second frame, and the C-SR-A frame is used to indicate whether the second shared AP needs to send the third frame.

A manner of performing interference detection is related to the transmission direction. The sharing AP sends the first frame to perform interference detection, the first shared AP whose transmission direction is uplink sends the second frame to perform interference detection, and the second shared AP whose transmission direction is downlink sends the third frame to perform interference detection.

In the flexible mode, as shown in FIG. 10b, a C-SR-A frame sent by the sharing AP to the first shared AP indicates the first shared AP to select a transmission direction during the coordinated transmission. The first shared AP returns a response frame to the sharing AP, where the response frame indicates that the transmission direction selected by the first shared AP during the coordinated transmission is uplink. A C-SR-A frame sent from the sharing AP to the second shared AP indicates the second shared AP to select a transmission direction during the coordinated transmission is downlink. The second shared AP returns a response frame to the sharing AP, where the response frame indicates that the transmission direction selected by the second shared AP during the coordinated transmission is downlink.

In the flexible mode, transmission directions selected by the first shared AP and the second shared AP during the coordinated transmission are not sensed by each other, but are sensed by the sharing AP. Therefore, the sharing AP may further send an indication frame to the second shared AP, where the indication frame is denoted as indic frame, and the indication frame is used to indicate whether the shared AP needs to perform interference detection. Because the second shared AP cannot acquire a transmission direction of another shared AP that performs coordinated transmission, the second shared AP cannot determine whether interference detection needs to be performed. Optionally, the sharing AP may also indicate the first shared AP whether interference detection needs to be performed. The first shared AP may also determine whether to perform interference detection by itself. For example, the first shared AP learns, according to the C-SR-A frame, that the transmission direction of the sharing AP is downlink, knows that the transmission direction of the first shared AP is uplink, and may determine that interference detection needs to be performed.

In a scenario in which one sharing AP and a plurality of shared APs perform coordinated transmission in a flexible mode, the sharing AP receives a response frame from each shared AP, and learns a transmission direction selected by each shared AP during coordinated transmission. The sharing AP performs interference detection only when the transmission directions selected by the plurality of shared APs include both uplink and downlink. When the transmission directions selected by the plurality of shared APs are consistent with a transmission direction of the sharing AP, the sharing AP does not perform interference detection.

In a scenario in which one sharing AP and a plurality of shared APs perform coordinated transmission, different shared APs may perform coordinated transmission in different modes. For example, the first shared AP performs coordinated transmission in a fixed mode, and the second shared AP performs coordinated transmission in a flexible mode. The sharing AP indicates, to the first shared AP, that a transmission direction during coordinated transmission is uplink. The second shared AP uses the flexible mode, and the second shared AP indicates, to the sharing AP through the response frame, that the selected transmission direction is downlink. Therefore, when the sharing AP learns that the transmission directions selected by the plurality of shared APs include both uplink and downlink, the sharing AP determines and notifies the shared AP to perform interference detection.

Regardless of the fixed mode or the flexible mode, optionally, the C-SR-A frame sent to the first shared AP and the second shared AP may further indicate that the transmission direction of the sharing AP during the coordinated transmission is downlink. The C-SR-A frame sent by the sharing AP to the first shared AP may further be used to indicate the first shared AP to send the second frame. The C-SR-A frame sent by the sharing AP to the second shared AP may further be used to indicate the second shared AP to send the third frame.

(2) The sharing AP sends a first frame to STA1-1 and STA1-2, where the first frame is represented by TF-N. The first shared AP sends a second frame to STA2-1 and STA2-2, where the second frame is represented by TF-N. The second shared AP sends a third frame to STA3-1 and STA3-2, where the third frame is represented by TF-N.

The shared AP respectively indicates, through the first frame, RUs used when STA1-1 and STA1-2 reply to the first frame. For example, the first frame sent by the sharing AP to STA1-2 indicates STA1-2 to use the first RU when replying to the first frame.

The first shared AP respectively indicates, through the second frame, RUs used when STA2-1 and STA2-2 reply to the second frame. For example, the second frame sent by the first shared AP to STA2-1 indicates STA2-1 to use the first RU when replying to the second frame. For example, the second frame sent by the first shared AP to STA2-2 indicates STA2-2 to use the second RU when replying to the second frame.

The second shared AP respectively indicates, through the third frame, RUs used when STA3-1 and STA3-2 reply to the second frame. For example, the third frame sent by the second shared AP to STA3-1 indicates STA3-1 to use the second RU when replying to the third frame.

STA1-2 and STA2-1 reuse the first RU. STA2-2 and STA3-1 reuse the second RU.

The sending moments of the first frame, the second frame, and the third frame may be aligned.

As shown in FIG. 10a, the sharing AP may send the first frame after an SIFS after sending the C-SR-A frame, the first shared AP may send the second frame after an SIFS after receiving the C-SR-A frame, and the second shared AP may send the third frame after an SIFS after receiving the C-SR-A frame.

As shown in FIG. 10b, the sharing AP may send the first frame after an SIFS after sending the indication frame, the first shared AP may send the second frame after an SIFS after receiving the indication frame, and the second shared AP may send the third frame after an SIFS after receiving the indication frame.

The length of the first frame is the same as the length of the third frame, and the length of the first frame and the length of the third frame are greater than a sum of the length of the second frame and the length of the SIFS.

(3) After receiving the second frame, STA2-1 and STA2-2 return a second acknowledgment frame to the shared AP after an SIFS, where the second acknowledgment frame is represented by BA-D.

When STA2-1 and STA2-2 return the second acknowledgment frame BA-D, there is an intersection with sending of the first frame. On a same RU, the BA-D frame may cause interference to the first frame. For example, STA1-2 cannot successfully receive the first frame due to interference from the second acknowledgment frame BAD returned by STA2-1. Because STA1-2 does not receive the first frame, STA1-2 cannot return the first acknowledgment frame (BA-D frame) to the sharing AP.

When STA2-1 and STA2-2 return the second acknowledgment frame BA-D, there is an intersection with sending of the third frame. On a same RU, the BA-D frame may cause interference to the third frame. For example, STA3-1 cannot successfully receive the third frame due to interference from the second acknowledgment frame BAD returned by STA2-2. Because STA3-1 does not receive the third frame, STA3-1 cannot return a third acknowledgment frame (BA-D frame) to the second shared AP.

(4) STA1-1 returns the first acknowledgment frame (BA-D frame) to the sharing AP, and the sharing AP receives the first acknowledgment frame (BA-D frame) returned by STA1-1, and determines that an RU corresponding to STA1-1 is not interfered. If the sharing AP does not receive the BA-D frame returned by STA1-2, the shared AP determines that the first RU is an interference RU.

(5) The second shared AP returns a third response frame to the sharing AP, and correspondingly, the sharing AP receives the third response frame from the second shared AP.

The third response frame is used to indicate that the second RU is an interference RU. The shared AP determines the second RU as an interference RU based on the third response frame. Finally, the sharing AP determines the first RU and the second RU as interference RUs with reference to step (4).

For details, refer to S902.

(6) The sharing AP sends an indication frame to the first shared AP in response to receiving the third response frame. Correspondingly, the first shared AP receives the indication frame from the sharing AP. The indication frame is used to indicate that the first shared AP is not allowed to perform uplink transmission on a sub-channel on which the interference RU is located.

Optionally, the sharing AP may also send an indication frame to the second shared AP, so that uplink and downlink transmission by the following three APs can be simultaneously triggered.

(7) The sharing AP performs downlink transmission (DL data frame). The first shared AP sends an uplink trigger frame, where the uplink trigger frame is used to schedule uplink transmission. The second shared AP performs downlink transmission (DL data frame).

The sharing AP may perform downlink transmission on STA1-1 and STA1-2. Because the sharing AP indicates the first shared AP to prohibit performing uplink transmission on a sub-channel on which the first RU is located, STA2-1 may not perform uplink transmission on the first RU. Sending of the DL data frame to STA1 -2 by the sharing AP may not be interfered with uplink transmission performed by STA2-1 on the first RU.

The second shared AP may perform downlink transmission on STA3-1 and STA3-2. Because the sharing AP indicates the first shared AP to prohibit performing uplink transmission on a sub-channel on which the second RU is located, STA2-2 may not perform uplink transmission on the second RU. Sending of the DL data frame to STA3-1 by the second shared AP may not be interfered with uplink transmission performed by STA2-2 on the second RU.

The first shared AP receives an indication frame, and prohibits, according to the indication frame, uplink transmission on the sub-channel on which the first RU is located and the sub-channel on which the second RU is located. If the first shared AP further schedules another STA and performs interference detection, an RU used by the another STA to perform uplink transmission is not an interference RU, the first shared AP may send an uplink trigger frame to the another STA. After receiving the uplink trigger frame, the another STA sends an uplink data frame to the first shared AP on a corresponding RU.

The sharing AP may send the DL data frame after an SIFS after sending the indication frame, and the shared AP may send the uplink trigger frame after an SIFS after receiving the indication frame.

(8) After receiving the DL data frame, STA1-1 and STA1-2 may further return an acknowledgment (BA) frame to the sharing AP. After receiving the DL data frame, STA3-1 and STA3-2 may further return an acknowledgment (BA) frame to the second shared AP.

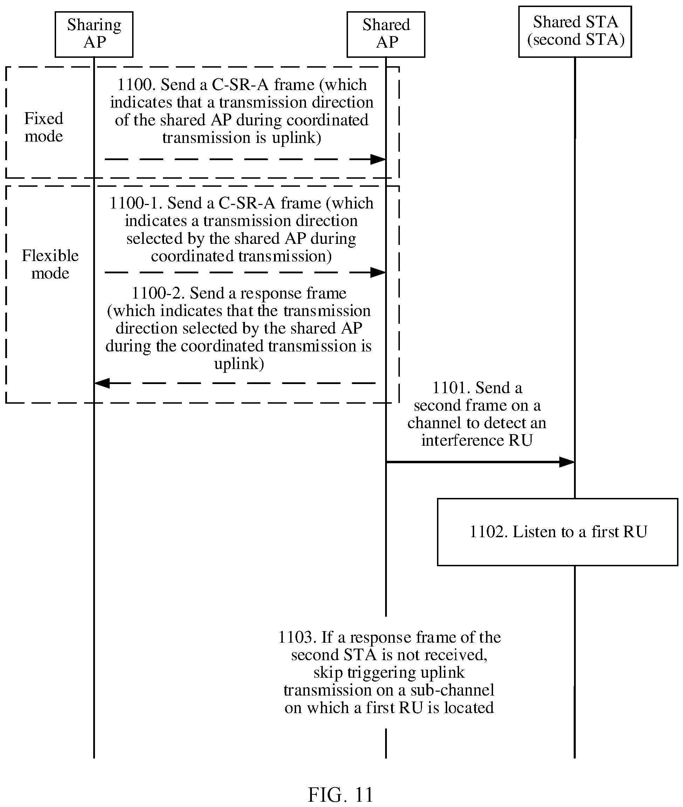

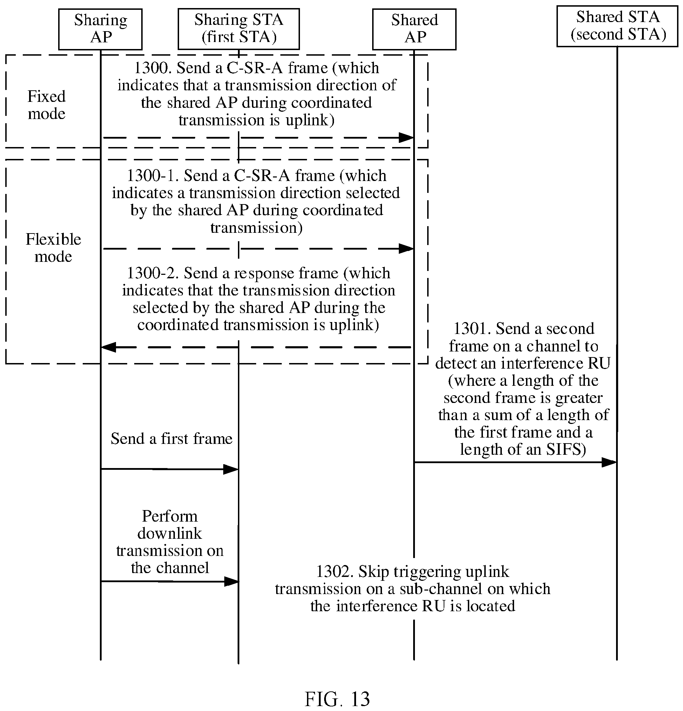

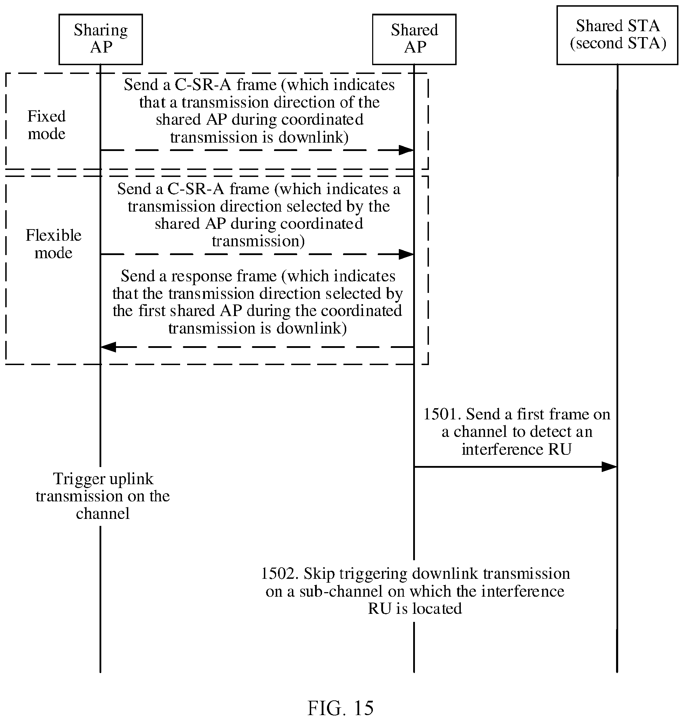

In the foregoing embodiments, the sharing AP detects or collects information about an interference RU, obtains an interference detection result, and prohibits, according to the interference detection result, downlink transmission on a sub-channel on which the interference RU is located, or indicates, according to the interference detection result, the shared AP to prohibit uplink transmission on the sub-channel on which the interference RU is located. Embodiments of this application further provide a possible design in which the shared AP detects or collects information about an interference RU, and performs interference processing. An optional embodiment of the design may be described by using the embodiment of FIG. 11, the embodiment of FIG. 13, and the embodiment of FIG. 15.

As shown in FIG. 11, a specific procedure of still another coordinated transmission method for a wireless local area network provided in embodiments of this application is described as follows:

S1101: The shared AP sends a second frame to the shared STA on a channel when a condition is met. The shared STA herein may be denoted as a second STA. Correspondingly, the second STA receives the second frame from the shared AP.

The shared AP is associated with the second STA, and the shared AP is a serving AP of the second STA. The shared AP may schedule the second STA on the channel, and the shared AP may allocate one or more RUs on the channel to the second STA. For example, the shared AP allocates a first RU on the channel to the second STA.

The channel is a channel on which the sharing AP and a shared AP perform coordinated transmission.

A condition for the shared AP to send the second frame may be that a transmission direction of the sharing AP during coordinated transmission is downlink, and a transmission direction of the shared AP during coordinated transmission is uplink.

The second frame is used to indicate the second STA to listen to the first RU. That is, a busy/idle state of the first RU is listened.

A sending moment of the second frame is the same as a sending moment of the first frame sent by the sharing AP to the sharing STA. A length of the first frame is greater than a sum of a length of the second frame and a length of an SIFS. The first frame indicates the sharing STA to use the first RU when replying to the first frame. For example, the first frame includes a first field, where the first field indicates the first STA to use the first RU when replying to the first frame. The sharing STA may be denoted as a first STA.

Both the first STA and the second STA use the first RU, and the first STA and the second STA reuse the first RU.

S 1102: After receiving the second frame, the second STA listens to the first RU according to an indication of the second frame.

Because a sending moment of the first frame is the same as a sending moment of the second frame, and a length of the first frame is greater than a sum of a length of the second frame and a length of the SIFS, the second STA listens to the first RU after receiving the second frame and after an SIFS. When the second STA listens to the first RU, the first frame is not completely sent. In this case, if the second STA detects that the first RU is occupied, it indicates that sending an uplink frame on the first RU by the second STA can cause interference to receiving a downlink frame of the sharing AP by the first STA. When the second STA detects that the first RU is not occupied or the first RU is idle, the second STA returns a response frame to the shared AP.

Optionally, the second frame may further be used to indicate a duration for which the shared STA listens to the first RU, and indicate the shared STA to return the response frame within the duration if the first RU is not occupied.

S1103: The shared AP does not trigger uplink transmission on a sub-channel on which the first RU is located when the shared AP does not receive the response frame returned by the shared STA.

The response frame is used to indicate that the first RU is not occupied.

When the shared AP does not receive the response frame returned by the shared STA, it indicates that the second STA listens and detects that the first RU is occupied, and the first RU is an interference RU.

Some optional implementations of the embodiment in FIG. 11 are described in detail below.

Before S1101, the sharing AP may further negotiate a coordinated transmission direction with the shared AP. Optionally, in embodiments of this application, a fixed mode and a flexible mode may be provided to negotiate a coordinated transmission direction. Two modes for negotiating a coordinated transmission direction may be described with reference to the embodiment of FIG. 5.

In the fixed mode, before S1101, the method further includes S1100. S 1100 is the same as S500 and may refer to the description of S500. Details are not described herein again.

In the flexible mode, before S1101, the method further includes S1100-1 and S1100-2. S1100-1 is the same as S500-1, and S1100-2 is the same as S500-2. Details are not described herein again.

Based on the description of the embodiment in FIG. 11, the embodiment in FIG. 11 is further described in detail below with reference to a specific application scenario.

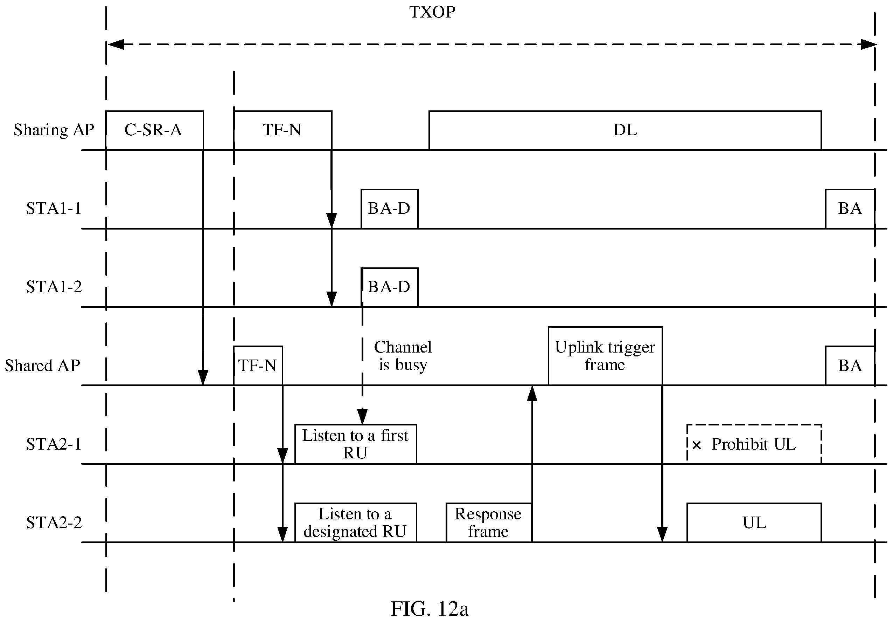

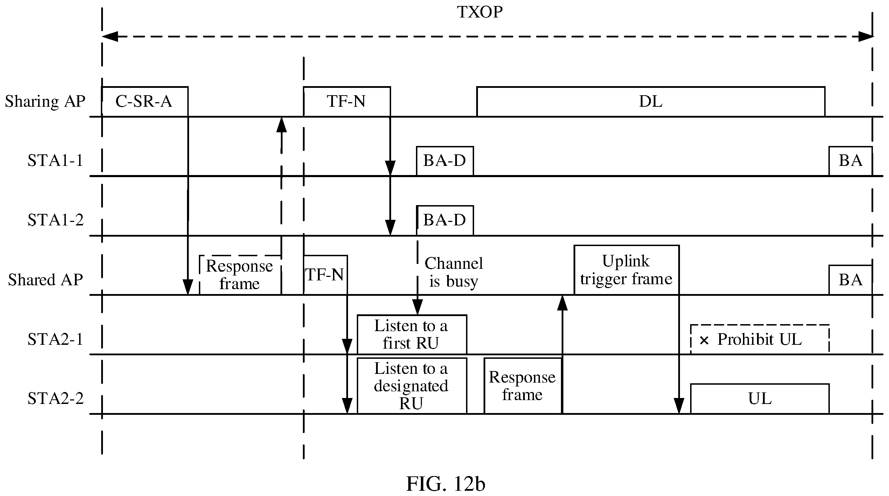

FIG. 12a and FIG. 12b are schematic diagrams of frame interaction between each AP and each STA. FIG. 12a and FIG. 12b show examples of frame interaction within a TXOP. FIG. 12a shows coordinated transmission in a fixed mode, and FIG. 12b shows coordinated transmission in a flexible mode. The following describes frame interaction in FIG. 12a and FIG. 12b. Unless otherwise specified, the described frame interaction is applicable to both FIG. 12a and FIG. 12b. When there is a difference between frame interactions, whether it is a step in FIG. 12a or a step in FIG. 12b may be specified.

Assuming that STAs currently scheduled by the sharing AP are represented by STA1-1 and STA1-2, STAs currently scheduled by the shared AP are represented by STA2-1 and STA2-2. For operations performed by STA1-1 and STA1-2, refer to the operations performed by the first STA in the embodiment of FIG. 11. For operations performed by STA2-1 and STA2-2, refer to the operations performed by the second STA in the embodiment of FIG. 11.
(1) The sharing AP sends a C-SR-A frame to the shared AP, and correspondingly, the shared AP receives the C-SR-A frame from the sharing AP.

In the fixed mode, as shown in FIG. 12a, for this step, refer to S1100. The C-SR-A frame indicates that a transmission direction of the shared AP during the coordinated transmission is uplink. Optionally, the C-SR-A frame further indicates that a transmission direction of the sharing AP during the coordinated transmission is downlink. The C-SR-A frame further indicates the shared AP to send a second frame.

In the flexible mode, as shown in FIG. 12b, for this step, refer to S1100-1. The C-SR-A frame indicates a transmission direction selected by the shared AP during the coordinated transmission. Optionally, the C-SR-A frame may further indicate that a transmission direction of the sharing AP during the coordinated transmission is downlink. In this case, the shared AP returns a response frame to the sharing AP, and correspondingly, the sharing AP receives the response frame from the shared AP. The response frame indicates that the transmission direction selected by the shared AP during the coordinated transmission is uplink. It may be figured out, if the transmission direction selected by the shared AP during the coordinated transmission is downlink, the shared AP does not perform interference detection. To be specific, only when the transmission direction selected by the shared AP during the coordinated transmission is uplink, the shared AP performs interference detection, that is, performs step (2) below.

(2) The sharing AP sends a first frame to STA1-1 and STA1-2, where the first frame is represented by TF-N. In addition, the shared AP sends a second frame to STA2-1 and STA2-2, where the second frame is also represented by TF-N.

The first frame sent by the sharing AP to STA1 -2 indicates STA1-2 to use the first RU when replying to the first frame. Similarly, the first frame sent by the sharing AP to STA1-1 indicates STA1-1 to use another RU different from the first RU when replying to the first frame. If receiving the first frame, STA1 -1 and STA1-2 separately return a first acknowledgment frame to the sharing AP on a specified RU, where the first acknowledgment frame is represented by BA-D.

The second frame is used to indicate STA2-1 to listen to the first RU, and may further indicate the second STA to subsequently use the first RU to perform uplink transmission. The second frame is further used to indicate STA2-2 to listen to another designated RU, and may further indicate STA2-2 to subsequently use the another designated RU to perform uplink transmission.

As shown in FIG. 12a, the sharing AP may send the first frame after an SIFS after sending the C-SR-A frame, and the shared AP may send the second frame after an SIFS after receiving the C-SR-A frame.

As shown in FIG. 12b, the sharing AP may send the first frame after an SIF S after receiving the response frame from the shared AP, and the shared AP may send the second frame after an SIFS after sending the response frame.

(3) After receiving the second frame, STA2-1 listens to the first RU.

After receiving the second frame, STA2-2 listens to the designated another RU.

For example, STA2-1 listens and detects that the first RU is occupied, and STA2-2 listens and detects that the another designated RU is not occupied.

(4) STA2-2 returns a response frame to the shared AP, where the response frame is used to indicate, to the shared AP, that the another designated RU is not occupied.

If the shared AP does not receive the response frame returned by STA2-1, it is determined that the first RU is an interference RU.

(5) STA1-1 and STA1-2 separately return a first acknowledgment frame BA-D to the sharing AP.

(6) After receiving the first acknowledgment frame, the sharing AP performs downlink transmission after an SIFS, and separately sends a DL data frame to STA1-1 and STA1-2.

(7) The shared AP sends an uplink trigger frame. The uplink trigger frame is used to schedule uplink transmission.

After receiving the response frame returned by STA2-2, the shared AP sends the uplink trigger frame to STA2-2 after an SIFS. Because the first RU is an interference RU, the shared AP does not trigger STA2-1 to perform uplink transmission on the first RU. Sending of the DL data frame to STA1-2 by the sharing AP may not be interfered with uplink transmission performed by STA2-1 on the first RU.

(8) After receiving the DL data frame, STA1-1 and STA1-2 may further return an acknowledgment (BA) frame to the sharing AP. After receiving the UL data frame sent by STA2-2, the shared AP returns acknowledgment (BA) frame to STA2-2 after an SIFS.

It should be noted that serial numbers do not represent a sequence of frames, and refer to illustrations in FIG. 12a and FIG. 12b. Serial numbers in other schematic diagrams of frame interaction do not indicate a strict frame sequence.

As shown in FIG. 13, a specific procedure of still another coordinated transmission method for a wireless local area network provided in embodiments of this application is described as follows:

S 1301: The shared AP sends a second frame to the shared STA on a channel when a condition is met, to detect an interference RU. The shared STA herein may be denoted as a second STA. Correspondingly, the second STA receives the second frame from the shared AP.

The shared AP is associated with the second STA, and the shared AP is a serving AP of the second STA. The shared AP may schedule the second STA on the channel, and the shared AP may allocate one or more RUs on the channel to the second STA. For example, the shared AP allocates a first RU on the channel to the second STA.

The channel is a channel on which the sharing AP and a shared AP perform coordinated transmission.

A condition for the shared AP to send the second frame may be that a transmission direction of the sharing AP during coordinated transmission is downlink, and a transmission direction of the shared AP during coordinated transmission is uplink.

The second frame includes an indication of using the first RU when the second STA replies to the second frame. For example, the second frame includes a first field, where the first field indicates the second STA to use the first RU when replying to the second frame.

A sending moment of the second frame is the same as a sending moment of the first frame sent by the sharing AP to the sharing STA, and the shared STA may be denoted as the first STA. The first frame includes an indication of using the first RU when the first STA replies to the first frame. For example, the first frame includes a first field, where the first field indicates the first STA to use the first RU when replying to the first frame. The sharing STA may be denoted as a first STA.

Both the first STA and the second STA use the first RU, and the first STA and the second STA reuse the first RU.

A same part in the embodiment in FIG. 13 as optional manner 1 in the embodiment in FIG. 5 is that, both the sharing AP and the shared AP send a frame for detecting interference, the sharing AP sends a first frame, and the first STA returns a first acknowledgment frame to the sharing AP when receiving the first frame, where the first frame indicates the first STA to return the first acknowledgment frame to the sharing AP on the first RU. The shared AP sends a second frame, where the second frame indicates the second STA to return a second acknowledgment frame to the shared AP on the first RU, and the second STA returns the second acknowledgment frame to the shared AP after receiving the second frame. A difference between the embodiment in FIG. 13 and optional manner 1 in the embodiment in FIG. 5 is that, in optional manner 1 in the embodiment in FIG. 5, the length of the first frame is greater than the length of the second frame, but in the embodiment in FIG. 13, the length of the second frame is greater than the length of the first frame. Generally, the length of the second frame is greater than a sum of the length of the first frame and the length of the SIFS. In this way, according to the description of optional manner 1 in the embodiment in FIG. 5, it may be deduced that in the embodiment in FIG. 13, interference detection may be performed by the shared AP. The sending moment of the first frame is the same as the sending moment of the second frame, and the length of the second frame is greater than a sum of the length of the first frame and the length of the SIFS. In this way, the first STA may return the first acknowledgment frame to the sharing AP according to the first frame after an SIFS after receiving the first frame. When the first STA starts to reply to the first acknowledgment frame, the second frame is not completely sent. In this case, the first STA replies to the first acknowledgment frame on the first RU in an uplink direction, and there is an intersection in frequency domain between the first acknowledgment frame in the uplink direction and the second frame in a downlink direction. In this case, the first acknowledgment frame in the uplink direction may cause interference to the second frame in the downlink direction. For example, if an RSSI of receiving the first acknowledgment frame by the second STA is greater than a maximum acceptable interference level of receiving the second frame by the second STA, the first acknowledgment frame may cause interference to receiving of the second frame by the second STA. When interference is caused, the second STA cannot receive the second frame, and the second STA does not return a second acknowledgment frame to the shared AP on the second RU. In this case, the shared AP cannot receive the second acknowledgment frame returned by the second STA, and the shared AP may determine that a first RU on which the second acknowledgment frame returned by the second STA is not received is an interference RU.

It should be noted that, the transmission direction of the sharing AP during coordinated transmission is downlink, and the transmission direction of the shared AP during coordinated transmission is uplink. However, when the shared AP performs interference detection, interference from an uplink of the sharing AP to a downlink of the shared AP is detected. It may be understood that, the uplink second acknowledgment frame sent by the first STA to the sharing AP on the first RU causes interference to receiving, by the second STA, the downlink second frame from the shared AP. Correspondingly, an uplink frame sent by the second STA to the shared AP on the first RU causes interference to a downlink frame sent by the sharing AP to the first STA on the first RU. Based on this, the shared AP determines that the first RU is an interference RU.

In addition, considering that transmit powers of the STAs may be different and are not sensed by the APs, when interference is determined by using the corresponding method, the sharing AP sends the first frame to indicate the first STA to correspondingly increase the transmit power when replying to the first acknowledgment frame, to filter out a case in which the transmit powers of the STAs are different.

S1302^{∗}. The shared AP does not perform uplink transmission on a sub-channel on which the interference RU is located. That is, the shared AP prohibits using of the interference RU.

The sharing AP may perform downlink transmission on a channel.

When learning that the first RU is an interference RU, the shared AP prohibits uplink transmission on the sub-channel on which the interference RU is located. In this way, when sending a downlink data frame to the first STA on the sub-channel on which the interference RU is located, the sharing AP is not interfered with uplink transmission performed by the second STA. After the shared AP prohibits performing uplink transmission on the sub-channel on which the interference RU is located, the sharing AP may perform downlink transmission on the entire channel without being interfered with uplink transmission performed by a shared AP.

Optionally, before S 1301, the sharing AP may further negotiate a coordinated transmission direction with the shared AP. Optionally, in embodiments of this application, a fixed mode and a flexible mode may be provided to negotiate a coordinated transmission direction. Two modes for negotiating a coordinated transmission direction may be described with reference to the embodiment of FIG. 5.

In the fixed mode, before S1301, the method further includes S1300. S1300 is the same as S500 and may refer to the description of S500. Details are not described herein again.

In the flexible mode, before S1301, the method further includes S1300-1 and S1300-2. S1300-1 is the same as S500-1, and S1300-2 is the same as S500-2. Details are not described herein again.

Based on the description of the embodiment in FIG. 13, the embodiment in FIG. 13 is further described in detail below with reference to a specific application scenario.

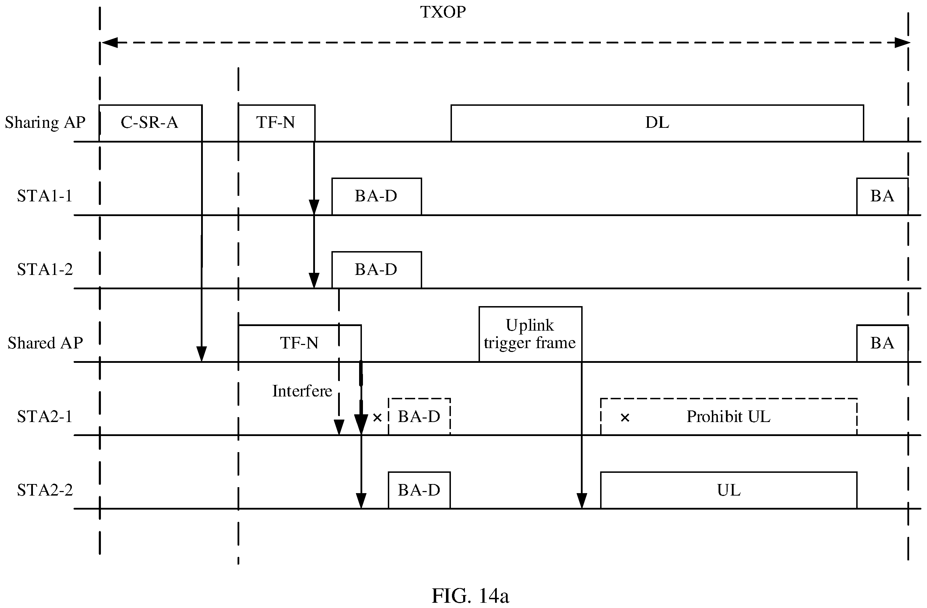

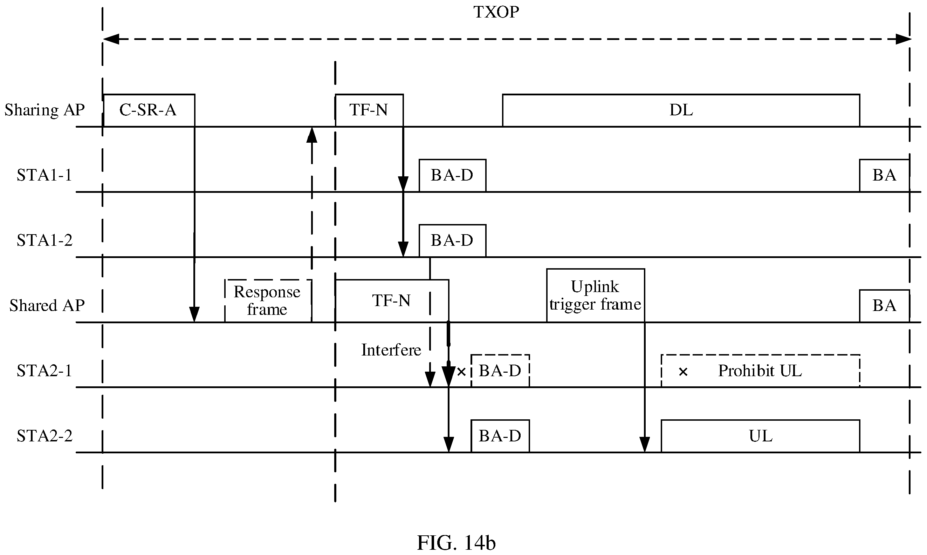

FIG. 14a and FIG. 14b are schematic diagrams of frame interaction between each AP and each STA. FIG. 14a and FIG. 14b show examples of frame interaction within a TXOP. FIG. 14a shows coordinated transmission in a fixed mode, and FIG. 14b shows coordinated transmission in a flexible mode. The following describes frame interaction in FIG. 14a and FIG. 14b. Unless otherwise specified, the described frame interaction is applicable to both FIG. 14a and FIG. 14b. When there is a difference between frame interactions, whether it is a step in FIG. 14a or a step in FIG. 14b may be specified.

Assuming that STAs currently scheduled by the sharing AP are represented by STA1-1 and STA1-2, STAs currently scheduled by the shared AP are represented by STA2-1 and STA2-2. For operations performed by STA1-1 and STA1-2, refer to the operations performed by the first STA in the embodiment of FIG. 13. For operations performed by STA2-1 and STA2-2, refer to the operations performed by the second STA in the embodiment of FIG. 13.
(1) The sharing AP sends a C-SR-A frame to the shared AP, and correspondingly, the shared AP receives the C-SR-A frame from the sharing AP.

In the fixed mode, as shown in FIG. 14a, for this step, refer to S 1300. The C-SR-A frame indicates that a transmission direction of the shared AP during the coordinated transmission is uplink. Optionally, the C-SR-A frame further indicates that a transmission direction of the sharing AP during the coordinated transmission is downlink. The C-SR-A frame further indicates the shared AP to send a second frame.

In the flexible mode, as shown in FIG. 14b, for this step, refer to S1300-1. The C-SR-A frame indicates a transmission direction selected by the shared AP during the coordinated transmission. Optionally, the C-SR-A frame may further indicate that a transmission direction of the sharing AP during the coordinated transmission is downlink. In this case, the shared AP returns a response frame to the sharing AP, and correspondingly, the sharing AP receives the response frame from the shared AP. The response frame indicates that the transmission direction selected by the shared AP during the coordinated transmission is uplink. It may be figured out, if the transmission direction selected by the shared AP during the coordinated transmission is downlink, the shared AP does not perform interference detection. To be specific, only when the transmission direction selected by the shared AP during the coordinated transmission is uplink, the shared AP performs interference detection, that is, performs step (2) below.

(2) The sharing AP sends a first frame to STA1-1 and STA1-2, where the first frame is represented by TF-N. In addition, the shared AP sends a second frame to STA2-1 and STA2-2, where the second frame is also represented by TF-N.

The first frame sent by the sharing AP to STA1-2 indicates STA1-2 to use the first RU when replying to the first frame. The first frame sent by the sharing AP to STA1 -1 indicates STA1-1 to use another RU different from the first RU when replying to the first frame. If receiving the first frame, STA1 -1 and STA1-2 separately return a first acknowledgment frame to the sharing AP on a specified RU, where the first acknowledgment frame is represented by BA-D.

The second frame sent by the shared AP to STA2-1 indicates STA2-1 to use the first RU when replying to the second frame. The second frame sent by the shared AP to STA2-2 indicates STA2-2 to use another RU different from the first RU when replying to the second frame.

To be specific, both STA1-2 and STA2-1 use the first RU, and STA1-2 and STA2-1 reuse the first RU.

As shown in FIG. 14a, the sharing AP may send the first frame after an SIFS after sending the C-SR-A frame, and the shared AP may send the second frame after an SIFS after receiving the C-SR-A frame.

As shown in FIG. 14b, the sharing AP may send the first frame after an SIF S after receiving the response frame from the shared AP, and the shared AP may send the second frame after an SIFS after sending the response frame.

The length of the second frame is greater than a sum of the length of the first frame and the length of the SIF S.

(3) After receiving the first frame, STA1-1 and STA1-2 return a first acknowledgment frame to the sharing AP after an SIFS, where the first acknowledgment frame is represented by BA-D. When STA1-1 and STA1-2 return BA-D, there is an intersection with sending of the second frame. On a same RU, the first acknowledgment frame BA-D may cause interference to the second frame. For example, STA2-1 cannot successfully receive the second frame due to interference from the BA-D frame returned by STA1-2. Because STA2-1 does not receive the second frame, STA2-1 cannot return a second acknowledgment frame (BA-D) to the shared AP.

(4) STA2-2 returns a second acknowledgment frame (BA-D) to the shared AP, and the shared AP receives the second acknowledgment frame (BA-D) returned by STA2-2, and determines that an RU corresponding to STA2-2 is not interfered. If the shared AP does not receive BA-D returned by STA2-1, the shared AP determines that the first RU is an interference RU.

(5) The sharing AP performs downlink transmission (DL data frame). The shared AP sends an uplink trigger frame. The uplink trigger frame is used to schedule uplink transmission.

The sharing AP may perform downlink transmission to STA1-1 and STA1-2.

The shared AP does not perform uplink transmission on a sub-channel on which the first RU is located, that is, the shared AP does not trigger uplink transmission on STA2-1 . Sending of the DL data frame to STA1-2 by the sharing AP may not be interfered with uplink transmission performed by STA2-1 on the first RU.

The shared AP sends the uplink trigger frame to STA2-2. After receiving the uplink trigger frame, STA2-2 sends an uplink data frame to the shared AP on a corresponding RU.

(6) After receiving the DL data frame, STA1-1 and STA1-2 may further return an acknowledgment (BA) frame to the sharing AP. After receiving the UL data frame sent by STA2-2, the shared AP returns acknowledgment (BA) frame to STA2-2 after an SIFS.

The foregoing embodiments are described based on a scenario in which the transmission direction of the sharing AP during coordinated transmission is downlink and the transmission direction of the shared AP during coordinated transmission is uplink. When the transmission direction of the sharing AP during coordinated transmission is uplink and the transmission direction of the shared AP during coordinated transmission is downlink, downlink transmission performed by the shared AP may also be interfered with uplink transmission performed by the sharing AP, and interference between STAs is also undetectable. Based on a same technical concept, embodiments of this application further provide a coordinated transmission method for a wireless local area network. A specific procedure is shown in FIG. 15. It may be understood that, in the embodiment of FIG. 15, the operations performed by the sharing AP and the shared AP in the embodiment of FIG. 5 are actually exchanged, and the operations performed by the first STA and the second STA are exchanged. That is, the shared AP performs the operations performed by the sharing AP in the embodiment in FIG. 5, and the sharing AP performs the operations performed by the shared AP in the embodiment in FIG. 5. The first STA performs the operations performed by the second STA in the embodiment in FIG. 5.

S1501. A shared AP sends a first frame to a second STA on a channel when a condition is met, to detect an interference RU.

For detailed descriptions, refer to the description in S501. Details are not described herein.

The sharing AP may negotiate a coordinated transmission direction with the shared AP. For details, refer to the description in the embodiment in FIG. 5. The sharing AP performs the operations performed by the sharing AP in the embodiment in FIG. 5, and the shared AP performs the operations performed by the shared AP in the embodiment in FIG. 5. The only difference is that a direction of the sharing AP during coordinated transmission is uplink, and a direction of the shared AP during coordinated transmission is downlink. Details are not described herein again.

For an optional implementation of detecting an interference RU by the shared AP in S1501, refer to optional manner 2 and optional manner 3 in the embodiment in FIG. 5. To be specific, the shared AP performs the operations performed by the sharing AP in the embodiment in FIG. 5, and the sharing AP performs the operations performed by the shared AP in the embodiment in FIG. 5. Details are not described herein again.

After step S1501, step S1502 may further be performed.

S1502^{∗}. The shared AP does not perform downlink transmission on a sub-channel on which the interference RU is located. That is, the sharing AP prohibits using of the interference RU.

For S1502, refer to step S502^{∗}. The shared AP performs the operations performed by the sharing AP in the embodiment in FIG. 5.

Based on the description of the embodiment in FIG. 15, the embodiment in FIG. 15 is further described in detail below with reference to a specific application scenario.

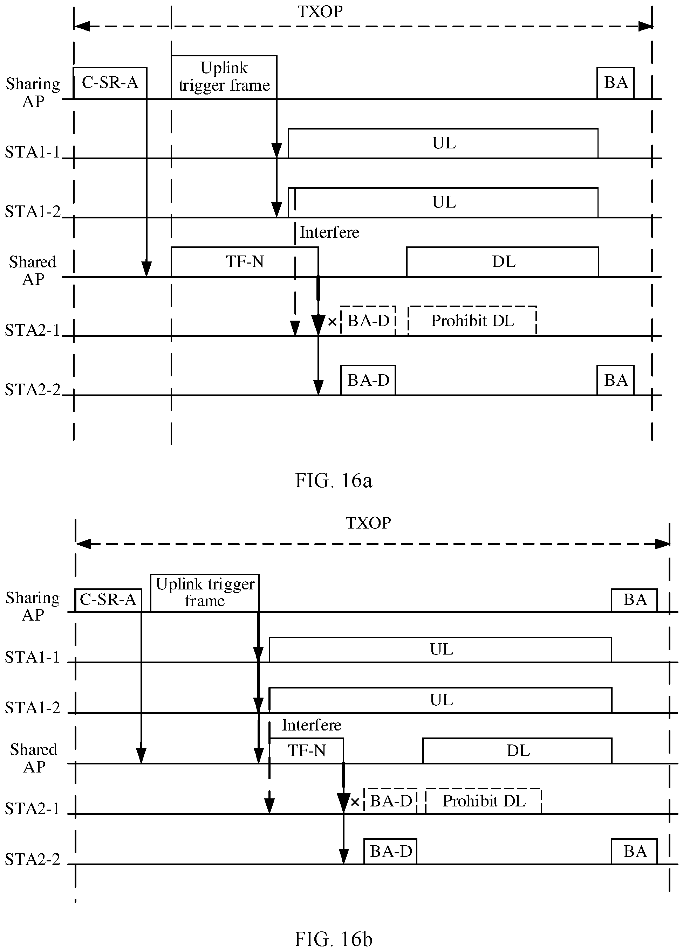

FIG. 16a and FIG. 16b are schematic diagrams of frame interaction between each AP and each STA. FIG. 16a and FIG. 16b show examples of frame interaction within a TXOP. FIG. 16a shows coordinated transmission in a fixed mode, and FIG. 16b shows coordinated transmission in a flexible mode. The following describes frame interaction in FIG. 16a and FIG. 16b. Unless otherwise specified, the described frame interaction is applicable to both FIG. 16a and FIG. 16b. When there is a difference between frame interactions, whether it is a step in FIG. 16a or a step in FIG. 16b may be specified.

Assuming that STAs currently scheduled by the sharing AP are represented by STA1-1 and STA1-2, STAs currently scheduled by the shared AP are represented by STA2-1 and STA2-2.
1^{∗}. The sharing AP sends a C-SR-A frame to the shared AP, and correspondingly, the shared AP receives the C-SR-A frame from the sharing AP.

In the fixed mode, as shown in FIG. 16a, the C-SR-A frame indicates that a transmission direction of the shared AP during the coordinated transmission is downlink. Optionally, the C-SR-A frame is further used to indicate that a transmission direction of the sharing AP during the coordinated transmission is uplink.

In the flexible mode, as shown in FIG. 16b, the C-SR-A frame is used to indicate a transmission direction selected by the shared AP during the coordinated transmission. Optionally, the C-SR-A frame may further be used to indicate that a transmission direction of the sharing AP during the coordinated transmission is uplink. In this case, the shared AP may further return a response frame to the sharing AP, and correspondingly, the sharing AP receives the response frame from the shared AP. The response frame is used to indicate that the transmission direction selected by the shared AP during the coordinated transmission is downlink. It may be figured out, if the transmission direction selected by the shared AP during the coordinated transmission is uplink and is consistent with the transmission direction of the sharing AP, the shared AP does not perform interference detection. To be specific, only when the transmission direction selected by the shared AP during the coordinated transmission is downlink, the sharing AP performs interference detection, that is, performs step 2^{∗} below.

2^{∗}. The sharing AP sends an uplink trigger frame to STA1-1, STA1-2, and the shared AP. The uplink trigger frame is used to schedule uplink transmission. STA1-1 and STA1-2 receive the uplink trigger frame from the sharing AP. The shared AP may also receive the uplink trigger frame from the sharing AP.

As shown in FIG. 16a, in the fixed mode, the sharing AP may send the uplink trigger frame after an SIFS after sending the C-SR-A frame.

As shown in FIG. 16b, in the flexible mode, the sharing AP may send the uplink trigger frame after an SIFS after receiving the response frame.

3^{∗}. The shared AP sends a first frame to STA2-1 and STA2-2, where the first frame is represented by TF-N. In addition, after receiving the uplink trigger frame, STA1-1 and STA1-2 send an uplink (UL) data frame to the sharing AP on a scheduled RU.

The first frame sent by the shared AP to STA2-1 indicates STA2-1 to use the first RU when replying to the first frame. Similarly, the first frame sent by the shared AP to STA2-2 indicates STA2-2 to use another RU different from the first RU when replying to the first frame. If receiving the first frame, STA2-1 and STA2-2 separately return a first acknowledgment frame to the shared AP on a specified RU, where the first acknowledgment frame is represented by BA-D.

The uplink trigger frame sent by the sharing AP to STA1-2 indicates the first RU used for uplink transmission. The uplink trigger frame sent by the sharing AP to STA1-1 indicates another RU that is different from the first RU and is used for uplink transmission.

It can be seen that, both STA2-1 and STA1-2 use the first RU, and STA1-2 and STA2-1 reuse the first RU.

The shared AP may send the first frame to STA2-1 and STA2-2 after an SIFS after receiving the uplink trigger frame from the sharing AP. STA1-1 and STA1-2 may send the uplink data frame to the sharing AP after an SIFS after receiving the uplink trigger frame.

Because the shared AP sends the first frame only after receiving the uplink trigger frame from the sharing AP, there is an intersection between STA1-1 and STA1-2 and the first frame during the uplink transmission. On a same RU, the UL data frame may cause interference to the first frame. For example, STA2-1 receives the first frame from the shared AP on the first RU, and STA1-2 sends the UL data frame to the sharing AP on the first RU. STA2-1 may be interfered with the UL data frame sent by STA1-2, and consequently cannot successfully receive the first frame and does not return the first acknowledgment frame (BA-D) to the shared AP.

4^{∗}. STA2-2 returns the first acknowledgment frame (BA-D) to the shared AP, and the shared AP receives the first acknowledgment frame (BA-D) returned by STA2-2, and determines that an RU corresponding to STA2-2 is not interfered. If the sharing AP does not receive BA-D returned by STA2-1, the shared AP determines that the first RU is an interference RU.

5^{∗}. The shared AP does not use a sub-channel on which the interference RU is located to perform downlink transmission, and the shared AP performs downlink transmission on a sub-channel on which a non-interfered RU is located.

For example, the shared AP determines that the first RU is an interference RU, and does not perform downlink transmission on the sub-channel on which the first RU is located, that is, the shared AP may not send a downlink data frame to STA2-1 on the first RU. The shared AP sends the downlink data frame to STA2-2 on a sub-channel on which an RU corresponding to STA2-2 is located.

In this way, when STA1-2 sends the uplink data frame to the sharing AP, because downlink transmission by the shared AP is not performed on the sub-channel on which the first RU is located, sending of the uplink data frame by STA1-2 may not be interfered.

Optionally, after receiving the DL data frame, STA2-2 may further return an acknowledgment (BA) frame to the shared AP.

In embodiments of this application, after learning the interference RU, the sharing AP does not perform downlink transmission on the sub-channel on which the interference RU is located, or the sharing AP indicates the shared AP to prohibit uplink transmission on the sub-channel on which the interference RU is located. After learning the interference RU, the shared AP does not perform uplink transmission on the sub-channel on which the interference RU is located. It can be seen that, interference detection is performed in a unit of an RU, but transmission prohibition is performed in a unit of a sub-channel to control interference. The reason is that quantities of STAs scheduled by the sharing AP and the shared AP and sizes of RUs used by the sharing AP and the shared AP may be different and cannot correspond to each other. There is a high probability that sizes of RUs used by APs are different. For example, the shared AP uses four RU106 at 40 MHz to communicate with four STAs in total, where there are two RU106 at every 20 MHz, and each RU106 is equivalent to two RU52 and four RU26. The shared AP communicates with 11 STAs in total by using one RU106, two RU52, and eight RU26 at 40 MHz. In this case, sizes and locations of RUs used by the two APs are asymmetric and are difficult to correspond to each other. Therefore, interference control is performed in a unit of a sub-channel on which an interference RU is located, so that interference control can be implemented more effectively.

Certainly, in embodiments of this application, interference control may also be performed using an interference RU as a granularity.

It should be noted that examples in the application scenarios in this application merely show some possible implementations, to help better understand and describe the method in this application. Persons skilled in the art may obtain examples of some evolved forms according to the reference signal indication method provided in this application.

In the foregoing embodiments provided in this application, the method provided in embodiments of this application is described from perspectives of a sharing AP, a sharing STA, a shared AP, a shared STA, and interaction between devices. To implement functions in the method provided in embodiments of this application, the sharing AP and the shared AP may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

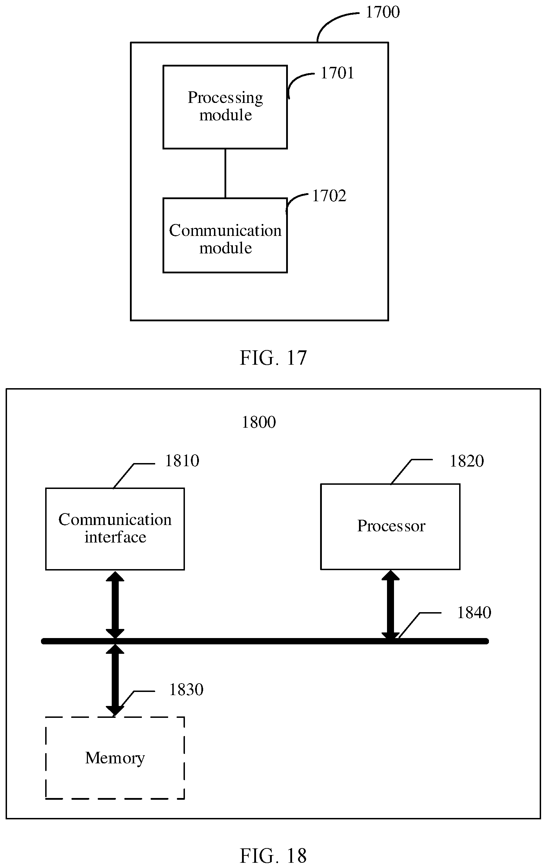

As shown in FIG. 17, based on a same technical concept, embodiments of this application further provide a communication apparatus 1700. The communication apparatus 1700 may be a sharing AP or a shared AP, or may be an apparatus in the sharing AP or the shared AP, or may be an apparatus that can be matched with the sharing AP or the shared AP for use. In a design, the communication apparatus 1700 may include modules that are in a one-to-one correspondence with the method/operations/steps/actions performed by the sharing AP or the shared AP in the foregoing method embodiments. The module may be a hardware circuit, or may be software, or may be implemented by a combination of the hardware circuit and the software. In a design, the communication apparatus may include a processing module 1701 and a communication module 1702. The processing module 1701 is configured to invoke the communication module 1702 to perform a receiving and/or sending function.

When the processing module is configured to perform the method performed by the sharing AP:
the processing module 1701 is configured to: send, through the communication module 1702, a first frame to a first station STA on a channel when a condition is met, to detect an interference resource unit, where the sharing AP is a serving AP of the first STA, the first frame includes an indication of using a first resource unit when the first STA replies to the first frame, the interference resource unit is the first resource unit on which the reply from the first STA is not received, the condition includes that the sharing AP is to perform downlink transmission on the channel, and the channel is a channel on which the sharing AP and a first shared AP perform coordinated transmission.

In a possible design, the condition further includes that the first shared AP is to perform uplink transmission on the channel.

In a possible design, the processing module 1701 is further configured to: send, through the communication module 1702, a coordinated transmission announcement C-SR-A frame to a first shared AP, where the C-SR-A frame is used to indicate that a transmission direction of the first shared AP during the coordinated transmission is uplink.

In a possible design, the processing module 1701 is further configured to: send, through the communication module 1702, a coordinated transmission announcement C-SR-A frame to a first shared AP, where the C-SR-A frame is used to indicate a transmission direction selected by the first shared AP during the coordinated transmission; and receive a first response frame from the first shared AP, where the first response frame is used to indicate that the transmission direction selected by the first shared AP during the coordinated transmission is uplink.

In a possible design, the processing module 1701 is further configured to: send, through the communication module, an indication frame to the first shared AP in response to detecting the interference resource unit, where the indication frame is used to indicate that the first shared AP is not allowed to perform uplink transmission on a sub-channel on which the interference resource unit is located; and perform downlink transmission on the channel.

In a possible design, the processing module 1701 is further configured to: indicate the first shared AP to send a second frame to the second STA, where the second frame is used to indicate the second STA to return a second acknowledgment frame to the first shared AP after receiving the second frame, and the second STA is a STA to which the first shared AP is to perform uplink transmission on the first resource unit. A sending moment of the first frame is the same as a sending moment of the second frame, and a length of the first frame is greater than a sum of a length of the second frame and a length of a short interframe space SIFS.

In a possible design, the sharing AP and a second shared AP further perform coordinated transmission on the transmission resource, the second shared AP is a serving AP of a third STA, and the processing module 1701 is further configured to: when the transmission direction of the first shared AP during the coordinated transmission is uplink, and a transmission direction of the second shared AP during the coordinated transmission is downlink, indicate the second shared AP to send a third frame to the third STA, where the third frame is used to indicate the third STA to return a third acknowledgment frame to the second shared AP after receiving the third frame; and receive, through the communication module 1702, a second response frame from the second shared AP, where the second response frame is used to indicate that a second resource unit is an interference unit.

In a possible design, the processing module 1701 is further configured to prohibit downlink transmission on a sub-channel on which the interference resource unit is located.

In a possible design, the processing module 1701 is further configured to: receive, through the communication module 1702, an uplink trigger frame from the first shared AP, where the uplink trigger frame is used to trigger a STA served by the shared AP to perform uplink transmission; and send the first frame to the first STA in response to the uplink trigger frame.

In a possible design, a sending moment of the first frame is the same as a sending moment of an uplink trigger frame sent by the first shared AP, a length of the first frame is greater than a sum of a length of the uplink trigger frame and a length of an SIFS, and the uplink trigger frame is used to trigger a STA served by the first shared AP to perform uplink transmission.

In an embodiment, when configured to execute a method executed by a shared AP:
the processing module 1701 is configured to: send, through the communication module 1702, a first frame to a shared STA on a channel when a condition is met, to detect an interference resource unit, where the shared AP is a serving AP of the shared STA, the first frame includes an indication of using a first resource unit when the shared STA replies to the first frame, the interference resource unit is the first resource unit on which a reply from the shared STA is not received, the condition includes that the shared AP is to perform downlink transmission on the channel, and the channel is a channel on which the shared AP and a sharing AP perform coordinated transmission; and the processing module 1701 is further configured to prohibit downlink transmission on a sub-channel on which the interference resource unit is located.

In a possible design, the condition further includes that the sharing AP is to perform uplink transmission on the channel.

In a possible design, the processing module 1701 is further configured to: receive, through the communication module 1702, an uplink trigger frame from the sharing AP, where the uplink trigger frame is used to trigger a STA served by the sharing AP to perform uplink transmission; and when a first trigger frame is sent to a second STA, the processing module 1701 is configured to send, through the communication module 1702, the first trigger frame to the shared STA in response to the uplink trigger frame.

In a possible design, a sending moment of the first frame is the same as a sending moment of an uplink trigger frame sent by the first shared AP, a length of the first frame is greater than a sum of a length of the uplink trigger frame and a length of a short interframe space SIFS, and the uplink trigger frame is used to trigger a STA served by the first shared AP to perform uplink transmission.

In a possible design, the processing module 1701 is further configured to receive, through the communication module 1702, a coordinated transmission announcement C-SR-A frame from the sharing AP, where the C-SR-A frame is used to indicate that a transmission direction of the shared AP during the coordinated transmission is downlink.

In a possible design, the processing module 1701 is further configured to receive, through the communication module 1702, a coordinated transmission announcement C-SR-A frame from the sharing AP, where the C-SR-A frame is used to indicate a transmission direction selected by the shared AP during the coordinated transmission; and send a response frame to the sharing AP, where the response frame is used to indicate that the transmission direction selected by the shared AP during the coordinated transmission is downlink.

In a possible design, the first frame is a short data frame.

In a possible design, the first frame is a control frame, and a modulation and coding scheme MCS order and a quantity of streams of the first frame are the same as an MCS order and a quantity of streams of the data frame.

In a possible design, a manner of the coordinated transmission is coordinated spatial reuse CSR.

In a possible design, the channel includes one or more sub-channels.

In an embodiment, when configured to execute a method executed by a shared AP:
the processing module 1701 is configured to: send, through the communication module 1702, a first frame to a first station STA on a channel when a condition is met, to detect an interference resource unit, where the shared AP is a serving AP of the first STA, the first frame includes an indication of using a first resource unit when the first STA replies to the first frame, the interference resource unit is the first resource unit on which the reply from the first STA is not received, the condition includes that the shared AP is to perform uplink transmission on the channel, and the channel is a channel on which the shared AP and a sharing AP perform coordinated transmission.

In a possible design, the condition further includes that the sharing AP is to perform downlink transmission on the channel.

In a possible design, the processing module 1701 is further configured to receive, through the communication module 1702, a coordinated transmission announcement C-SR-A frame from the sharing AP, where the C-SR-A frame is used to indicate that a transmission direction of the shared AP during the coordinated transmission is downlink.

In a possible design, the processing module 1701 is further configured to: receive, through the communication module 1702, a coordinated transmission announcement C-SR-A frame from the sharing AP, where the C-SR-A frame is used to indicate a transmission direction selected by the shared AP during the coordinated transmission; and send a first response frame to the sharing AP, where the first response frame is used to indicate that the transmission direction selected by the shared AP during the coordinated transmission is uplink.

In a possible design, the processing module 1701 is further configured to skip performing uplink transmission on a sub-channel on which the interference resource unit is located.

In a possible design, a sending moment of the first frame is the same as a sending moment of a second frame sent by the sharing AP to the second STA, and a length of the second frame is greater than a sum of a length of the first frame and a length of a short interframe space SIFS.

In a possible design, the first frame is a short data frame.

In a possible design, the first frame is a control frame, and a modulation and coding scheme MCS order and a quantity of streams of the first frame are the same as an MCS order and a quantity of streams of the data frame.

In a possible design, a manner of the coordinated transmission is coordinated spatial reuse CSR.

In a possible design, the channel includes one or more sub-channels.

In an embodiment, when configured to execute a method executed by a shared AP:
the processing module 1701 is configured to send, through the communication module 1702, a first frame to a shared station STA on a channel when a condition is met, where the channel is a channel on which a sharing AP and the shared AP perform coordinated transmission, the condition includes that a transmission direction of the sharing AP during the coordinated transmission is downlink, the first frame is used to indicate the shared STA to listen to a first resource unit, the shared AP is a serving AP of the shared STA, a sending moment of the first frame is the same as a sending moment of a second frame sent by the sharing AP to a sharing STA, a length of the second frame is greater than a sum of a length of the first frame and a length of an SIFS, and the second frame includes an indication of using the first resource unit when the sharing STA replies to the second frame. The processing module 1701 is further configured to: prohibit triggering uplink transmission on a sub-channel on which the first resource unit is located when not receiving a response frame returned by the shared STA, where the response frame is used to indicate that the first resource unit is not occupied.

In a possible design, the first frame is further used to indicate a duration for which the shared STA listens to the first resource unit, and indicate the shared STA to return the response frame within the duration if the first resource unit is not occupied.

In a possible design, the condition further includes that the transmission direction of the sharing AP during the coordinated transmission is downlink.

In a possible design, the processing module 1701 is further configured to: receive, through the communication module 1702, a coordinated transmission announcement C-SR-A frame from the sharing AP, where the C-SR-A frame is used to indicate that a transmission direction of the shared AP during the coordinated transmission is uplink.

In a possible design, the processing module 1701 is further configured to: receive, through the communication module 1702, a coordinated transmission announcement C-SR-A frame from the sharing AP, where the C-SR-A frame is used to indicate a transmission direction selected by the shared AP during the coordinated transmission; and send a first response frame to the sharing AP, where the first response frame is used to indicate that the transmission direction selected by the shared AP during the coordinated transmission is uplink.

In a possible design, a sending moment of the first frame is the same as a sending moment of a second frame sent by the sharing AP to the second STA, and a length of the second frame is greater than a sum of a length of the first frame and a length of a short interframe space SIFS.

In a possible design, the first frame is a short data frame.

In a possible design, the first frame is a control frame, and a modulation and coding scheme MCS order and a quantity of streams of the first frame are the same as an MCS order and a quantity of streams of the data frame.

In a possible design, a manner of the coordinated transmission is coordinated spatial reuse CSR.

In a possible design, the channel includes one or more sub-channels.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

FIG. 18 shows a communication apparatus 1800 according to an embodiment of this application. The communication apparatus 1800 is configured to implement a function of the sharing AP or the shared AP in the foregoing method. When the function of the sharing AP is implemented, the communication apparatus may be a sharing AP, or may be an apparatus in the sharing AP, or may be an apparatus that can be matched with the sharing AP for use. When the function of the shared AP is implemented, the communication apparatus may be a shared AP, or may be an apparatus in the shared AP, or may be an apparatus that can be matched with the shared AP for use. The communication apparatus may be a chip system. In this embodiment of this application, the chip system may include a chip, or may include a chip and another discrete component. The communication apparatus 1800 includes at least one processor 1820, configured to implement a function of a sharing AP or a shared AP in the method provided in embodiments of this application. The communication apparatus 1800 may further include a communication interface 1810. In embodiments of this application, the communication interface 1810 may be a transceiver, a circuit, a bus, a module, or a communication interface of another type, and is configured to communicate with another device by using a transmission medium. For example, the communication interface 1810 is used by an apparatus in the apparatus 1800 to communicate with another device. For example, when the communication apparatus 1800 is a sharing AP, the another device may be a shared AP. When the communication apparatus 1800 is a shared AP, the another apparatus may be a sharing AP. The processor 1820 receives and sends a frame through the communication interface 1810, and is configured to implement the method in the foregoing method embodiments.

For example, when the function of the sharing AP is implemented, the processor 1820 is configured to: send, through the communication interface 1810, a first frame to a first station STA on a channel when a condition is met, to detect an interference resource unit, where the sharing AP is a serving AP of the first STA, the first frame includes an indication of using a first resource unit when the first STA replies to the first frame, the interference resource unit is the first resource unit on which the reply from the first STA is not received, the condition includes that the sharing AP is to perform downlink transmission on the channel, and the channel is a channel on which the sharing AP and a first shared AP perform coordinated transmission.

In an embodiment, when the function of the shared AP is implemented, the processor 1820 is configured to: send, through the communication interface 1810, a first frame to a shared STA on a channel when a condition is met, to detect an interference resource unit, where the shared AP is a serving AP of the shared STA, the first frame includes an indication of using a first resource unit when the shared STA replies to the first frame, the interference resource unit is the first resource unit on which a reply from the shared STA is not received, the condition includes that the shared AP is to perform downlink transmission on the channel, and the channel is a channel on which the shared AP and a sharing AP perform coordinated transmission; and the processor 1820 is further configured to prohibit downlink transmission on a sub-channel on which the interference resource unit is located.

In an embodiment, when the function of the shared AP is implemented, the processor 1820 is configured to: send, through the communication interface 1810, a first frame to a first station STA on a channel when a condition is met, to detect an interference resource unit, where the shared AP is a serving AP of the first STA, the first frame includes an indication of using a first resource unit when the first STA replies to the first frame, the interference resource unit is the first resource unit on which the reply from the first STA is not received, the condition includes that the shared AP is to perform uplink transmission on the channel, and the channel is a channel on which the shared AP and a sharing AP perform coordinated transmission.

In an embodiment, when the function of the shared AP is implemented, the processor 1820 is configured to: send, through the communication interface 1810, a first frame to a shared station STA on a channel when a condition is met, where the channel is a channel on which a sharing AP and the shared AP perform coordinated transmission, the condition includes that a transmission direction of the sharing AP during the coordinated transmission is downlink, the first frame is used to indicate the shared STA to listen to a first resource unit, the shared AP is a serving AP of the shared STA, a sending moment of the first frame is the same as a sending moment of a second frame sent by the sharing AP to a sharing STA, a length of the second frame is greater than a sum of a length of the first frame and a length of an SIFS, and the second frame includes an indication of using the first resource unit when the sharing STA replies to the second frame. The processor 1820 is further configured to: prohibit triggering uplink transmission on a sub-channel on which the first resource unit is located when not receiving a response frame returned by the shared STA, where the response frame is used to indicate that the first resource unit is not occupied.

The processor 1820 and the communication interface 1810 may be further configured to perform other corresponding steps or operations performed by the sharing AP or the shared AP in the foregoing method embodiments. Details are not described herein again.

The communication apparatus 1800 may further include at least one memory 1830, configured to store a program instruction and/or data. The memory 1830 is coupled to the processor 1820. The coupling in this embodiment of this application may be an indirect coupling or a communication connection between apparatuses, units, or modules in an electrical form, a mechanical form, or another form, and is used for information exchange between the apparatuses, the units, or the modules. The processor 1820 may cooperate with the memory 1830. The processor 1820 may execute the program instructions stored in the memory 1830. At least one of the at least one memory may be included in the processor.

A specific connection medium between the communication interface 1810, the processor 1820, and the memory 1830 is not limited in this embodiment of this application. In this embodiment of this application, the memory 1830, the processor 1820, and the communication interface 1810 are connected through a bus 1840 in FIG. 18. The bus is represented by a thick line in FIG. 18. A manner of connection between other components is merely an example for description, and is not limited thereto. The bus may be classified into an address bus, a data bus, a control bus, and the like. For ease of representation, only one thick line is used to represent the bus in FIG. 18, but this does not mean that there is only one bus or only one type of bus.

When the communication apparatus 1700 and the communication apparatus 1800 are specifically chips or chip systems, the communication module 1702 and the communication interface 1810 may output or receive a baseband signal. When the communication apparatus 1700 and the communication apparatus 1800 are specifically devices, the communication module 1702 and the communication interface 1810 may output or receive a radio frequency signal. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware in the processor and a software module.

In this embodiment of this application, the memory 1830 may be a non-volatile memory, such as a hard disk drive (hard disk drive, HDD) or a solid-state drive (solid-state drive, SSD), or may be a volatile memory (volatile memory), such as a random access memory (random-access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

Some or all of the operations and functions performed by the sharing AP or some or all of the operations and functions performed by the shared AP described in the foregoing method embodiments of this application may be performed by using a chip or an integrated circuit.

To implement the functions of the communication apparatus in FIG. 17 or FIG. 18, embodiments of this application further provide a chip, including a processor, configured to support the communication apparatus in implementing the functions of the sharing AP or the shared AP in the foregoing method embodiments. In a possible design, the chip is connected to a memory or the chip includes the memory, and the memory is configured to store program instructions and data that are necessary for the communication apparatus.

Embodiments of this application provide a computer-readable storage medium storing a computer program. The computer program includes instructions used to perform the foregoing method embodiments.

Embodiments of this application provide a computer program product including instructions. When the computer program product runs on a computer, the computer is enabled to perform the foregoing method embodiments.

Persons skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Although some embodiments of this application have been described, persons skilled in the art can make changes and modifications to these embodiments once they learn the basic inventive concept. Therefore, the following claims are intended to be construed as to cover the preferred embodiments and all changes and modifications falling within the scope of this application.

## Claims

1. A coordinated transmission method for a wireless local area network, comprising:
sending, by a sharing access point (AP), a first frame to a first station (STA) on a channel when a condition is met, to detect an interference resource unit, wherein the sharing AP is a serving AP of the first STA, the first frame comprises an indication of using a first resource unit when the first STA replies to the first frame, the interference resource unit is the first resource unit on which the reply from the first STA is not received, the condition comprises that the sharing AP is to perform downlink transmission on the channel, and the channel is a channel on which the sharing AP and a first shared AP perform coordinated transmission.

2. The method according to claim 1, wherein the condition further comprises that the first shared AP is to perform uplink transmission on the channel.

3. The method according to claim 2, wherein the method further comprises: sending, by the sharing AP, a coordinated transmission announcement (C-SR-A) frame to the first shared AP, wherein the C-SR-A frame is used to indicate that a transmission direction of the first shared AP during the coordinated transmission is uplink.

4. The method according to claim 2, wherein the method further comprises: sending, by the sharing AP, a C-SR-A frame to the first shared AP, wherein the C-SR-A frame is used to indicate a transmission direction selected by the first shared AP during the coordinated transmission; and
receiving, by the sharing AP, a first response frame from the first shared AP, wherein the first response frame is used to indicate that the transmission direction selected by the first shared AP during the coordinated transmission is uplink.

5. The method according to any one of claims 1 to 4, wherein the method further comprises:
sending, by the sharing AP, an indication frame to the first shared AP in response to detecting the interference resource unit, wherein the indication frame is used to indicate that the first shared AP is not allowed to perform uplink transmission on a sub-channel on which the interference resource unit is located; and
performing, by the sharing AP, downlink transmission on the channel.

6. The method according to any one of claims 1 to 5, wherein the method further comprises:
indicating, by the sharing AP, the first shared AP to send a second frame to the second STA, wherein the second frame is used to indicate the second STA to return a second acknowledgment frame to the first shared AP after receiving the second frame, and the second STA is a STA to which the first shared AP is to perform uplink transmission on the first resource unit, wherein
a sending moment of the first frame is the same as a sending moment of the second frame, and a length of the first frame is greater than a sum of a length of the second frame and a length of a short interframe space (SIFS).

7. The method according to any one of claims 1 to 6, wherein the sharing AP and a second shared AP further perform coordinated transmission on the transmission resource, the second shared AP is a serving AP of a third STA, and the method further comprises:
when the transmission direction of the first shared AP during the coordinated transmission is uplink, and a transmission direction of the second shared AP during the coordinated transmission is downlink, indicating, by the sharing AP, the second shared AP to send a third frame to the third STA, wherein the third frame is used to indicate the third STA to return a third acknowledgment frame to the second shared AP after receiving the third frame; and
receiving, by the sharing AP, a second response frame from the second shared AP, wherein the second response frame is used to indicate that a second resource unit is an interference unit.

8. The method according to any one of claims 1 to 4, wherein the method further comprises:
prohibiting, by the sharing AP, downlink transmission on a sub-channel on which the interference resource unit is located.

9. The method according to any one of claims 1 to 4, or 8, wherein the method further comprises: receiving, by the sharing AP, an uplink trigger frame from the first shared AP, wherein the uplink trigger frame is used to trigger a STA served by the shared AP to perform uplink transmission; and
the sending a first frame to a first STA comprises: sending the first frame to the first STA in response to the uplink trigger frame.

10. The method according to any one of claims 1 to 4, or 8, wherein a sending moment of the first frame is the same as a sending moment of an uplink trigger frame sent by the first shared AP, a length of the first frame is greater than a sum of a length of the uplink trigger frame and a length of an SIFS, and the uplink trigger frame is used to trigger a STA served by the first shared AP to perform uplink transmission.

11. A coordinated transmission method for a wireless local area network, comprising:
sending, by a shared access point (AP), a first frame to a shared station (STA) on a channel when a condition is met, to detect an interference resource unit, wherein the shared AP is a serving AP of the shared STA, the first frame comprises an indication of using a first resource unit when the shared STA replies to the first frame, the interference resource unit is the first resource unit on which a reply from the shared STA is not received, the condition comprises that the shared AP is to perform downlink transmission on the channel, and the channel is a channel on which the shared AP and a sharing AP perform coordinated transmission; and
prohibiting, by the shared AP, downlink transmission on a sub-channel on which the interference resource unit is located.

12. The method according to claim 11, wherein the condition further comprises that the sharing AP is to perform uplink transmission on the channel.

13. The method according to claim 11 or 12, further comprising:
receiving, by the shared AP, an uplink trigger frame from the sharing AP, wherein the uplink trigger frame is used to trigger a STA served by the sharing AP to perform uplink transmission; and
the sending a first trigger frame to a second STA comprises: sending the first trigger frame to the shared STA in response to the uplink trigger frame.

14. The method according to claim 11 or 12, wherein a sending moment of the first frame is the same as a sending moment of an uplink trigger frame sent by the sharing AP, a length of the first frame is greater than a sum of a length of the uplink trigger frame and a length of a short interframe space SIFS, and the uplink trigger frame is used to trigger a STA served by the sharing AP to perform uplink transmission.

15. The method according to any one of claims 11 to 14, wherein the method further comprises:
receiving, by the shared AP, a coordinated transmission announcement (C-SR-A) frame from the sharing AP, wherein the C-SR-A frame is used to indicate that a transmission direction of the shared AP during the coordinated transmission is downlink.

16. The method according to any one of claims 11 to 14, wherein the method further comprises:
receiving, by the shared AP, a C-SR-A frame from the sharing AP, wherein the C-SR-A frame is used to indicate a transmission direction selected by the shared AP during the coordinated transmission; and
sending, by the shared AP, a response frame to the sharing AP, wherein the response frame is used to indicate that the transmission direction selected by the shared AP during the coordinated transmission is downlink.

17. The method according to any one of claims 11 to 16, wherein the first frame is a short data frame.

18. The method according to any one of claims 11 to 16, wherein the first frame is a control frame; and
a modulation and coding scheme (MCS) order of the first frame is the same as an MCS order of a data frame, and/or a quantity of streams of the first frame is the same as a quantity of streams of the data frame.

19. The method according to any one of claims 11 to 18, wherein a manner of the coordinated transmission is coordinated spatial reuse (CSR).

20. The method according to any one of claims 11 to 19, wherein the channel comprises one or more sub-channels.

21. A coordinated transmission method for a wireless local area network, comprising:
sending, by a shared access point (AP), a first frame to a first station (STA) on a channel when a condition is met, to detect an interference resource unit, wherein the shared AP is a serving AP of the first STA, the first frame comprises an indication of using a first resource unit when the first STA replies to the first frame, the interference resource unit is the first resource unit on which the reply from the first STA is not received, the condition comprises that the shared AP is to perform uplink transmission on the channel, and the channel is a channel on which the shared AP and a sharing AP perform coordinated transmission.

22. The method according to claim 21, wherein the condition further comprises: the sharing AP is to perform downlink transmission on the channel.

23. The method according to claim 22, wherein the method further comprises: receiving, by the shared AP, a coordinated transmission announcement (C-SR-A) frame from the sharing AP, wherein the C-SR-A frame is used to indicate that a transmission direction of the shared AP during the coordinated transmission is downlink.

24. The method according to claim 22, wherein the method further comprises: receiving, by the shared AP, a C-SR-A frame from the sharing AP, wherein the C-SR-A frame is used to indicate a transmission direction selected by the shared AP during the coordinated transmission; and
sending, by the shared AP, a first response frame to the sharing AP, wherein the first response frame is used to indicate that the transmission direction selected by the shared AP during the coordinated transmission is uplink.

25. The method according to any one of claims 21 to 24, wherein the method further comprises:
skipping, by the shared AP, performing uplink transmission on a sub-channel on which the interference resource unit is located.

26. The method according to any one of claims 21 to 25, wherein a sending moment of the first frame is the same as a sending moment of a second frame sent by the sharing AP to the second STA, and a length of the second frame is greater than a sum of a length of the first frame and a length of a short interframe space (SIFS).

27. The method according to any one of claims 21 to 26, wherein the first frame is a short data frame.

28. The method according to any one of claims 21 to 26, wherein the first frame is a control frame; and
a modulation and coding scheme (MCS) order of the first frame is the same as an MCS order of a data frame, and/or a quantity of streams of the first frame is the same as a quantity of streams of the data frame.

29. The method according to any one of claims 21 to 28, wherein a manner of the coordinated transmission is coordinated spatial reuse CSR.

30. The method according to any one of claims 21 to 29, wherein the channel comprises one or more sub-channels.

31. A coordinated transmission method for a wireless local area network, comprising:
sending, by a shared access point (AP), a first frame to a shared station (STA) on a channel when a condition is met, wherein the channel is a channel on which a sharing AP and the shared AP perform coordinated transmission, the condition comprises that a transmission direction of the sharing AP during the coordinated transmission is downlink, the first frame is used to indicate the shared STA to listen to a first resource unit, the shared AP is a serving AP of the shared STA, a sending moment of the first frame is the same as a sending moment of a second frame sent by the sharing AP to a sharing STA, a length of the second frame is greater than a sum of a length of the first frame and a length of an SIFS, and the second frame comprises an indication of using the first resource unit when the sharing STA replies to the second frame; and
prohibiting, by the shared AP, from triggering uplink transmission on a sub-channel on which the first resource unit is located when not receiving a response frame returned by the shared STA, wherein the response frame is used to indicate that the first resource unit is not occupied.

32. The method according to claim 31, wherein the first frame is further used to indicate a duration for which the shared STA listens to the first resource unit, and indicates the shared STA to return the response frame within the duration if the first resource unit is not occupied.

33. The method according to claim 31 or 32, wherein the condition further comprises that the transmission direction of the sharing AP during the coordinated transmission is downlink.

34. The method according to any one of claims 31 to 33, wherein the method further comprises: receiving, by the shared AP, a coordinated transmission announcement (C-SR-A) frame from the sharing AP, wherein the C-SR-A frame is used to indicate that a transmission direction of the shared AP during the coordinated transmission is uplink.

35. The method according to any one of claims 31 to 33, wherein the method further comprises: receiving, by the shared AP, a C-SR-A frame from the sharing AP, wherein the C-SR-A frame is used to indicate a transmission direction selected by the shared AP during the coordinated transmission; and
sending, by the shared AP, a first response frame to the sharing AP, wherein the first response frame is used to indicate that the transmission direction selected by the shared AP during the coordinated transmission is uplink.

36. The method according to any one of claims 31 to 35, wherein a sending moment of the first frame is the same as a sending moment of a second frame sent by the sharing AP to the second STA, and a length of the second frame is greater than a sum of a length of the first frame and a length of a short interframe space (SIFS).

37. The method according to any one of claims 31 to 36, wherein the first frame is a short data frame.

38. The method according to any one of claims 31 to 36, wherein the first frame is a control frame; and
a modulation and coding scheme (MCS) order of the first frame is the same as an MCS order of a data frame, and/or a quantity of streams of the first frame is the same as a quantity of streams of the data frame.

39. The method according to any one of claims 31 to 38, wherein a manner of the coordinated transmission is coordinated spatial reuse (CSR).

40. The method according to any one of claims 31 to 39, wherein the channel comprises one or more sub-channels.

41. A communication apparatus, applied to a sharing access point (AP) and comprising a processing module and a communication module, wherein
the processing module is configured to: send, through the communication module, a first frame to a first station (STA) on a channel when determining that a condition is met, to detect an interference resource unit, wherein the sharing AP is a serving AP of the first STA, the first frame comprises an indication of using a first resource unit when the first STA replies to the first frame, the interference resource unit is the first resource unit on which the reply from the first STA is not received, the condition comprises that the sharing AP is to perform downlink transmission on the channel, and the channel is a channel on which the sharing AP and a first shared AP perform coordinated transmission.

42. The apparatus according to claim 41, wherein the condition further comprises that the first shared AP is to perform uplink transmission on the channel.

43. The apparatus according to claim 42, wherein the processing module is further configured to: send, through the communication module, a coordinated transmission announcement (C-SR-A) frame to the first shared AP, wherein the C-SR-A frame is used to indicate that a transmission direction of the first shared AP during the coordinated transmission is uplink.

44. The apparatus according to claim 42, wherein the processing module is further configured to: send, through the communication module, a C-SR-A frame to the first shared AP, wherein the C-SR-A frame is used to indicate a transmission direction selected by the first shared AP during the coordinated transmission; and receive a first response frame from the first shared AP, wherein the first response frame is used to indicate that the transmission direction selected by the first shared AP during the coordinated transmission is uplink.

45. The apparatus according to any one of claims 41 to 44, wherein the processing module is further configured to: send, through the communication module, an indication frame to the first shared AP in response to detecting the interference resource unit, wherein the indication frame is used to indicate that the first shared AP is not allowed to perform uplink transmission on a sub-channel on which the interference resource unit is located; and
perform downlink transmission on the channel.

46. The apparatus according to any one of claims 41 to 45, wherein the processing module is further configured to: indicate the first shared AP to send a second frame to the second STA, wherein the second frame is used to indicate the second STA to return a second acknowledgment frame to the first shared AP after receiving the second frame, and the second STA is a STA to which the first shared AP is to perform uplink transmission on the first resource unit, wherein
a sending moment of the first frame is the same as a sending moment of the second frame, and a length of the first frame is greater than a sum of a length of the second frame and a length of a short interframe space (SIFS).

47. The apparatus according to any one of claims 41 to 46, wherein the sharing AP and a second shared AP further perform coordinated transmission on the transmission resource, the second shared AP is a serving AP of a third STA, and the processing module is further configured to:
when the transmission direction of the first shared AP during the coordinated transmission is uplink, and a transmission direction of the second shared AP during the coordinated transmission is downlink, indicate the second shared AP to send a third frame to the third STA, wherein the third frame is used to indicate the third STA to return a third acknowledgment frame to the second shared AP after receiving the third frame; and
receive, through the communication module, a second response frame from the second shared AP, wherein the second response frame is used to indicate that a second resource unit is an interference unit.

48. The apparatus according to any one of claims 41 to 44, wherein the processing module is further configured to:
prohibit downlink transmission on a sub-channel on which the interference resource unit is located.

49. The apparatus according to any one of claims 41 to 44, or 48, wherein the processing module is further configured to: receive, through the communication module, an uplink trigger frame from the first shared AP, wherein the uplink trigger frame is used to trigger a STA served by the shared AP to perform uplink transmission; and send the first frame to the first STA in response to the uplink trigger frame.

50. The apparatus according to any one of claims 41 to 44, or 48, wherein a sending moment of the first frame is the same as a sending moment of an uplink trigger frame sent by the first shared AP, a length of the first frame is greater than a sum of a length of the uplink trigger frame and a length of an SIFS, and the uplink trigger frame is used to trigger a STA served by the first shared AP to perform uplink transmission.

51. A communication apparatus, applied to a shared access point (AP) and comprising a processing module and a communication module, wherein
the processing module is configured to: send, through the communication module, a first frame to a shared station (STA) on a channel when a condition is met, to detect an interference resource unit, wherein the shared AP is a serving AP of the shared STA, the first frame comprises an indication of using a first resource unit when the shared STA replies to the first frame, the interference resource unit is the first resource unit on which a reply from the shared STA is not received, the condition comprises that the shared AP is to perform downlink transmission on the channel, and the channel is a channel on which the shared AP and a sharing AP perform coordinated transmission; and
the processing module is further configured to prohibit downlink transmission on a sub-channel on which the interference resource unit is located.

52. The apparatus according to claim 51, wherein the condition further comprises that the sharing AP is to perform uplink transmission on the channel.

53. The apparatus according to claim 51 or 52, wherein the processing module is further configured to: receive, through the communication module, an uplink trigger frame from the sharing AP, wherein the uplink trigger frame is used to trigger a STA served by the sharing AP to perform uplink transmission; and
when a first trigger frame is sent to a second STA, the processing module is configured to send, through the communication module, the first trigger frame to the shared STA in response to the uplink trigger frame.

54. The apparatus according to claim 51 or 52, wherein a sending moment of the first frame is the same as a sending moment of an uplink trigger frame sent by the sharing AP, a length of the first frame is greater than a sum of a length of the uplink trigger frame and a length of a short interframe space (SIFS), and the uplink trigger frame is used to trigger a STA served by the sharing AP to perform uplink transmission.

55. The apparatus according to any one of claims 51 to 54, wherein the processing module is further configured to: receive, through the communication module, a coordinated transmission announcement (C-SR-A) frame from the sharing AP, wherein the C-SR-A frame is used to indicate that a transmission direction of the shared AP during the coordinated transmission is downlink.

56. The apparatus according to any one of claims 51 to 54, wherein the processing module is further configured to: receive, through the communication module, a C-SR-A frame from the sharing AP, wherein the C-SR-A frame is used to indicate a transmission direction selected by the shared AP during the coordinated transmission; and
send a response frame to the sharing AP, wherein the response frame is used to indicate that the transmission direction selected by the shared AP during the coordinated transmission is downlink.

57. The apparatus according to any one of claims 51 to 56, wherein the first frame is a short data frame.

58. The apparatus according to any one of claims 51 to 56, wherein the first frame is a control frame; and
a modulation and coding scheme (MCS) order of the first frame is the same as an MCS order of a data frame, and/or a quantity of streams of the first frame is the same as a quantity of streams of the data frame.

59. The apparatus according to any one of claims 51 to 58, wherein a manner of the coordinated transmission is coordinated spatial reuse (CSR).

60. The method according to any one of claims 51 to 59, wherein the channel comprises one or more sub-channels.

61. A communication apparatus, applied to a shared access point (AP) and comprising a processing module and a communication module, wherein
the processing module is configured to: send, through the communication module, a first frame to a first station (STA) on a channel when a condition is met, to detect an interference resource unit, wherein the shared AP is a serving AP of the first STA, the first frame comprises an indication of using a first resource unit when the first STA replies to the first frame, the interference resource unit is the first resource unit on which the reply from the first STA is not received, the condition comprises that the shared AP is to perform uplink transmission on the channel, and the channel is a channel on which the shared AP and a sharing AP perform coordinated transmission.

62. The apparatus according to claim 61, wherein the condition further comprises that the sharing AP is to perform downlink transmission on the channel.

63. The apparatus according to claim 62, wherein the processing module is further configured to: receive, through the communication module, a coordinated transmission announcement (C-SR-A) frame from the sharing AP, wherein the C-SR-A frame is used to indicate that a transmission direction of the shared AP during the coordinated transmission is downlink.

64. The apparatus according to claim 62, wherein the processing module is further configured to: receive, through the communication module, a C-SR-A frame from the sharing AP, wherein the C-SR-A frame is used to indicate a transmission direction selected by the shared AP during the coordinated transmission; and
send a first response frame to the sharing AP, wherein the first response frame is used to indicate that the transmission direction selected by the shared AP during the coordinated transmission is uplink.

65. The apparatus according to any one of claims 61 to 64, wherein the processing module is further configured to:
skip performing uplink transmission on a sub-channel on which the interference resource unit is located.

66. The apparatus according to any one of claims 61 to 65, wherein a sending moment of the first frame is the same as a sending moment of a second frame sent by the sharing AP to the second STA, and a length of the second frame is greater than a sum of a length of the first frame and a length of a short interframe space (SIFS).

67. The apparatus according to any one of claims 61 to 66, wherein the first frame is a short data frame.

68. The apparatus according to any one of claims 61 to 66, wherein the first frame is a control frame; and
a modulation and coding scheme (MCS) order of the first frame is the same as an MCS order of a data frame, and/or a quantity of streams of the first frame is the same as a quantity of streams of the data frame.

69. The apparatus according to any one of claims 61 to 68, wherein a manner of the coordinated transmission is coordinated spatial reuse (CSR).

70. The apparatus according to any one of claims 61 to 69, wherein the channel comprises one or more sub-channels.

71. A communication apparatus, applied to a shared access point (AP) and comprising a processing module and a communication module, wherein
the processing module is configured to send, through the communication module, a first frame to a shared station (STA) on a channel when a condition is met, wherein the channel is a channel on which a sharing AP and the shared AP perform coordinated transmission, the condition comprises that a transmission direction of the sharing AP during the coordinated transmission is downlink, the first frame is used to indicate the shared STA to listen to a first resource unit, the shared AP is a serving AP of the shared STA, a sending moment of the first frame is the same as a sending moment of a second frame sent by the sharing AP to a sharing STA, a length of the second frame is greater than a sum of a length of the first frame and a length of an SIFS, and the second frame comprises an indication of using the first resource unit when the sharing STA replies to the second frame; and
the processing module is further configured to: prohibit triggering uplink transmission on a sub-channel on which the first resource unit is located when not receiving a response frame returned by the shared STA, wherein the response frame is used to indicate that the first resource unit is not occupied.

72. The apparatus according to claim 71, wherein the first frame is further used to indicate a duration for which the shared STA listens to the first resource unit, and indicates the shared STA to return the response frame within the duration if the first resource unit is not occupied.

73. The apparatus according to claim 71 or 72, wherein the condition further comprises that the transmission direction of the sharing AP during the coordinated transmission is downlink.

74. The apparatus according to any one of claims 71 to 73, wherein the processing module is further configured to: receive, through the communication module, a coordinated transmission announcement (C-SR-A) frame from the sharing AP, wherein the C-SR-A frame is used to indicate that a transmission direction of the shared AP during the coordinated transmission is uplink.

75. The apparatus according to any one of claims 71 to 73, wherein the processing module is further configured to: receive, through the communication module, a C-SR-A frame from the sharing AP, wherein the C-SR-A frame is used to indicate a transmission direction selected by the shared AP during the coordinated transmission; and
send a first response frame to the sharing AP, wherein the first response frame is used to indicate that the transmission direction selected by the shared AP during the coordinated transmission is uplink.

76. The apparatus according to any one of claims 71 to 75, wherein a sending moment of the first frame is the same as a sending moment of a second frame sent by the sharing AP to the second STA, and a length of the second frame is greater than a sum of a length of the first frame and a length of a short interframe space (SIFS).

77. The apparatus according to any one of claims 71 to 76, wherein the first frame is a short data frame.

78. The apparatus according to any one of claims 71 to 76, wherein the first frame is a control frame; and
a modulation and coding scheme (MCS) order of the first frame is the same as an MCS order of a data frame, and/or a quantity of streams of the first frame is the same as a quantity of streams of the data frame.

79. The apparatus according to any one of claims 71 to 78, wherein a manner of the coordinated transmission is coordinated spatial reuse (CSR).

80. The apparatus according to any one of claims 71 to 79, wherein the channel comprises one or more sub-channels.

81. A communication apparatus, comprising a processor and a communication interface, wherein the communication interface is configured to communicate with another communication apparatus; and the processor is configured to run a group of programs, so that the method according to any one of claims 1 to 10 is performed, or the method according to any one of claims 11 to 20 is performed, or the method according to any one of claims 21 to 30 is performed, or the method according to any one of claims 31 to 40 is performed.

82. A computer-readable storage medium, wherein the computer storage medium stores computer-readable instructions, and when the computer-readable instructions run on a communication apparatus, the method according to any one of claims 1 to 10 is performed., or the method according to any one of claims 11 to 20 is performed, or the method according to any one of claims 21 to 30 is performed, or the method according to any one of claims 31 to 40 is performed
